(19)

Europäisches
Patentamt
European
Patent Office
Office européen
des brevets

(11) **EP 4 282 815 A1**

(12) **EUROPEAN PATENT APPLICATION**

(43) Date of publication:
**29.11.2023 Bulletin 2023/48**

(21) Application number: **22175357.7**

(22) Date of filing: **25.05.2022**

(51) International Patent Classification (IPC):
***C01B 3/04*** (2006.01)        ***B01D 53/22*** (2006.01)
***C01B 3/50*** (2006.01)

(52) Cooperative Patent Classification (CPC):
**C01B 3/047; B01D 53/226; C01B 3/505;**
C01B 2203/146

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **BASF SE
67056 Ludwigshafen am Rhein (DE)**

(72) Inventors:
• **KAPPERT, Emiel Jan
  3912 AL Rhenen (NL)**
• **OPITZ, Bastian
  67056 Ludwigshafen am Rhein (DE)**
• **VARGAS SCHMITZ, Juergen Jose
  67056 Ludwigshafen am Rhein (DE)**
• **KOLIOS, Grigorios
  67056 Ludwigshafen am Rhein (DE)**
• **SCHLERETH, David
  67056 Ludwigshafen am Rhein (DE)**

(74) Representative: **Altmann Stößel Dick
Patentanwälte PartG mbB
Isartorplatz 1
80331 München (DE)**

(54) **A PROCESS FOR RECOVERING H2**

(57)     The present invention relates to processes for recovering H$_2$ from converting NH$_3$ in an apparatus, the processes comprising one or more process stages, and an apparatus for these processes.

EP 4 282 815 A1

**Description**

The present invention relates to processes for recovering $H_2$ from converting $NH_3$ in an apparatus and an apparatus for these processes.

Hydrogen is a promising energy carrier, but its storage and transportation are difficult. Ammonia has been proposed as an intermediate energy carrier since under the appropriate conditions, it can be converted to hydrogen with nitrogen as the only by product. In view thereof, use of ammonia as a hydrogen intermediate is receiving increased attention from both public and private sectors given the potential in decreasing carbon emission.

A problem arises in the use of hydrogen on an industrial scale in that both compressors and vacuums that are for safe industrial hydrogen applications require high capital investment, increased maintenance and very large energy consumption due to the physical and chemical problems that hydrogen presents. However, many industrial scale applications for hydrogen require higher pressures. Therefore, it is a goal of the present invention to provide both an apparatus and a method for converting and purifying hydrogen at industrially useful pressures from ammonia while avoiding a compressor or vacuum pump within streams or feeds that comprise hydrogen. It is a related goal to drive the conversion of ammonia to hydrogen to near full conversion by means of removal of hydrogen product from equilibrium mixtures without the use of compressors or vacuums in hydrogen comprising streams and feeds.

Cechetto et. Al. proposes in "$H_2$ production via ammonia decomposition in a catalytic membrane reactor", Fuel Processing Technology (2021), 106772, a membrane reactor design featuring a Pd-based membrane reactor over a Ru-based catalyst. The membrane reactor demonstrates excellent recovery and conversion from temperatures of 425 °C but requires vacuum pressures on the permeate side to drive the conversion and recovery for achieving the best effect in comparison to systems wherein no vacuum is applied. Furthermore, said article investigates pressures 6 bar and below at low volume flows not useful for industrial applications.

Yun et al reviews in "correlations of in palladium membranes for hydrogen separation" J. Membrane Sci. (2011) 28 to 45 many useful features, properties and limitations of Pd membranes and is focused on the fabrication of Pd membranes.

Schüth et al reviews in "Ammonia as a possible element in an energy infrastructure: catalysts for ammonia decomposition" Energy Eviron. Sci. 2012, page 6278, a variety of catalyst systems for converting ammonia to hydrogen and nitrogen. Likewise, Lamb et al. in "Ammonia for hydrogen storage; A review of catalytic ammonia decomposition and hydrogen separation and purification", Int. J. of hydrogen energy, 44 ( 2019 ) 3580, reviews advances in catalysts for ammonia decomposition and hydrogen recovery.

Abashar discloses in "Ultra-clean hydrogen production by ammonia Decomposition", J. King Saud University-Engineering Sciences (2018) pages 2 - 11 a simulated mathematical model wherein single fixed bed reactors are comp aired with single fixed bed membrane reactors and shows the superiority of the later. Said journal article considers a multiple bed design in a preliminary study, however, no information is provided regarding the reactor/membrane design beyond the mathematical description of the diffusion model and the membrane is treated as being completely selective towards hydrogen.

Therefore, there is a need to recover hydrogen at high pressures and purity from converted ammonia on an industrial scale, preferably without the use of compressors or vacuum on hydrogen comprising streams. There is also a need to maximize the conversion of ammonia while delivering purified hydrogen at high pressures while avoiding compressors or vacuum on hydrogen comprising streams. Both needs are aimed at the purpose of providing an industrially tractable source of hydrogen that can be used for either chemical transformations that require elevated pressure or as well as a source of energy under the most cost effective, environmentally friendly and safe conditions possible.

Therefore, the present invention relates to a method of and apparatus for recovering hydrogen at high pressures and high purity from converted ammonia without the use of compressors or vacuums. The goals are realized by a design comprising one zone or n serially coupled zones, wherein, in each zone, a conversion reactor converts ammonia to hydrogen and nitrogen under elevated temperature and pressure and the resultant gas stream comprising hydrogen, nitrogen and ammonia is fed into two individual membrane purification units connected in series. The n serially coupled zones can be connected together in series to drive the ammonia conversion to near completion while providing high pressures of hydrogen with excellent purity while completely avoiding the use of compressors or vacuums for hydrogen streams.

Therefore, the present invention relates to a process for recovering $H_2$ from converting $NH_3$ in an apparatus comprising n serially coupled zones Z(i), with i= 1 ...n, with n≥2,

wherein each zone Z(i) contains

- a conversion reactor CR(i) comprising a catalyst C(i) for converting $NH_3$ to give $H_2$,
- a first membrane unit M1(i) and
- a second membrane unit M2(i),

wherein CR(i) is located upstream of M1(i) and M2(i) is located downstream of M1(i) in Z(i),
wherein Z(1) is the most upstream zone and Z(n) is the most downstream zone,
the process comprising

(a) providing a feed gas stream FS(0) comprising $NH_3$;
(b) n successive process stages S(i), i=1...n,

wherein, in each S(i), S(i) comprises
a conversion stage SA(i), comprising

- feeding gas stream FS(i-1) into a conversion reactor CR(i) comprised in Z(i) and bringing said stream FS(i-1) in contact with C(i) in CR(i), obtaining a gas stream G(i) which comprises $NH_3$, $N_2$ and $H_2$, the gas stream G(i) having a molar ratio $n(H_2):n(NH_3)=x(G(i))$;
- removing the gas stream G(i) comprising $NH_3$, $N_2$ and $H_2$ from CR(i);
- passing the gas stream G(i) as a feed gas stream F1(i) through a separation stage SB(i), F1(i) having the same chemical composition as G(i) and the molar ratio $x(G(i))=x(F1(i))$;

a separation stage SB(i), comprising

- passing the feed gas stream F1(i) through a first membrane unit M1(i), of Z(i), comprising at least one membrane,

the at least one membrane having a $H_2/NH_3$ selectivity of at least 2000,
at a pressure ratio $\varphi$ greater than 1 across said at least one membrane, calculated as (pressure of feed gas stream F1 (i)/ pressure of permeate gas stream P1 (i)) at constant temperature, obtaining

■ a permeate gas stream P1(i) comprising $H_2$; and
■ a retentate gas stream R1(i) comprising $H_2$, $N_2$ and $NH_3$, wherein the molar ratio $n(H_2):n(NH_3)=x(R1(i))$; $x(R1(i))<x(F1(i))$;

- passing the retentate gas stream R1(i) as a feed gas stream F2(i), through a separation stage SC(i), F2(i) having the same chemical and physical composition as R1(i) and the molar ratio $x(R1(i))=x(F2(i))$;

a separation stage SC(i), comprising

- passing the feed gas stream F2(i) through a second membrane unit M2(i) of Z(i) comprising at least one membrane, the at least one membrane having a $H_2/NH_3$ selectivity of at least 2000,

at a pressure ratio $\varphi$ of greater than 1 across said at least one membrane, calculated as (pressure of feed gas stream F2(i)/ pressure of permeate gas stream P2(i)) at constant temperature, obtaining
∘ a permeate gas stream P2(i) comprising $H_2$; and
∘ a retentate gas stream R2(i) comprising $H_2$, $N_2$ and $NH_3$, wherein the molar ratio $n(H_2):n(NH_3)=x(R2(i))$; $x(R2(i))<x(F2(i))$;

- removing the gas stream R2(i) from Z(i);

wherein, when i=1...n-1, the gas stream R2(i) is removed from Z(i) as a feed stream FS(i), FS(i) having the same chemical and physical composition as R2(i) and the molar ratio $x(R2(i))=x(FS(i))$; and
wherein, when i=n, the gas stream R2(n) is removed from Z(i) as a product gas stream;
wherein the volume flow ratio of FS(i-1) to FS(i) is in the range of from 1.05:1 to 4:1.

Preferably, n= 2 to 10, more preferably n= 2 to 5, more preferably n= 2, 3 or 4, more preferably n= 2 or 3.
Preferably, according to stage S(i), no vacuum apparatus or compressor is operated downstream of the conversion reactor CR(i) according to SA(i) in the obtainment of a permeate gas stream and/or a retentate gas stream, preferably in the obtainment of any permeate gas stream and/or any retentate gas;
more preferably, no streams or feeds comprising hydrogen in the process are compressed by a compressor or evacuated by a vacuum pump according to all stages S(i) of the process.
Preferably, the feed gas stream FS(0) comprises, preferably consists of, $NH_3$ having a purity in the range of from 85 to 99.99998 wt.-% calculated on the total sum basis of all gas components present, more preferably in the range of from 95 to 99.998 wt.-%, more preferably in the range of from 98 to 99.8 wt.-%. The feed gas stream FS(0) in addition to $NH_3$ may preferably comprise impurities, wherein the impurities are more preferably one or more of $N_2$, $O_2$, water, $CO_2$, CO, $CH_4$, $H_2$, hydrocarbons and Ar, more preferably one or more of $N_2$, $O_2$, and water, more preferably one or more of $N_2$ and water.

Preferably, the feed gas stream FS(0) is obtained from a process selected from the group consisting of a Haber-Bosch process, an electrochemical ammonia synthesis process, a non-thermal or thermal plasma assisted ammonia production process and combinations of two or more thereof, more preferably is obtained from a Haber-Bosch process or an electrochemical ammonia synthesis process.

In the context of the present invention, it is conceivable that an evaporating means can be used for providing the feed gas stream FS(0). Indeed, said evaporating means would be used for evaporating a liquid source of $NH_3$ in order to obtain FS(0). The evaporating means would thus be disposed upstream of the conversion reactor CR(1).

Thus, it may be preferred that ammonia provided for the process is in the liquid form and passed through an evaporating means for providing the feed gas stream FS(0) which will then enter the first conversion reactor CR(1) of the first zone Z(1).

Preferably, according to SA(i) the feed gas stream FS(i-1) is contacted with the conversion catalyst C(i) at a pressure in the range of from 10 to 100 bar(abs), more preferably in the range of from 15 to 85 bar(abs), more preferably in the range of from 20 to 60 bar(abs).

Preferably, according to SA(i), the feed gas stream FS(i-1) is contacted with the conversion catalyst C(i) at a temperature in the range of from 50 to 1100 °C, more preferably in the range of from 100 to 1000 °C, more preferably in the range of from 350 to 900 °C.

Preferably, the conversion catalyst C(i) comprises, more preferably consists of, a transition metal supported on a refractory support material.

Preferably, the transition metal is selected from the group consisting of Fe, Cu, Ni, Co, Ru, Ag, Pd, Rh, Pt, Ir including combinations of two or more thereof, more preferably selected from the group consisting of Ni, Co, Rh and Ru including combinations of two or more thereof, more preferably is Ni, Co or Ru, more is Ru.

Preferably, the refractory support material is selected from the group consisting of zeolite, alumina, silica, titania, zirconia, ceria, lanthana, praseodymium oxide, neodymium oxide, yttrium oxide, activated carbon, carbon nanotubes and a combination of two or more thereof, more preferably selected from the group consisting of alumina, silica, titania, zirconia and a combination of two or more thereof, more preferably is alumina or zirconia.

Preferably, the transition metal catalyst supported on a refractory support material is promoted, more preferably with a metal selected from the group consisting of lithium, sodium, potassium, cesium, lanthanum, yttrium, neodymium, praseodymium and a combination of two or more thereof, more preferably selected from the group consisting of lithium, sodium, potassium, cesium, and a combination of two or more thereof, more preferably the metal is potassium or cesium.

Preferably, the conversion catalyst C(i) is a molding.

Preferably at least 95 vol.-%, more preferably from 95 to 100 vol.-%, more preferably from 98 to 100 vol.-%, more preferably from 99 to 100 vol.-%, more preferably from 99.5 to 100 vol.-%, of the gas stream G(i) consists of $NH_3$, $N_2$ and $H_2$.

In other words, it is preferred that G(i) essentially consists of, more preferably consists of, $NH_3$, $N_2$ and $H_2$.

Preferably, the gas stream G(i) has a $H_2$ to $NH_3$ molar ratio x(G(i)) (calculated as $n(H_2):n(NH_3)= x(G(i))$ in the range of from 0.01:1 to 500:1, more preferably in the range of from 0.05:1 to 200:1, more preferably in the range of from 2:1 to 50:1.

Preferably, the gas stream G(i) has a $H_2$ to $N_2$ molar ratio y(G(i)) (calculated as $n(H_2):n(N_2)= y(G(i))$) in the range of from 0.01:1 to 5:1.

It is preferred that G(1) has a $H_2$ to $N_2$ molar ratio y(G(1)) (calculated as $n(H_2):n(N_2)= y(G(1))$) in the range of from 2:1 to 5:1, more preferably in the range of from 2.5:1 to 3.5:1.

It is preferred that G(i), with i≥1, has a $H_2$ to $N_2$ molar ratio y(G(i)) (calculated as $n(H_2):n(N_2)= y(G(i))$) in the range of from 0.05:1 to 2.8:1, more preferably in the range of from 0.2:1 to 2.7:1.

Preferably, the gas stream G(i) has a pressure in the range of from 10 to 100 bar (abs), more preferably in the range of from 15 to 65 bar (abs), more preferably in the range of from 20 to 60 bar (abs).

Preferably, the gas stream G(i) has a temperature in the range of from 50 to 1100 °C, more preferably in the range of from 100 to 1000 °C, more preferably in the range of from 350 to 900 °C.

Preferably, the feed gas stream F1(i), prior to passing through the separation stage SB(i), is passed through a heat exchanger H(i). The temperature of F1(i) exiting H(i) is more preferably lower than the temperature of F1(i) entering H(i).

Preferably, the feed gas stream F1(i) has a $H_2$ to $NH_3$ molar ratio x(F1(i)) (calculated as $n(H_2):n(NH_3)= x(F1(i))=x(G(i))$ in the range of from 0.01:1 to 500:1, more preferably in the range of from 0.05:1 to 200:1, more preferably in the range of from 2:1 to 50:1.

Preferably, the feed gas stream F1(i) has a $H_2$ to $N_2$ molar ratio y(F1(i)) (calculated as $n(H_2):n(N_2)= y(F1(i))=$

y(G(i))) in the range of from 0.01:1 to 5:1.

It is preferred that F(1) has a $H_2$ to $N_2$ molar ratio y(F(1)) (calculated as $n(H_2):n(N_2)$= y(F(1))) in the range of from 2:1 to 5:1, more preferably in the range of from 2.5:1 to 3.5:1.

It is preferred that F(i), with $i \geq 1$, has a $H_2$ to $N_2$ molar ratio y(F(i)) (calculated as $n(H_2):n(N_2)$= y(F(i))) in the range of from 0.05:1 to 2.8:1, more preferably in the range of from 0.2:1 to 2.7:1.

Preferably, the feed gas stream F1(i) has a pressure in the range of from 10 to 100 bar (abs), more preferably in the range of from 15 to 85 bar (abs), more preferably in the range of from 20 to 60 bar (abs).

Preferably, the feed gas stream F1(i) has a temperature in the range of from 250 to 700 °C, more preferably in the range of from 300 to 600 °C, more preferably in the range of from 350 to 500 °C, wherein more preferably said temperature is after having being passed through H(i) as defined in the foregoing.

Preferably, the volume flow ratio of FS(i-1) to (F1(i)) is in the range of from 0.5:1 to 1:1, more preferably in the range of from 0.50:1 to 0.95:1.

Preferably, according to SB(i), the membrane unit M1(i) comprising at least one membrane has a $H_2/NH_3$ selectivity of at least 2500, more preferably in the range of from 2,500 to 1,000,000, more preferably in the range of from 4,500 to 900,000, more preferably in the range of from 5,000 to 800,000, more preferably in the range of from 6,000 to 600,000.

Preferably, according to SB(i), the membrane unit M1(i) comprising at least one membrane has a ratio of $H_2/N_2$ selectivity to $H_2/NH_3$ selectivity in the range of from 0.8:1 to 5:1, more preferably in the range of from 1.2:1 to 2:1.

Preferably, according to SB(i), the at least one membrane comprised in membrane unit M1(i) is a palladium metal membrane; wherein preferably according to SB(i), the at least one membrane comprised in membrane unit M1(i) has a $H_2$ permeance in the range of from 0.1 to 100 $Nm^3/(m^2\,h\,bar)$, more preferably in the range of from 0.5 to 75 $Nm^3/(m^2\,h\,bar)$, more preferably in the range of from 1 to 50 $Nm^3/(m^2\,h\,bar)$, more preferably in the range of from 2 to 40 $Nm^3/(m^2\,h\,bar)$, more preferably in the range of from 3 to 30 $Nm^3/(m^2\,h\,bar)$, more preferably in the range of from 4 to 20 $Nm^3/(m^2\,h\,bar)$, more preferably in the range of from 5 to 10 $Nm^3/(m^2\,h\,bar)$.

Preferably, according to SB(i), the at least one membrane comprised in membrane unit M1(i) is a palladium metal membrane.

Preferably, the palladium metal membrane comprises a palladium coating on a substrate, the palladium coating consisting of palladium having a purity of at least 97.5%, more preferably of at least 98.5 %, more preferably in the range of from 99.0 to 99.9 %.

Preferably, the substrate of the palladium metal membrane is selected from the group consisting of steel, stainless steel, borosilicate glass, alumina and zirconia. Further reference is made to Pal N. et al "A review on types, fabrication and support material of hydrogen separation membrane, Materials Today: Proceedings, volume 28, part 3, 2020, pages 1386-1391 with regards to acceptable substrate materials for palladium comprising membranes.

As an alternative, the palladium metal membrane preferably comprises an alloy coating on a substrate, the alloy coating comprising, more preferably consisting of, Pd and one or more of Ag, Au, Ru, In, Cu and Y, more preferably Pd and one or more of Ag, Cu and Y, more preferably Pd and Ag.

Preferably from 0.50 wt.-% to 50 wt.-%, more preferably from 1 wt.-% to 45 wt.-%, more preferably from 3 wt.-% to 35 wt.-%, more preferably from 7 wt.-% to 30 wt.-%, more preferably from 8 wt.-% to 15 wt.-%, of the alloy coating consist of the metal other than palladium.

Preferably, the substrate of the palladium metal membrane is selected from the group consisting of steel, stainless steel, borosilicate glass, alumina and zirconia. Further reference is made to Pal N. et al "A review on types, fabrication and support material of hydrogen separation membrane, Materials Today: Proceedings, volume 28, part 3, 2020, pages 1386-1391 with regards to acceptable substrate materials for palladium comprising membranes.

Preferably, according to SB(i), the pressure ratio $\varphi$ across the at least one membrane comprised in membrane unit M1(i), calculated as (pressure of feed gas stream F1(i)/ pressure of permeate gas stream P1(i)) at constant temperature, is in the range of from 1.5:1 to 50:1, more more preferably in the range of from 2:1 to 40:1, more preferably in the range of from 2.5:1 to 35:1.

Preferably, according to SB(i), the permeate gas stream P1(i) has a pressure in the range of from 3 to 30 bar(abs), more preferably in the range of from 5 to 20 bar(abs), more preferably in the range of from 5 to 15 bar(abs).

Preferably, according to SB(i), the permeate gas stream P1(i) has a temperature in the range of from 250 to 700 °C, more preferably in the range of from 300 to 600 °C, more preferably in the range of from 350 to 500 °C.

Preferably, according to SB(i), the permeate gas stream P1(i) further comprises $NH_3$ and has a $H_2$ to $NH_3$ molar ratio x(P1(i)) (calculated as $n(H_2):n(NH_3)$= x(P1(i))>x(F1(i))) is greater 500:1, more preferably in the range of from 500:1 to 100,000:1, more preferably in the range of from 1,000:1 to 90,000:1, more preferably in the range of from 15,000:1 to 80,000:1, more preferably in the range of from 20,000:1 to 60,000:1.

Preferably, according to SB(i), the permeate gas stream P1(i) has a $H_2$ to $N_2$ molar ratio y(P1(i)) (calculated as $n(H_2):n(N_2)$= y(P1(i))<y(F1(i))) is greater than 500:1, more preferably in the range of from 500:1 to 100,000:1, more preferably in the range of from 1000:1 to 90,000:1, more preferably in the range of from 15,000:1 to 80,000:1, more preferably in the range of from 20,000:1 to 60,000:1.

It is preferred that P1(i) essentially consists of, more preferably consists of, $H_2$, meaning that the $H_2$ purity of the permeate gas stream P1(i) is preferably in the range of 99.9 vol.-% to 99.9999 vol-% assuming all components behave as an ideal gas. Methods of determining high purity hydrogen are dependent on the contaminating analyte and are well known to the skilled person with reference made to Murugan et al in "Review of purity analysis methods for performing quality assurance of fuel cell hydrogen" Int. Journal of Hydrogen Energy (2015) pg 4219 discloses methods of analyzing high purity hydrogen useful to the skilled person.

Preferably, according to SB(i), the volume flow ratio of feed gas F1(i) to the permeate gas stream P1(i) calculated as (volume flow F1(i)/volume flow P1(i)) is in the range of from 1.5:1 to 50:1, more preferably in the range of from 2:1 to 40:1, more preferably in the range of from 3:1 to 30:1.

Preferably, according to SB(i), the retentate gas stream R1(i) has a pressure in the range of from 10 to 100 bar (abs), more preferably in the range of from 15 to 85 bar (abs), more preferably in the range of from 20 to 60 bar (abs).

Preferably, according to SB(i), the retentate gas stream R1(i) has a temperature in the range of from 250 to 700 °C, more preferably in the range of from 300 to 600 °C, more preferably in the range of from 350 to 500 °C.

Preferably, according to SB(i), the retentate gas stream R1(i) has a $H_2$ to $NH_3$ molar ratio x(R1(i)) (calculated as $n(H_2):n(NH_3)$= x(R1(i))=x(F2)) in the range of from 0.1:1 to 100:1, more preferably in the range of from 0.5:1 to 60:1, more preferably in the range of from 1:1 to 10:1.

Preferably, according to SB(i), the retentate gas stream R1(i) has a $H_2$ to $N_2$ molar ratio y(R1(i)) (calculated as $n(H_2):n(N_2)$= y(R1(i))=y(F2)) in the range of from 0.01:1 to 3:1, more preferably in the range of from 0.25:1 to 2:1.

Preferably, according to SB(i), the volume flow ratio of feed gas F1(i) to the retentate gas stream R1(i) calculated as (volume flow F1(i)/volume flow R1(i)) is in the range of from 1:1 to 5:1, more preferably in the range of from 1:1 to 3.5:1, more preferably in the range of 1.02:1 to 2:1.

According to an aspect of the present invention, according to SB(i), the membrane unit M1(i) preferably comprises a single membrane.

According to another aspect of the present invention, according to SB(i), the membrane unit M1(i) preferably comprises two or more membranes, said membranes being connected in parallel and the feed gas stream F1(i) passes through said two or more membranes simultaneously and permeate gas stream P1(i) and retentate gas stream R1(i) are obtained simultaneously in parallel from said membranes.

In the context of the present invention, according to SC(i), the feed gas stream F2(i) preferably has a pressure in the range of from 10 to 100 bar (abs), more preferably in the range of from 15 to 85 bar (abs), more preferably in the range of from 20 to 60 bar (abs).

Preferably, according to SC(i), the feed gas stream F2(i) has a temperature in the range of from 250 to 700 °C, more preferably in the range of from 300 to 600 °C, more preferably in the range of from 350 to 500 °C.

Preferably, according to SC(i), the feed gas stream F2(i) has a $H_2$ to $NH_3$ molar ratio x(F2(i)) (calculated as $n(H_2):n(NH_3)$= x(F2(i))=x(R1(i))) in the range of from 0.1:1 to 100:1, more preferably in the range of from 0.5:1 to 60:1, more preferably in the range of from 1:1 to 10:1.

Preferably, according to SC(i), the feed gas stream F2(i) has a $H_2$ to $N_2$ molar ratio y(F2(i)) (calculated as $n(H_2):n(N_2)$= y(F2(i))=y(R1(i))) in the range of from 0.01:1 to 3:1, more preferably in the range of from 0.25:1 to 2:1.

Preferably, according to SB(i) and SC(i), the volume flow ratio of F1(i) to R1(i) calculated as (volume flow F1(i)/volume flow R1(i)) is equal to the volume flow ratio of F1(i) to F2(i) calculated as (volume flow F1(i)/volume flow F2(i)) and is in the range of from 1:1 to 5:1, more preferably in the range of from 1:1 to 3.5:1, more preferably in the range of 1.02:1 to 2:1.

Preferably, according to SC(i), the membrane unit M2(i) comprising at least one membrane has a $H_2/NH_3$ selectivity of at least 2,500, more preferably in the range of from 2,500 to 1,000,000, more preferably in the range of from 4,500 to 900,000, more preferably in the range of from 5,000 to 800,000, more preferably in the range of from 6,000 to 600,000.

Preferably, according to SC(i), the membrane unit M2(i) comprising at least one membrane has a ratio of $H_2/N_2$ selectivity to $H_2/NH_3$ selectivity in the range of from 0.8:1 to 5:1, more preferably in the range of from 1.2:1 to 2:1.

Preferably, according to SC(i), the at least one membrane comprised in membrane unit M2(i) is a palladium metal membrane; wherein preferably according to SC(i), the at least one membrane comprised in membrane unit M2(i) has a $H_2$ permeance in the range of from 0.1 to 100 $Nm^3/(m^2\,h\,bar)$, more preferably in the range of from 0.5 to 75 $Nm^3/(m^2\,h\,bar)$, more preferably in the range of from 1 to 50 $Nm^3/(m^2\,h\,bar)$, more preferably in the range of from 2 to 40 $Nm^3/(m^2\,h\,bar)$, more preferably in the range of from 3 to 30 $Nm^3/(m^2\,h\,bar)$, more preferably in the range of from 4 to 20 $Nm^3/(m^2\,h\,bar)$, more preferably in the range of from 5 to 10 $Nm^3/(m^2\,h\,bar)$.

Preferably, according to SC(i), the at least one membrane comprised in membrane unit M2(i) is a palladium metal membrane.

Preferably, the palladium metal membrane comprises a palladium coating on a substrate, the palladium coating consisting of palladium having a purity of at least 97.5%, more preferably of at least 98.5 %, more preferably in the range of from 99.0 to 99.9 %.

Preferably, the substrate of the palladium metal membrane is selected from the group consisting of steel, stainless steel, borosilicate glass, alumina and zirconia. Further reference is made to Pal N. et al "A review on types, fabrication and support material of hydrogen separation membrane, Materials Today: Proceedings, volume 28, part 3, 2020, pages 1386-1391 with regards to acceptable substrate materials for palladium comprising membranes.

Alternatively, the palladium metal membrane preferably comprises an alloy coating on a substrate, the alloy coating comprising, more preferably consisting of, Pd and one or more of Ag, Au, Ru, In, Cu and Y, more preferably Pd and one or more of Ag, Cu and Y, more preferably Pd and Ag.

Preferably from 0.50 wt.-% to 50 wt.-%, more preferably from 1 wt.-% to 45 wt.-%, more preferably from 3 wt.-% to 35 wt.-%, more preferably rom 7 wt.-% to 30 wt.-%, more preferably from 8 wt.-% to 15 wt.-%, of the alloy coating consist of the metal other than palladium.

Preferably, the substrate of the palladium metal membrane is selected from the group consisting of steel, stainless steel, borosilicate glass, alumina and zirconia. Further reference is made to Pal N. et al "A review on types, fabrication and support material of hydrogen separation membrane, Materials Today: Proceedings, volume 28, part 3, 2020, pages 1386-1391 with regards to acceptable substrate materials for palladium comprising membranes.

Preferably, according to SC(i), the pressure ratio $\varphi$ across the at least one membrane comprised in membrane unit M2(i), calculated as (pressure of feed gas stream F2(i)/ pressure of permeate gas stream P2(i)) at constant temperature, is in the range of from 1.5:1 to 50:1, more preferably in the range of from 2:1 to 40:1, more preferably in the range of from 2.5:1 to 35:1.

Preferably, according to SC(i), the permeate gas stream P2(i) has a pressure in the range of from 1.1 to 30 bar(abs), more preferably in the range of from 1.1 to 10 bar(abs), more preferably in the range of from 1.1 to 2.5 bar(abs).

Preferably, according to SC(i), the permeate gas stream P2(i) has a temperature in the range of from 250 to 700 °C, more preferably in the range of from 300 to 600 °C, more preferably in the range of from 350 to 500 °C.

Preferably, according to SC(i), the permeate gas stream P2(i) further comprises $NH_3$ and has a $H_2$ to $NH_3$ molar ratio x(P2(i)) (calculated as $n(H_2):n(NH_3)$= x(P2(i))>x(F2(i)) is greater than 500:1, more preferably in the range of from 500:1 to 100,000:1, more preferably in the range of from 1000:1 to 90,000:1, more preferably in the range of from 15,000:1 to 80,000:1, more preferably in the range of from 20,000:1 to 60,000:1.

Preferably, according to SC(i), the permeate gas stream P2(i) further comprises $H_2$ and has a $H_2$ to $N_2$ molar ratio y(P2(i)) (calculated as $n(H_2):n(N_2)$= y(P2(i))<y(F2(i)) is greater than 500:1, more preferably in the range of from 500:1 to 100,000:1, more preferably in the range of from 1000:1 to 90,000:1, more preferably in the range of from 15,000:1 to 80,000:1, more preferably in the range of from 20,000:1 to 60,000:1.

It is preferred that P2(i) essentially consists of, more preferably consists of, $H_2$, meaning that the H2 purity is preferably in the range of from 99.9 vol.-% to 99.9999 vol.-% assuming all component behave as an ideal gas. Methods of determining high purity hydrogen are dependent on the contaminating analyte and are well known to the skilled person with reference made to Murugan et al in "Review of purity analysis methods for performing quality assurance of fuel cell hydrogen" Int. Journal of Hydrogen Energy (2015) pg 4219 discloses methods of analyzing high purity hydrogen useful to the skilled person.

Preferably, according to SC(i), the volume flow ratio of feed gas F2(i) to the permeate gas stream P2(i) calculated as (volume flow F2(i)/volume flow P2(i)) is in the range of from 1.5:1 to 50:1, more preferably in the range of from 2:1 to 40:1, more preferably in the range of from 3:1 to 30:1.

Preferably, according to SC(i), the retentate gas stream R2(i) has a pressure in the range of from 10 to 100 bar (abs), more preferably in the range of from 15 to 85 bar (abs), more preferably in the range of from 20 to 60 bar (abs).

Preferably, according to SC(i), the retentate gas stream R2(i) has a temperature in the range of from 250 to 700 °C, more preferably in the range of from 300 to 600 °C, more preferably in the range of from 350 to 500 °C.

Preferably, according to SC(i), the retentate gas stream R2(i) has a $H_2$ to $NH_3$ molar ratio x(R2(i)) (calculated as $n(H_2):n(NH_3)$= x(R2(i))=x(FS(i)) in the range of from 0.05:1 to 100:1, more preferably in the range of from 0.1:1 to 30:1, more preferably in the range of from 0.2:1 to 5:1.

Preferably, according to SC(i), the retentate gas stream R2(i) has a $H_2$ to $N_2$ molar ratio y(R2(i)) (calculated as $n(H_2):n(N_2)$= y(R2(i))=y(FS(i)) in the range of from 0.01:1 to 2:1, more preferably in the range of from 0.03:1 to 2:1, more preferably in the range of from 0.05:1 to 1.5:1.

Preferably, according to SC(i), the volume flow ratio of F2(i) to R2(i) calculated as (volume flow F2(i)/ volume flow R2(i)) is in the range of from 1:1 to 5:1, more preferably in the range of from 1:1 to 3.5:1, more preferably in the range of from 1.02:1 to 2:1.

Preferably, according to SC(i), the feed stream FS(i) has a pressure in the range of from 10 to 100 bar (abs), more preferably in the range of from 15 to 85 bar (abs), more preferably in the range of from 20 to 60 bar (abs).

Preferably, according to SC(i), the feed stream FS(i) has a temperature in the range of from 250 to 700 °C, more preferably in the range of from 300 to 600 °C, more preferably in the range of from 350 to 500 °C.

Preferably, according to SC(i), the feed stream FS(i) has a $H_2$ to $NH_3$ molar ratio x(F2(i)) (calculated as

$n(H_2):n(NH_3)= x(FS(i))=x(R2(i))$ in the range of from 0.05:1 to 100:1, more preferably in the range of from 0.1:1 to 30:1, more preferably in the range of from 0.2:1 to 5:1.

Preferably, according to SC(i), the feed stream FS(i) has a $H_2$ to $N_2$ molar ratio y(FS(i)) (calculated as $n(H_2):n(N_2)= y(FS(i))=y(R2(i))$ in the range of from 0.01:1 to 2:1, more preferably in the range of from 0.03:1 to 2:1, more preferably in the range of from 0.05:1 to 1.5:1.

Preferably, according to SC(i), the volume flow ratio of F2(i) to R2(i) calculated as (volume flow F2(i)/volume flow R2(i)) is equal to the volume flow ratio of F2(i) to FS(i) calculated as (volume flow F2(i)/ volume flow FS(i)) and is in the range of from 1:1 to 5:1, more preferably in the range of from 1:1 to 3.5:1, more preferably in the range of 1.02:1 to 2:1 .

Preferably, according to SC(n), the retentate gas stream R2(n) has a pressure in the range of from 10 to 100 bar (abs), more preferably in the range of from 15 to 85 bar (abs), more preferably in the range of from 20 to 60 bar (abs).

Preferably, according to SC(n), the retentate gas stream R2(n) has a temperature in the range of from 250 to 700 °C, more preferably in the range of from 300 to 600 °C, more preferably in the range of from 350 to 500 °C.

Preferably, according to SC(n), the retentate gas stream R2(n) has a $H_2$ to $NH_3$ molar ratio x(R2(i)) (calculated as $n(H_2):n(NH_3)= x(R2(n))$ in the range of from 0.05:1 to 100:1, more preferably in the range of from 0.1:1 to 30:1, more preferably in the range of from 0.2:1 to 5:1.

Preferably, according to SC(n), the retentate gas stream R2(n) has a $H_2$ to $N_2$ molar ratio y(R2(i)) (calculated as $n(H_2):n(N_2)= y(R2(n))$ in the range of from 0.01:1 to 2:1, more preferably in the range of from 0.03:1 to 2:1, more preferably in the range of from 0.05:1 to 1.5:1.

Preferably, according to SC(n), the volume flow ratio of F2(n) to R2(n) calculated as (volume flow F2(n)/ volume flow R2(n)) is in the range of from 1:1 to 5:1, more preferably in the range of from 1:1 to 3.5:1, more preferably in the range of 1.02:1 to 2:1.

According to an aspect of the present invention, in SC(i), the membrane unit M2(i) preferably comprises a single membrane.

According to another aspect of the present invention, in SC(i), the membrane unit M2(i) preferably comprises two or more membranes, said membranes are connected in parallel and the feed gas stream F2(i) passes through said two or more membranes simultaneously and permeate gas stream P2(i) and retentate gas stream R2(i) are obtained simultaneously in parallel from said membranes.

In the context of the present invention, the volume flow ratio of FS(i-1) to (FS(i)) preferably is in the range of from 1.1:1 to 3:1, more preferably in the range of 1.2:1 to 2.5:1.

Preferably, the ratio of the pressure of permeate gas stream P1(i) to permeate gas stream P2(i) is in the range of from 50:1 to 1.5:1, more preferably in the range of 20:1 to 2:1, more preferably in the range of 15:1 to 3:1, more preferably in the range of from 12:1 to 4:1.

Preferably, the volume flow ratio of FS(n-1) to R2(n) is in the range of from 1.05:1 to 4:1, more preferably in the range of from 1.1 to 3, more preferably in the range of from 1.5 to 2.5.

Preferably, for n=2, the apparatus for recovering $H_2$ from converted $NH_3$ comprises 2 serially coupled zones Z(1) and Z(2),

wherein zone Z(1) contains

- the conversion reactor CR(1) comprising the catalyst C(1) for converting $NH_3$ to give $H_2$,
- the first membrane unit M1(1) and
- the second membrane unit M2(1),

wherein CR(1) is located upstream of M1(1) and M2(1) is located downstream of M1(1) in Z(1), wherein Z(1) is the most upstream zone and Z(2) is the most downstream zone, and wherein zone Z(2) contains

- the conversion reactor CR(2) comprising the catalyst C(2) for converting $NH_3$ to give $H_2$,
- the first membrane unit M1(2) and
- the second membrane unit M2(2),

wherein CR(2) is located upstream of M1(2) and M2(2) is located downstream of M1(2) in Z(2), the process comprising

(a) providing a feed gas stream FS(0) comprising $NH_3$;
(b) 2 successive process stages S(1) and S(2)

wherein S(1) comprises
a conversion stage SA(1), comprising

- feeding gas stream FS(0) into a conversion reactor CR(1) comprised in Z(1) and bringing said stream FS(0) in contact with C(1) in CR(1), obtaining a gas stream G(1) which comprises $NH_3$, $N_2$ and $H_2$, the gas stream G(1) having a molar ratio $n(H_2):n(NH_3)=x(G(1))$;
- removing the gas stream G(1) comprising $NH_3$, $N_2$ and $H_2$ from CR(1);
- passing the gas stream G(1) as a feed gas stream F1(1) through a separation stage SB(1), F1(1) having the same chemical composition as G(1) and the molar ratio $x(G(1))=x(F1(1))$;

a separation stage SB(1), comprising

- passing the feed gas stream F1(1) through a first membrane unit M1(1), of Z(1), comprising at least one membrane,

the at least one membrane having a $H_2/NH_3$ selectivity of at least 2000,
at a pressure ratio $\varphi$ greater than 1 across said at least one membrane, calculated as (pressure of feed gas stream F1(1)/ pressure of permeate gas stream P1(1)) at constant temperature, obtaining
∘ a permeate gas stream P1(1) comprising $H_2$; and
∘ a retentate gas stream R1(1) comprising $H_2$, $N_2$ and $NH_3$, wherein the molar ratio $n(H_2):n(NH_3)=x(R1(1))$; $x(R1(1))<x(F1(1))$;

- passing the retentate gas stream R1(1) as a feed gas stream F2(1), through a separation stage SC(1), F2(1) having the same chemical and physical composition as R1(1) and the molar ratio $x(R1(1))=x(F2(1))$;

a separation stage SC(1), comprising

- passing the feed gas stream F2(1) through a second membrane unit M2(1) of Z(1) comprising at least one membrane, the at least one membrane having a $H_2/NH_3$ selectivity of at least 2000,

at a pressure ratio $\varphi$ of greater than 1 across said at least one membrane, calculated as (pressure of feed gas stream F2(1)/ pressure of permeate gas stream P2(1)) at constant temperature, obtaining
∘ a permeate gas stream P2(1) comprising $H_2$; and
∘ a retentate gas stream R2(1) comprising $H_2$, $N_2$ and $NH_3$, wherein the molar ratio $n(H_2):n(NH_3)=x(R2(1))$; $x(R2(1))<x(F2(1))$;

- removing the gas stream R2(1) from Z(1);

wherein, the gas stream R2(1) is removed as a feed stream FS(1), FS(1) having the same chemical and physical composition as R2(1) and the molar ratio $x(R2(1))=x(FS(1))$; and wherein S(2) comprises a conversion stage SA(2), comprising

- feeding gas stream FS(1) into a conversion reactor CR(2) comprised in Z(2) and bringing said stream FS(1) in contact with C(2) in CR(2), obtaining a gas stream G(2) which comprises $NH_3$, $N_2$ and $H_2$, the gas stream G(2) having a molar ratio $n(H_2):n(NH_3)=x(G(2))$;
- removing the gas stream G(2) comprising $NH_3$, $N_2$ and $H_2$ from CR(2);
- passing the gas stream G(2) as a feed gas stream F1(2) through a separation stage SB(2), F1(2) having the same chemical composition as G(2) and the molar ratio $x(G(2))=x(F1(2))$;

a separation stage SB(2), comprising

- passing the feed gas stream F1(2) through a first membrane unit M1(2), of Z(2), comprising at least one membrane,

the at least one membrane having a $H_2/NH_3$ selectivity of at least 2000,
at a pressure ratio $\varphi$ greater than 1 across said at least one membrane, calculated as (pressure of feed gas stream F1(2)/ pressure of permeate gas stream P1(2)) at constant temperature, obtaining

∘ a permeate gas stream P1(2) comprising $H_2$; and
∘ a retentate gas stream R1(2) comprising $H_2$, $N_2$ and $NH_3$, wherein the molar ratio $n(H_2):n(NH_3)=x(R1(2))$; $x(R1(2))<x(F1(2))$;

- passing the retentate gas stream R1(2) as a feed gas stream F2(2), through a separation stage SC(2), F2(2) having the same chemical and physical composition as R1(2) and the molar ratio x(R1(2))=x(F2(2));

a separation stage SC(2), comprising

- passing the feed gas stream F2(2) through a second membrane unit M2(2) of Z(2) comprising at least one membrane, the at least one membrane having a $H_2/NH_3$ selectivity of at least 2000,

at a pressure ratio $\varphi$ of greater than 1 across said at least one membrane, calculated as (pressure of feed gas stream F2(2)/ pressure of permeate gas stream P2(2)) at constant temperature, obtaining
○ a permeate gas stream P2(2) comprising $H_2$; and
○ a retentate gas stream R2(2) comprising $H_2$, $N_2$ and $NH_3$, wherein the molar ratio $n(H_2):n(NH_3)=x(R2(2))$; x(R2(2))<x(F2(2));

- removing the gas stream R2(2) from Z(2);

wherein the gas stream R2(2) is removed as a product gas stream;
wherein the volume flow ratio of FS(0) to FS(1) is in the range of from 1.05:1 to 4:1;
wherein more preferably the volume flow ratio of FS(1) to R2(2) is in the range of from 1.05:1 to 4:1.

Preferably, for n=3, the apparatus for recovering $H_2$ from converted $NH_3$ comprises 3 serially coupled zones Z(1), Z(2) and Z(3),

wherein zone Z(1) contains

- the conversion reactor CR(1) comprising the catalyst C(1) for converting $NH_3$ to give $H_2$,
- the first membrane unit M1(1) and
- the second membrane unit M2(1),

wherein CR(1) is located upstream of M1(1) and M2(1) is located downstream of M1(1) in Z(1),
wherein Z(1) is the most upstream zone, Z(2) is downstream of Z(1) and Z(3),
wherein zone Z(2) contains

- the conversion reactor CR(2) comprising the catalyst C(2) for converting $NH_3$ to give $H_2$,
- the first membrane unit M1(2) and
- the second membrane unit M2(2),

wherein CR(2) is located upstream of M1(2) and M2(2) is located downstream of M1(2) in Z(2), and
wherein zone Z(3) contains

- the conversion reactor CR(3) comprising the catalyst C(3) for converting $NH_3$ to give $H_2$,
- the first membrane unit M1(3) and
- the second membrane unit M2(3),

wherein CR(3) is located upstream of M1(3) and M2(3) is located downstream of M1(3) in Z(3),
the process comprising

(a) providing a feed gas stream FS(0) comprising $NH_3$;
(b) 3 successive process stages S(1), S(2) and S(3)

wherein S(1) comprises
a conversion stage SA(1), comprising

- feeding the feed gas stream FS(0) into a conversion reactor CR(1) comprised in Z(1) and bringing said stream FS(0) in contact with C(1) in CR(1), obtaining a gas stream G(1) which comprises $NH_3$, $N_2$ and $H_2$, the gas stream G(1) having a molar ratio $n(H_2):n(NH_3)=x(G(1))$;
- removing the gas stream G(1) comprising $NH_3$, $N_2$ and $H_2$ from CR(1);
- passing the gas stream G(1) as a feed gas stream F1(1) through a separation stage SB(1), F1(1) having the same chemical composition as G(1) and the molar ratio x(G(1))=x(F1(1));

a separation stage SB(1), comprising

- passing the feed gas stream F1(1) through a first membrane unit M1 (1), of Z(1), comprising at least one membrane,

    the at least one membrane having a $H_2/NH_3$ selectivity of at least 2000,
    at a pressure ratio $\varphi$ greater than 1 across said at least one membrane, calculated as (pressure of feed gas stream F1(1)/ pressure of permeate gas stream P1 (1)) at constant temperature, obtaining

    ∘ a permeate gas stream P1(1) comprising $H_2$; and
    ∘ a retentate gas stream R1(1) comprising $H_2$, $N_2$ and $NH_3$, wherein the molar ratio $n(H_2):n(NH_3)$=x(R1(1)); x(R1(1))<x(F1 (1));

- passing the retentate gas stream R1(1) as a feed gas stream F2(1), through a separation stage SC(1), F2(1) having the same chemical and physical composition as R1(1) and the molar ratio x(R1(1))=x(F2(1));

a separation stage SC(1), comprising

- passing the feed gas stream F2(1) through a second membrane unit M2(1) of Z(1) comprising at least one membrane, the at least one membrane having a $H_2/NH_3$ selectivity of at least 2000,

at a pressure ratio $\varphi$ of greater than 1 across said at least one membrane, calculated as (pressure of feed gas stream F2(1)/ pressure of permeate gas stream P2(1)) at constant temperature, obtaining
∘ a permeate gas stream P2(1) comprising $H_2$; and
∘ a retentate gas stream R2(1) comprising $H_2$, $N_2$ and $NH_3$, wherein the molar ratio $n(H_2):n(NH_3)$=x(R2(1)); x(R2(1))<x(F2(1));

- removing the gas stream R2(1) from Z(1);

wherein the gas stream R2(1) is removed as a feed stream FS(1), FS(1) having the same chemical and physical composition as R2(1) and the molar ratio x(R2(1))=x(FS(1)); and
wherein S(2) comprises
a conversion stage SA(2), comprising

- feeding the gas stream FS(1) into a conversion reactor CR(2) comprised in Z(2) and bringing said stream FS(1) in contact with C(2) in CR(2), obtaining a gas stream G(2) which comprises $NH_3$, $N_2$ and $H_2$, the gas stream G(2) having a molar ratio $n(H_2):n(NH_3)$=x(G(2));
- removing the gas stream G(2) comprising $NH_3$, $N_2$ and $H_2$ from CR(2);
- passing the gas stream G(2) as a feed gas stream F1(2) through a separation stage SB(2), F1(2) having the same chemical composition as G(2) and the molar ratio x(G(2))=x(F1(2));

a separation stage SB(2), comprising

- passing the feed gas stream F1(2) through a first membrane unit M1(2), of Z(2), comprising at least one membrane,

the at least one membrane having a $H_2/NH_3$ selectivity of at least 2000,
at a pressure ratio $\varphi$ greater than 1 across said at least one membrane, calculated as (pressure of feed gas stream F1 (2)/ pressure of permeate gas stream P1 (2)) at constant temperature, obtaining
∘ a permeate gas stream P1(2) comprising $H_2$; and
∘ a retentate gas stream R1(2) comprising $H_2$, $N_2$ and $NH_3$, wherein the molar ratio $n(H_2):n(NH_3)$=x(R1(2)); x(R1(2))<x(F1 (2));

- passing the retentate gas stream R1(2) as a feed gas stream F2(2), through a separation stage SC(2), F2(2) having the same chemical and physical composition as R1(2) and the molar ratio x(R1(2))=x(F2(2));

a separation stage SC(2), comprising

- passing the feed gas stream F2(2) through a second membrane unit M2(2) of Z(2) comprising at least one membrane, the at least one membrane having a $H_2/NH_3$ selectivity of at least 2000,

at a pressure ratio $\varphi$ of greater than 1 across said at least one membrane, calculated as (pressure of feed gas stream F2(2)/ pressure of permeate gas stream P2(2)) at constant temperature, obtaining
  ◦ a permeate gas stream P2(2) comprising $H_2$; and
  ◦ a retentate gas stream R2(2) comprising $H_2$, $N_2$ and $NH_3$, wherein the molar ratio $n(H_2):n(NH_3)=x(R2(2))$; $x(R2(2))<x(F2(2))$;

- removing the gas stream R2(2) from Z(2);

wherein the gas stream R2(2) is removed as a feed stream FS(2), FS(2) having the same chemical and physical composition as R2(2) and the molar ratio $x(R2(2))=x(FS(2))$; and
wherein S(3) comprises
a conversion stage SA(3), comprising

- feeding the feed gas stream FS(2) into a conversion reactor CR(3) comprised in Z(3) and bringing said stream FS(2) in contact with C(3) in CR(3), obtaining a gas stream G(3) which comprises $NH_3$, $N_2$ and $H_2$, the gas stream G(3) having a molar ratio $n(H_2):n(NH_3)=x(G(3))$;
- removing the gas stream G(3) comprising $NH_3$, $N_2$ and $H_2$ from CR(3);
- passing the gas stream G(3) as a feed gas stream F1(3) through a separation stage SB(3), F1(3) having the same chemical composition as G(3) and the molar ratio $x(G(3))=x(F1(3))$;

a separation stage SB(3), comprising

- passing the feed gas stream F1(3) through a first membrane unit M1(3), of Z(3), comprising at least one membrane,

  the at least one membrane having a $H_2/NH_3$ selectivity of at least 2000,
  at a pressure ratio $\varphi$ greater than 1 across said at least one membrane, calculated as (pressure of feed gas stream F1(3)/ pressure of permeate gas stream P1(3)) at constant temperature, obtaining

  ◦ a permeate gas stream P1(3) comprising $H_2$; and
  ◦ a retentate gas stream R1(3) comprising $H_2$, $N_2$ and $NH_3$, wherein the molar ratio $n(H_2):n(NH_3)=x(R1(3))$; $x(R1(3))<x(F1(3))$;

- passing the retentate gas stream R1(3) as a feed gas stream F2(3), through a separation stage SC(3), F2(3) having the same chemical and physical composition as R1(3) and the molar ratio $x(R1(3))=x(F2(3))$;

a separation stage SC(3), comprising

- passing the feed gas stream F2(3) through a second membrane unit M2(3) of Z(3) comprising at least one membrane, the at least one membrane having a $H_2/NH_3$ selectivity of at least 2000,

at a pressure ratio $\varphi$ of greater than 1 across said at least one membrane, calculated as (pressure of feed gas stream F2(3)/ pressure of permeate gas stream P2(3)) at constant temperature, obtaining
  ◦ a permeate gas stream P2(3) comprising $H_2$; and
  ◦ a retentate gas stream R2(3) comprising $H_2$, $N_2$ and $NH_3$, wherein the molar ratio $n(H_2):n(NH_3)=x(R2(3))$; $x(R2(3))<x(F2(3))$;

- removing the gas stream R2(3) from Z(3);

wherein, the gas stream R2(3) is removed as a product gas stream;
wherein the volume flow ratio of FS(0) to FS(1) is in the range of from 1.05:1 to 4:1,
wherein the volume flow ratio of FS(1) to FS(2) is in the range of from 1.05:1 to 4:1;
wherein more preferably the volume flow ratio of FS(1) to R2(2) is in the range of from 1.05:1 to 4:1.

The present invention further relates to a process for recovering $H_2$ from converting $NH_3$ in an apparatus comprising a zone Z(1) containing a conversion reactor CR(1) comprising a catalyst C(1) for converting $NH_3$ to give $H_2$, a first membrane unit M1(1) and a second membrane unit M2(1),

wherein CR(1) is located upstream of M1(1) and M2(1) is located downstream of M1(1) in Z(1), the process comprising

(a) providing a feed gas stream FS(0) comprising $NH_3$;
(b) a process stage S(1)

wherein S(1) comprises
a conversion stage SA(1), comprising

- feeding gas stream FS(0) into a conversion reactor CR(1) comprised in Z(i) and bringing said stream FS(0) in contact with C(1) in CR(1), obtaining a gas stream G(i) which comprises $NH_3$, $N_2$ and $H_2$, the gas stream G(1) having a molar ratio $n(H_2):n(NH_3)=x(G(1))$;
- removing the gas stream G(1) comprising $NH_3$, $N_2$ and $H_2$ from CR(1);
- passing the gas stream G(1) as a feed gas stream F1(1) through a separation stage SB(1), F1(1) having the same chemical composition as G(1) and the molar ratio $x(G(1))=x(F1(1))$;

a separation stage SB(1), comprising

- passing the feed gas stream F1(1) through a first membrane unit M1(1), of Z(1), comprising at least one membrane,

the at least one membrane having a $H_2/NH_3$ selectivity of at least 2000,
at a pressure ratio $\varphi$ greater than 1 across said at least one membrane, calculated as (pressure of feed gas stream F1(i)/ pressure of permeate gas stream P1(1)) at constant temperature, obtaining
○ a permeate gas stream P1(1) comprising $H_2$; and
○ a retentate gas stream R1(1) comprising $H_2$, $N_2$ and $NH_3$, wherein the molar ratio $n(H_2):n(NH_3)=x(R1(1))$; $x(R1(1))<x(F1(1))$;

- passing the retentate gas stream R1(1) as a feed gas stream F2(1), through a separation stage SC(1), F2(1) having the same chemical and physical composition as R1(1) and the molar ratio $x(R1(1))=x(F2(1))$;

a separation stage SC(1), comprising

- passing the feed gas stream F2(1) through a second membrane unit M2(1) of Z(i) comprising at least one membrane, the at least one membrane having a $H_2/NH_3$ selectivity of at least 2000,

at a pressure ratio $\varphi$ of greater than 1 across said at least one membrane, calculated as (pressure of feed gas stream F2(1)/ pressure of permeate gas stream P2(1)) at constant temperature, obtaining
○ a permeate gas stream P2(1) comprising $H_2$; and
○ a retentate gas stream R2(1) comprising $H_2$, $N_2$ and $NH_3$, wherein the molar ratio $n(H_2):n(NH_3)=x(R2(1))$; $x(R2(1))<x(F2(1))$;

- removing the gas stream R2(1) from Z(1);

wherein the gas stream R2(1) is removed from Z(1) as a product gas stream;
wherein preferably the volume flow ratio of FS(0) to R2(1) is in the range of from 1.05:1 to 4:1.

For this alternative process which uses only one zone Z(1), it is noted that the preferred ranges and parameters defined for the alternative with two zones or more are the same as for only one-zone concept where applicable. Hence, what is referring to Z(i), CR(i), C(i), SA(i), SB(i), SC(i), etc. in the above, is applicable and explicitly disclosed with respect to Z(1) in the present alternative with only one zone Z(1).

The present invention further relates to an apparatus for recovering $H_2$ from converting $NH_3$, the apparatus comprising

n zones Z(i), with i= 1...n, with n≥1,

wherein, when n≥2,the n zones Z(i) are serially coupled and Z(1) is the most upstream zone and Z(n) is the most downstream zone,
wherein each zone Z(i) comprises
a conversion reactor unit U.CR(i) comprising

- a supplying means for providing a feed stream FS(i-1) comprising $NH_3$ to a conversion reactor CR(i);
- a conversion reactor CR(i) for converting $NH_3$ to a gas stream G(i) comprising $NH_3$, $N_2$ and $H_2$, the conversion reactor CR(i) comprising a conversion catalyst C(i);
- an outlet means for removing the gas stream G(i) from CR(i) as a feed gas stream F1(i) to a membrane separation unit U.M1(i);

a first membrane separation unit U.M1(i) comprising

- a means for passing a feed gas stream F1(i) to the first membrane unit M1(i);
- said membrane unit comprising at least one membrane, the at least one membrane having a $H_2/NH_3$ selectivity of at least 2000;
- an outlet means for removing a permeate gas stream P1(i) from the membrane unit M1(i);
- an outlet means for removing a retentate gas stream R1(i) from the membrane unit M1(i); a second membrane separation unit U.M2(i) comprising
- a means for passing retentate gas stream R1(i) as a feed gas stream F2(i) to the second membrane unit M2(i);
- said membrane unit comprising at least one membrane, the at least one membrane having a $H_2/NH_3$ selectivity of at least 2000;
- an outlet means for removing a permeate gas stream P2(i) from the membrane unit M2(i); an outlet means for removing a retentate gas stream R2(i) from Z(i); and

when n≥2 and i≠n, a means for passing R2(i) removed from Z(i), as a feed stream FS(i), into Z(i+1);
wherein U.CR(i) is located upstream of U.M1(i) and U.M2(i) is located downstream of U.M1(i) in Z(i).

Preferably, n = 1 to 10, more preferably n = 1 to 5, more preferably n = 1, 2, 3 or 4, more preferably n = 1 or 2 or 3.
Preferably, neither a vacuum apparatus nor a compressor is disposed downstream of the conversion reactor CR(i) according to U.CR(i); preferably wherein none of the feed gases, permeate streams and/or retentate streams for carrying hydrogen have a compressor or vacuum apparatus connected to or in operation with any of the units of the apparatus.
Preferably, the conversion reactor unit U.CR(i) comprises a heating means for heating the conversion reactor CR(i) to a temperature in the range of from 50 to 1100 °C, more preferably in the range of from 100 to 1000 °C, more preferably in the range of from 350 to 900 °C.
Preferably, the conversion catalyst C(i) comprises, more preferably consists of, a transition metal supported on a refractory support material.
Preferably, the transition metal is selected from the group consisting of Fe, Cu, Ni, Co, Ru, Ag, Pd, Rh, Pt, Ir including combinations of two or more thereof, more preferably selected from the group consisting of Ni, Co, Rh and Ru including combinations of two or more thereof, more preferably is Ni, Co or Ru, more is Ru.
Preferably, the refractory support material is selected from the group consisting of zeolite, alumina, silica, titania, zirconia, ceria, lanthana, praseodymium oxide, neodymium oxide, yttrium oxide, activated carbon, carbon nanotubes and a combination of two or more thereof, more preferably selected from the group consisting alumina, silica, titania, zirconia and a combination of two or more thereof, more preferably is alumina or zirconia.
Preferably, the transition metal catalyst supported on a refractory support material is promoted, more preferably with a metal selected from the group consisting of lithium, sodium, potassium, cesium, lanthanum, yttrium, neodymium, praseodymium and a combination of two or more thereof, more preferably selected from the group consisting of lithium, sodium, potassium, cesium, and a combination of two or more thereof, more preferably is potassium or cesium.
Preferably, the conversion catalyst C(i) is a molding.
Preferably, the conversion reactor unit U.CR(i) comprises a heat exchanging means H(i) disposed downstream of the outlet means for removing the gas stream G(i) from CR(i) and disposed upstream of the means for passing a feed gas stream F1(i) to the first membrane unit M1(i).
Preferably, the conversion reactor unit U.CR(i) comprises a heat exchanging means H(i) for adjusting the temperature of feed gas stream F1(i) to a range of from 250 to 700 °C; more preferably in the range of from 300 to 600 °C, more preferably in the range of from 350 to 500 °C.
Preferably, the membrane unit M1(i) comprising at least one membrane has a $H_2/NH_3$ selectivity of at least 2,500, more preferably in the range of from 2,500 to 1,000,000, more preferably in the range of from 4,500 to 900,000, more preferably in the range of from 5000 to 800,000, more preferably in the range of from 6000 to 600,000.

Preferably the membrane unit M1(i) comprising at least one membrane has a ratio of $H_2/N_2$ selectivity to $H_2/NH_3$ selectivity in the range of from 0.8:1 to 5:1, more preferably in the range of from 1.2:1 to 2:1.

Preferably, the at least one membrane comprised in membrane unit M1(i) is a palladium metal membrane; wherein preferably the at least one membrane comprised in membrane unit M1(i) has a $H_2$ permeance in the range of from 0.1 to 100 $Nm^3/(m^2 \, h \, bar)$, more preferably in the range of from 0.5 to 75 $Nm^3/(m^2 \, h \, bar)$, more preferably in the range of from 1 to 50 $Nm^3/(m^2 \, h \, bar)$, more preferably in the range of from 2 to 40 $Nm^3/(m^2 \, h \, bar)$, more preferably in the range of from 3 to 30 $Nm^3/(m^2 \, h \, bar)$, more preferably in the range of from 4 to 20 $Nm^3/(m^2 \, h \, bar)$, more preferably in the range of from 5 to 10 $Nm^3/(m^2 \, h \, bar)$

Preferably, the at least one membrane comprised in membrane unit M1(i) is a palladium metal membrane.

Preferably, the palladium metal membrane comprises a palladium coating on a substrate, the palladium coating consisting of palladium having a purity of at least 97.5%, more preferably of at least 98.5 %, more preferably in the range of from 99.0 to 99.9 %.

Preferably, the substrate of the palladium metal membrane is selected from the group consisting of steel, stainless steel, borosilicate glass, alumina and zirconia. Further reference is made to Pal N. et al "A review on types, fabrication and support material of hydrogen separation membrane, Materials Today: Proceedings, volume 28, part 3, 2020, pages 1386-1391 with regards to acceptable substrate materials for palladium comprising membranes.

Alternatively, the palladium metal membrane preferably comprises an alloy coating on a substrate, the alloy coating comprising, more preferably consisting of, Pd and one or more of Ag, Au, Ru, In, Cu and Y, more preferably Pd and one or more of Ag, Cu and Y, more preferably Pd and Ag.

Preferably from 0.50 wt.-% to 50 wt.-%, more preferably from 1 wt.-% to 45 wt.-%, more preferably from 3 wt.-% to 35 wt.-%, more preferably from 7 wt.-% to 30 wt.-%, more preferably from 8 wt.-% to 15 wt.-%, of the alloy coating consist of the metal other than palladium.

Preferably, the substrate of the palladium metal membrane is selected from the group consisting of steel, stainless steel, borosilicate glass, alumina and zirconia. Further reference is made to Pal N. et al "A review on types, fabrication and support material of hydrogen separation membrane, Materials Today: Proceedings, volume 28, part 3, 2020, pages 1386-1391 with regards to acceptable substrate materials for palladium comprising membranes.

According to an aspect of the present invention, the membrane unit M1(i) preferably comprises a single membrane.

According to another aspect of the present invention, the membrane unit M1(i) preferably comprises two or more membranes, said membranes are connected in parallel to the means for passing feed gas stream F1(i) to the first membrane unit M1(i) and connected in parallel to the outlet means for removing a permeate gas stream P1(i) from the first membrane unit M1(i) and connected in parallel to the outlet means for removing the retentate gas stream R1(i) from the first membrane unit M1(i).

In the context of the present invention, the membrane unit M2(i) preferably comprising at least one membrane has a $H_2/NH_3$ selectivity of at least 2500, more preferably in the range of from 2500 to 1,000,000, more preferably in the range of from 4500 to 900,000, more preferably in the range of from 5000 to 800,000, more preferably in the range of from 6000 to 600,000.

Preferably the membrane unit M2(i) comprising at least one membrane has a ratio of $H_2/N_2$ selectivity to $H_2/NH_3$ selectivity in the range of from 0.8:1 to 5:1, more preferably in the range of from 1.2:1 to 2:1.

Preferably, the at least one membrane comprised in membrane unit M2(i) is a palladium metal membrane; wherein preferably the at least one membrane comprised in membrane unit M2(i) has a $H_2$ permeance in the range of from 0.1 to 100 $Nm^3/(m^2 \, h \, bar)$, more preferably in the range of from 0.5 to 75 $Nm^3/(m^2 \, h \, bar)$, more preferably in the range of from 1 to 50 $Nm^3/(m^2 \, h \, bar)$, more preferably in the range of from 2 to 40 $Nm^3/(m^2 \, h \, bar)$, more preferably in the range of from 3 to 30 $Nm^3/(m^2 \, h \, bar)$, more preferably in the range of from 4 to 20 $Nm^3/(m^2 \, h \, bar)$, more preferably in the range of from 5 to 10 $Nm^3/(m^2 \, h \, bar)$

Preferably, the at least one membrane comprised in membrane unit M2(i) is a palladium metal membrane.

Preferably, the palladium metal membrane comprises a palladium coating on a substrate, the palladium coating consisting of palladium having a purity of at least 97.5%, more preferably of at least 98.5 %, more preferably in the range of from 99.0 to 99.9 %.

Preferably, the substrate of the palladium metal membrane is selected from the group consisting of steel, stainless steel, borosilicate glass, alumina and zirconia. Further reference is made to Pal N. et al "A review on types, fabrication and support material of hydrogen separation membrane, Materials Today: Proceedings, volume 28, part 3, 2020, pages 1386-1391 with regards to acceptable substrate materials for palladium comprising membranes.

Alternatively, the palladium metal membrane preferably comprises an alloy coating on a substrate, the alloy coating comprising, more preferably consisting of, Pd and one or more of Ag, Au, Ru, In, Cu and Y, more preferably Pd and one or more of Ag, Cu and Y, more preferably Pd and Ag.

Preferably from 0.50 wt.-% to 50 wt.-%, more preferably from 1 wt.-% to 45 wt.-%, more preferably from 3 wt.-

% to 35 wt.-%, more preferably from 7 wt.-% to 30 wt.-%, more preferably from 8 wt.-% to 15 wt.-%, of the alloy coating consist of the metal other than palladium.

Preferably, the substrate of the palladium metal membrane is selected from the group consisting of steel, stainless steel, borosilicate glass, alumina and zirconia. Further reference is made to Pal N. et al "A review on types, fabrication and support material of hydrogen separation membrane, Materials Today: Proceedings, volume 28, part 3, 2020, pages 1386-1391 with regards to acceptable substrate materials for palladium comprising membranes.

According to an aspect of the present invention, the membrane unit M2(i) preferably comprises a single membrane.

According to another aspect of the present invention, the membrane unit M2(i) preferably comprises two or more membranes, said membranes are connected in parallel to the means for passing feed gas stream F2(i) to the second membrane unit M1(i) and connected in parallel to the outlet means for removing a permeate gas stream P2(i) from the second membrane unit M2(i) and connected in parallel to the outlet means for removing the retentate gas stream R2(i) from the second membrane unit M2(i).

In the context of the present invention, for n=2, the apparatus comprises 2 serially coupled zones Z(1) and Z(2), wherein Z(1) is the most upstream zone and Z(2) is the most downstream zone,

wherein zone Z(1) comprises
a conversion reactor unit U.CR(1) comprising

- a supplying means for providing a feed stream FS(0) comprising $NH_3$ to a conversion reactor CR(1);
- a conversion reactor CR(1) for converting $NH_3$ to a gas stream G(1) comprising $NH_3$, $N_2$ and $H_2$, the conversion reactor CR(1) comprising a conversion catalyst C(1);
- an outlet means for removing the gas stream G(1) from CR(1) as a feed gas stream F1(1) to a membrane separation unit U.M1(1);

a first membrane separation unit U.M1(1) comprising

- a means for passing a feed gas stream F1(1) to the first membrane unit M1(1);
- said membrane unit comprising at least one membrane, the at least one membrane having a $H_2/NH_3$ selectivity of at least 2000;
- an outlet means for removing a permeate gas stream P1(1) from the membrane unit M1(1);
- an outlet means for removing a retentate gas stream R1(1) from the membrane unit M1(1);

a second membrane separation unit U.M2(1) comprising

- a means for passing retentate gas stream R1(1) as a feed gas stream F2(1) to the second membrane unit M2(1);
- said membrane unit comprising at least one membrane, the at least one membrane having a $H_2/NH_3$ selectivity of at least 2000;
- an outlet means for removing a permeate gas stream P2(1) from the membrane unit M2(1);

an outlet means for removing a retentate gas stream R2(1) from Z(1);
a means for passing R2(1), as a feed stream FS(1), removed from Z(1) into Z(2),
wherein U.CR(1) is located upstream of U.M1(1) and U.M2(1) is located downstream of U.M1(1) in Z(1),
wherein zone Z(2) comprises
a conversion reactor unit U.CR(2) comprising

- a supplying means for providing a feed stream FS(1) comprising $NH_3$ to a conversion reactor CR(2);
- a conversion reactor CR(2) for converting $NH_3$ to a gas stream G(2) comprising $NH_3$, $N_2$ and $H_2$, the conversion reactor CR(2) comprising a conversion catalyst C(2);
- an outlet means for removing the gas stream G(2) from CR(2) as a feed gas stream F1(2) to a membrane separation unit U.M1(2);

a first membrane separation unit U.M1(2) comprising

- a means for passing a feed gas stream F1(2) to the first membrane unit M1(2);
- said membrane unit comprising at least one membrane, the at least one membrane having a $H_2/NH_3$ selectivity of at least 2000;
- an outlet means for removing a permeate gas stream P1(2) from the membrane unit M1(2);

- an outlet means for removing a retentate gas stream R1(2) from the membrane unit M1(2);

a second membrane separation unit U.M2(2) comprising

- a means for passing retentate gas stream R1(2) as a feed gas stream F2(2) to the second membrane unit M2(2);
- said membrane unit comprising at least one membrane, the at least one membrane having a $H_2/NH_3$ selectivity of at least 2000;
- an outlet means for removing a permeate gas stream P2(2) from the membrane unit M2(2);

an outlet means for removing a retentate gas stream R2(2) from Z(2),
wherein U.CR(2) is located upstream of U.M1(2) and U.M2(2) is located downstream of U.M1(2) in Z(2),.

Preferably, for n= 3, the apparatus comprises 3 serially coupled zones Z(1), Z(2) and Z(3), wherein Z(1) is the most upstream zone, Z(3) is the most downstream zone,

wherein zone Z(1) comprises
a conversion reactor unit U.CR(1) comprising

- a supplying means for providing a feed stream FS(0) comprising $NH_3$ to a conversion reactor CR(1);
- a conversion reactor CR(1) for converting $NH_3$ to a gas stream G(1) comprising $NH_3$, $N_2$ and $H_2$, the conversion reactor CR(1) comprising a conversion catalyst C(1);
- an outlet means for removing the gas stream G(1) from CR(1) as a feed gas stream F1(1) to a membrane separation unit U.M1(1);

a first membrane separation unit U.M1(1) comprising

- a means for passing a feed gas stream F1(1) to the first membrane unit M1(1);
- said membrane unit comprising at least one membrane, the at least one membrane having a $H_2/NH_3$ selectivity of at least 2000;
- an outlet means for removing a permeate gas stream P1(1) from the membrane unit M1(1);
- an outlet means for removing a retentate gas stream R1(1) from the membrane unit M1(1);

a second membrane separation unit U.M2(1) comprising

- a means for passing retentate gas stream R1(1) as a feed gas stream F2(1) to the second membrane unit M2(1);
- said membrane unit comprising at least one membrane, the at least one membrane having a $H_2/NH_3$ selectivity of at least 2000;
- an outlet means for removing a permeate gas stream P2(1) from the membrane unit M2(1);

an outlet means for removing a retentate gas stream R2(1) from Z(1);
a means for passing R2(1), as a feed stream FS(1), removed from Z(1) into Z(2),
wherein U.CR(1) is located upstream of U.M1(1) and U.M2(1) is located downstream of U.M1(1) in Z(1),
wherein zone Z(2) comprises
a conversion reactor unit U.CR(2) comprising

- a supplying means for providing a feed stream FS(1) comprising $NH_3$ to a conversion reactor CR(2);
- a conversion reactor CR(2) for converting $NH_3$ to a gas stream G(2) comprising $NH_3$, $N_2$ and $H_2$, the conversion reactor CR(2) comprising a conversion catalyst C(2);
- an outlet means for removing the gas stream G(2) from CR(2) as a feed gas stream F1(2) to a membrane separation unit U.M1(2);

a first membrane separation unit U.M1(2) comprising

- a means for passing a feed gas stream F1(2) to the first membrane unit M1(2);
- said membrane unit comprising at least one membrane, the at least one membrane having a $H_2/NH_3$ selectivity of at least 2000;
- an outlet means for removing a permeate gas stream P1(2) from the membrane unit M1(2);
- an outlet means for removing a retentate gas stream R1(2) from the membrane unit M1(2);

a second membrane separation unit U.M2(2) comprising

- a means for passing retentate gas stream R1(2) as a feed gas stream F2(2) to the second membrane unit M2(2);
- said membrane unit comprising at least one membrane, the at least one membrane having a $H_2/NH_3$ selectivity of at least 2000;
- an outlet means for removing a permeate gas stream P2(2) from the membrane unit M2(2);

an outlet means for removing a retentate gas stream R2(2) from Z(2);
a means for passing R2(2), as a feed stream FS(2), removed from Z(2) into Z(3),
wherein U.CR(2) is located upstream of U.M1(2) and U.M2(2) is located downstream of U.M1(2) in Z(2);
wherein zone Z(3) comprises
a conversion reactor unit U.CR(3) comprising

- a supplying means for providing a feed stream FS(2) comprising $NH_3$ to a conversion reactor CR(3);
- a conversion reactor CR(3) for converting $NH_3$ to a gas stream G(3) comprising $NH_3$, $N_2$ and $H_2$, the conversion reactor CR(3) comprising a conversion catalyst C(3);
- an outlet means for removing the gas stream G(3) from CR(3) as a feed gas stream F1(3) to a membrane separation unit U.M1(3);

a first membrane separation unit U.M1(3) comprising

- a means for passing a feed gas stream F1(3) to the first membrane unit M1(3);
- said membrane unit comprising at least one membrane, the at least one membrane having a $H_2/NH_3$ selectivity of at least 2000;
- an outlet means for removing a permeate gas stream P1(3) from the membrane unit M1(3);
- an outlet means for removing a retentate gas stream R1(3) from the membrane unit M1(3);

a second membrane separation unit U.M2(3) comprising

- a means for passing retentate gas stream R1(3) as a feed gas stream F2(3) to the second membrane unit M2(3);
- said membrane unit comprising at least one membrane, the at least one membrane having a $H_2/NH_3$ selectivity of at least 2000;
- an outlet means for removing a permeate gas stream P2(3) from the membrane unit M2(3);

an outlet means for removing a retentate gas stream R2(3) from Z(3), wherein U.CR(3) is located upstream of U.M1(3) and U.M2(3) is located downstream of U.M1(3) in Z(3).

Preferably, the apparatus comprises a single zone Z(1), wherein zone Z(1) comprises

a conversion reactor unit U.CR(1) comprising

- a supplying means for providing a feed stream FS(0) comprising $NH_3$ to a conversion reactor CR(1);
- a conversion reactor CR(1) for converting $NH_3$ to a gas stream G(1) comprising $NH_3$, $N_2$ and $H_2$, the conversion reactor CR(1) comprising a conversion catalyst C(1);
- an outlet means for removing the gas stream G(1) from CR(1) as a feed gas stream F1(1) to a membrane separation unit U.M1(1);

a first membrane separation unit U.M1(1) comprising

- a means for passing a feed gas stream F1(1) to the first membrane unit M1(1);
- said membrane unit comprising at least one membrane, the at least one membrane having a $H_2/NH_3$ selectivity of at least 2000;
- an outlet means for removing a permeate gas stream P1(1) from the membrane unit M1(1);
- an outlet means for removing a retentate gas stream R1(1) from the membrane unit M1(1);

a second membrane separation unit U.M2(1) comprising

- a means for passing retentate gas stream R1(1) as a feed gas stream F2(1) to the second membrane unit M2(1);

- said membrane unit comprising at least one membrane, the at least one membrane having a $H_2/NH_3$ selectivity of at least 2000;
- an outlet means for removing a permeate gas stream P2(1) from the membrane unit M2(1);

an outlet means for removing a retentate gas stream R2(1) from Z(1);
wherein U.CR(1) is located upstream of U.M1(1) and U.M2(1) is located downstream of U.M1(1) in Z(1).

The invention further relates a use of an apparatus according to the present invention and as described above in a process for recovering $H_2$ from converting $NH_3$, preferably a process according to the present invention.

The present invention is further illustrated by the following set of embodiments and combinations of embodiments resulting from the dependencies and back-references as indicated. In particular, it is noted that in each instance where a range of embodiments is mentioned, for example in the context of a term such as "any one of embodiments 1 to 4", every embodiment in this range is meant to be explicitly disclosed for the skilled person, i.e. the wording of this term is to be understood by the skilled person as being synonymous to "any one of embodiments 1, 2, 3, and 4". Further, it is explicitly noted that the following set of embodiments is not the set of claims determining the extent of protection, but represents a suitably structured part of the description directed to general and preferred aspects of the present invention.

1. A process for recovering $H_2$ from converting $NH_3$ in an apparatus comprising n serially coupled zones Z(i), with i= 1...n, with n≥2,

wherein each zone Z(i) contains

- a conversion reactor CR(i) comprising a catalyst C(i) for converting $NH_3$ to give $H_2$,
- a first membrane unit M1(i) and
- a second membrane unit M2(i),

wherein CR(i) is located upstream of M1(i) and M2(i) is located downstream of M1(i) in Z(i), wherein Z(1) is the most upstream zone and Z(n) is the most downstream zone, the process comprising

(a) providing a feed gas stream FS(0) comprising $NH_3$;
(b) n successive process stages S(i), i=1...n,

wherein, in each S(i), S(i) comprises

a conversion stage SA(i), comprising

- feeding gas stream FS(i-1) into a conversion reactor CR(i) comprised in Z(i) and bringing said stream FS(i-1) in contact with C(i) in CR(i), obtaining a gas stream G(i) which comprises $NH_3$, $N_2$ and $H_2$, the gas stream G(i) having a molar ratio $n(H_2):n(NH_3)=x(G(i))$;
- removing the gas stream G(i) comprising $NH_3$, $N_2$ and $H_2$ from CR(i);
- passing the gas stream G(i) as a feed gas stream F1(i) through a separation stage SB(i), F1(i) having the same chemical composition as G(i) and the molar ratio $x(G(i))=x(F1(i))$;

a separation stage SB(i), comprising

- passing the feed gas stream F1(i) through a first membrane unit M1(i), of Z(i), comprising at least one membrane,
the at least one membrane having a $H_2/NH_3$ selectivity of at least 2000, at a pressure ratio $\varphi$ greater than 1 across said at least one membrane, calculated as (pressure of feed gas stream F1(i)/ pressure of permeate gas stream P1(i)) at constant temperature, obtaining

  ◦ a permeate gas stream P1(i) comprising $H_2$; and
  ◦ a retentate gas stream R1(i) comprising $H_2$, $N_2$ and $NH_3$, wherein the molar ratio $n(H_2):n(NH_3)=x(R1(i))$; $x(R1(i))<x(F1(i))$;

- passing the retentate gas stream R1(i) as a feed gas stream F2(i), through a separation stage SC(i), F2(i) having the same chemical and physical composition as R1(i) and the molar ratio $x(R1(i))=x(F2(i))$;

a separation stage SC(i), comprising

- passing the feed gas stream F2(i) through a second membrane unit M2(i) of Z(i) comprising at least one membrane, the at least one membrane having a $H_2/NH_3$ selectivity of at least 2000, at a pressure ratio $\varphi$ of greater than 1 across said at least one membrane, calculated as (pressure of feed gas stream F2(i)/ pressure of permeate gas stream P2(i)) at constant temperature, obtaining

  ∘ a permeate gas stream P2(i) comprising $H_2$; and
  ∘ a retentate gas stream R2(i) comprising $H_2$, $N_2$ and $NH_3$, wherein the molar ratio $n(H_2):n(NH_3)=x(R2(i))$; $x(R2(i))<x(F2(i))$;

- removing the gas stream R2(i) from Z(i);

wherein, when i=1...n-1, the gas stream R2(i) is removed from Z(i) as a feed stream FS(i), FS(i) having the same chemical and physical composition as R2(i) and the molar ratio x(R2(i))=x(FS(i)); and
wherein, when i=n, the gas stream R2(n) is removed from Z(i) as a product gas stream;
wherein the volume flow ratio of FS(i-1) to FS(i) is in the range of from 1.05:1 to 4:1.

2. The process of embodiment 1, wherein n= 2 to 10, preferably n= 2 to 5, more preferably n= 2, 3 or 4, more preferably n= 2 or 3.

3. The process of embodiment 1 or 2, wherein according to stage S(i), no vacuum apparatus or compressor is operated downstream of the conversion reactor CR(i) according to SA(i) in the obtainment of a permeate gas stream and/or a retentate gas stream, preferably in the obtainment of any permeate gas stream and/or any retentate gas; wherein preferably, no streams or feeds comprising hydrogen in the process are compressed by a compressor or evacuated by a vacuum pump according to all stages S(i) of the process.

4. The process of any one of embodiments 1 to 3, wherein the feed gas stream FS(0) comprises, preferably consists of, $NH_3$ having a purity in the range of from 85 to 99.99998 wt.-% calculated on the total sum basis of all gas components present, preferably in the range of from 95 to 99.998 wt.-%, more preferably in the range of from 98 to 99.8 wt.-%; wherein preferably the feed gas stream FS(0) in addition to $NH_3$ comprises impurities, wherein the impurities are preferably one or more of $N_2$, $O_2$, water, $CO_2$, CO, $CH_4$, $H_2$, hydrocarbons and Ar, more preferably one or more of $N_2$, $O_2$, and water, more preferably one or more of $N_2$ and water.

5. The process of any one of embodiments 1 to 4, wherein the feed gas stream FS(0) is obtained from a process selected from the group consisting of a Haber-Bosch process, an electrochemical ammonia synthesis process, a non-thermal or thermal plasma assisted ammonia production process and combinations of two or more thereof, preferably is obtained from a Haber-Bosch process or an electrochemical ammonia synthesis process.

6. The process of any one of embodiments 1 to 5, wherein according to SA(i) the feed gas stream FS(i-1) is contacted with the conversion catalyst C(i) at a pressure in the range of from 10 to 100 bar(abs), preferably in the range of from 15 to 85 bar(abs), more preferably in the range of from 20 to 60 bar(abs).

7. The process of any one of embodiments 1 to 6, wherein according to SA(i) the feed gas stream FS(i-1) is contacted with the conversion catalyst C(i) at a temperature in the range of from 50 to 1100 °C, preferably in the range of from 100 to 1000 °C, more preferably in the range of from 350 to 900 °C.

8. The process of any one of embodiments 1 to 7, wherein the conversion catalyst C(i) comprises, preferably consists of, a transition metal supported on a refractory support material.

9. The process of embodiment 8, wherein the transition metal is selected from the group consisting of Fe, Cu, Ni, Co, Ru, Ag, Pd, Rh, Pt, Ir including combinations of two or more thereof, preferably selected from the group consisting of Ni, Co, Rh and Ru including combinations of two or more thereof, more preferably is Ni, Co or Ru, more is Ru.

10. The process of either embodiment 8 or 9, wherein the refractory support material is selected from the group consisting of zeolite, alumina, silica, titania, zirconia, ceria, lanthana, praseodymium oxide, neodymium oxide, yttrium oxide, activated carbon, carbon nanotubes and a combination of two or more thereof, preferably selected from the group consisting of alumina, silica, titania, zirconia and a combination of two or more thereof, more preferably is alumina or zirconia.

11. The process of any one of embodiments 8 to 10, wherein the transition metal catalyst supported on a refractory support material is promoted, preferably with a metal selected from the group consisting of lithium, sodium, potassium, cesium, lanthanum, yttrium, neodymium, praseodymium and a combination of two or more thereof, more preferably selected from the group consisting of lithium, sodium, potassium, cesium, and a combination of two or more thereof, more preferably the metal is potassium or cesium.

12. The process of any one of embodiments 1 to 11, wherein the conversion catalyst C(i) is a molding.

13. The process of any one of embodiments 1 to 12, wherein at least 95 vol.-%, preferably from 95 to 100 vol.-%, more preferably from 98 to 100 vol.-%, more preferably from 99 to 100 vol.-%, more preferably from 99.5 to 100 vol.-%, of the gas stream G(i) consists of $NH_3$, $N_2$ and $H_2$.

14. The process of any one of embodiments 1 to 13, wherein the gas stream G(i) has a $H_2$ to $NH_3$ molar ratio x(G(i)) (calculated as $n(H_2):n(NH_3)$= x(G(i)) in the range of from 0.01:1 to 500:1, preferably in the range of from 0.05:1 to 200:1, more preferably in the range of from 2:1 to 50:1.

15. The process of any one of embodiments 1 to 14, wherein the gas stream G(i) has a $H_2$ to $N_2$ molar ratio y(G(i)) (calculated as $n(H_2):n(N_2)$= y(G(i))) in the range of from 0.01:1 to 5:1.

16. The process of any one of embodiments 1 to 15, wherein the gas stream G(i) has a pressure in the range of from 10 to 100 bar (abs), preferably in the range of from 15 to 65 bar (abs), more preferably in the range of from 20 to 60 bar (abs).

17. The process of any one of embodiments 1 to 16, wherein the gas stream G(i) has a temperature in the range of from 50 to 1100 °C, preferably in the range of from 100 to 1000 °C, more preferably in the range of from 350 to 900 °C.

18. The process of any one of embodiments 1 to 17, wherein the feed gas stream F1(i), prior to passing through the separation stage SB(i), is passed through a heat exchanger H(i); wherein the temperature of F1(i) exiting H(i) is preferably lower than the temperature of F1(i) entering H(i).

19. The process of any one of embodiments 1 to 18, wherein the feed gas stream F1(i) has a $H_2$ to $NH_3$ molar ratio x(F1(i)) (calculated as $n(H_2):n(NH_3)$= x(F1(i))=x(G(i)) in the range of from 0.01:1 to 500:1, preferably in the range of from 0.05:1 to 200:1, more preferably in the range of from 2:1 to 50:1.

20. The process of any one of embodiments 1 to 19, wherein the feed gas stream F1(i) has a $H_2$ to $N_2$ molar ratio y(F1(i)) (calculated as $n(H_2):n(N_2)$= y(F1(i))= y(G(i))) in the range of from 0.01:1 to 5:1.

21. The process of any one of embodiments 1 to 20, wherein the feed gas stream F1(i) has a pressure in the range of from 10 to 100 bar (abs), preferably in the range of from 15 to 85 bar (abs), more preferably in the range of from 20 to 60 bar (abs).

22. The process of any one of embodiments 1 to 21, wherein the feed gas stream F1(i) has a temperature in the range of from 250 to 700 °C; preferably in the range of from 300 to 600 °C, more preferably in the range of from 350 to 500 °C, wherein said temperature is preferred after having being passed through H(i) as defined in embodiment 18.

23. The process of any one of embodiments 1 to 22, wherein the volume flow ratio of FS(i-1) to (F1(i)) is in the range of from 0.5:1 to 1:1, preferably in the range of from 0.50:1 to 0.95:1.

24. The process of any one of embodiments 1 to 23, wherein according to SB(i), the membrane unit M1(i) comprising at least one membrane has a $H_2/NH_3$ selectivity of at least 2500, preferably in the range of from 2,500 to 1,000,000, more preferably in the range of from 4,500 to 900,000, more preferably in the range of from 5,000 to 800,000, more preferably in the range of from 6,000 to 600,000; wherein, according to SB(i), the membrane unit M1(i) comprising at least one membrane preferably has a ratio of $H_2/N_2$ selectivity to $H_2/NH_3$ selectivity in the range of from 0.8:1 to 5:1, more preferably in the range of from 1.2:1 to 2:1.

25. The process of any one of embodiments 1 to 24, wherein, according to SB(i), the at least one membrane comprised in membrane unit M1(i) is a palladium metal membrane; wherein preferably according to SB(i), the at least one membrane comprised in membrane unit M1(i) has a $H_2$ permeance in the range of from 0.1 to 100 $Nm^3/(m^2\ h\ bar)$, more preferably in the range of from 0.5 to 75 $Nm^3/(m^2\ h\ bar)$, more preferably in the range of from 1 to 50 $Nm^3/(m^2\ h\ bar)$, more preferably in the range of from 2 to 40 $Nm^3/(m^2\ h\ bar)$, more preferably in the range of from 3 to 30 $Nm^3/(m^2\ h\ bar)$, more preferably in the range of from 4 to 20 $Nm^3/(m^2\ h\ bar)$, more preferably in the range of from 5 to 10 $Nm^3/(m^2\ h\ bar)$.

26. The process of any one of embodiments 1 to 25, wherein, according to SB(i), the at least one membrane comprised in membrane unit M1(i) is a palladium metal membrane.

27. The process of embodiment 26, wherein the palladium metal membrane comprises a palladium coating on a substrate, the palladium coating consisting of palladium having a purity of at least 97.5%, preferably of at least 98.5 %, more preferably in the range from 99.0 to 99.9 %, wherein preferably the substrate of the palladium metal membrane is selected from the group consisting of steel, stainless steel, borosilicate glass, alumina and zirconia.

28. The process of embodiment 26, wherein the palladium metal membrane comprises an alloy coating on a substrate, the alloy coating comprising, more preferably consisting of, Pd and one or more of Ag, Au, Ru, In, Cu and Y, more preferably Pd and one or more of Ag, Cu and Y, more preferably Pd and Ag;

wherein preferably from 0.50 wt.-% to 50 wt.-%, more preferably from 1 wt.-% to 45 wt.-%, more preferably from 3 wt.-% to 35 wt.-%, more preferably from 7 wt.-% to 30 wt.-%, more preferably from 8 wt.-% to 15 wt.-%, of the alloy coating consist of the metal other than palladium;
wherein more preferably the substrate of the palladium metal membrane is selected from the group consisting of steel, stainless steel, borosilicate glass, alumina and zirconia.

29. The process of any one of embodiments 1 to 28, wherein, according to SB(i), the pressure ratio $\varphi$ across the at least one membrane comprised in membrane unit M1(i), calculated as (pressure of feed gas stream F1(i)/ pressure of permeate gas stream P1(i)) at constant temperature, is in the range of from 1.5:1 to 50:1, more preferably in the range of from 2:1 to 40:1, more preferably in the range of from 2.5:1 to 35:1.

30. The process of any one of embodiments 1 to 29, wherein according to SB(i), the permeate gas stream P1(i) has a pressure in the range of from 3 to 30 bar(abs), preferably in the range of from 5 to 20 bar(abs), more preferably in the range of from 5 to 15 bar(abs).

31. The process of any one of embodiments 1 to 30, wherein according to SB(i), the permeate gas stream P1(i) has a temperature in the range of from 250 to 700 °C, preferably in the range of from 300 to 600 °C, more preferably in the range of from 350 to 500 °C.

32. The process of any one of embodiments 1 to 31, wherein, according to SB(i), the permeate gas stream P1(i) further comprises $NH_3$ and has a $H_2$ to $NH_3$ molar ratio x(P1(i)) (calculated as $n(H_2):n(NH_3)$= x(P1(i))>x(F1(i)) is greater 500:1, preferably in the range of from 500:1 to 100,000:1, more preferably in the range of from 1,000:1 to 90,000:1, more preferably in the range of from 15,000:1 to 80,000:1, more preferably in the range of from 20,000:1 to 60,000:1.

33. The process of any one of embodiments 1 to 32, wherein according to SB(i), the permeate gas stream P1(i) has a $H_2$ to $N_2$ molar ratio y(P1(i)) (calculated as $n(H_2):n(N_2)$= y(P1(i))<y(F1(i)) is greater than 500:1, preferably in the range of from 500:1 to 100,000:1, more preferably in the range of from 1000:1 to 90,000:1, more preferably in the range of from 15,000:1 to 80,000:1, more preferably in the range of from 20,000:1 to 60,000:1.

34. The process of any one of embodiments 1 to 33, wherein according to SB(i), the volume flow ratio of feed gas F1(i) to the permeate gas stream P1(i) calculated as (volume flow F1(i)/volume flow P1(i)) is in the range of from 1.5:1 to 50:1, preferably in the range of from 2:1 to 40:1, more preferably in the range of from 3:1 to 30:1.

35. The process of any one of embodiments 1 to 34, wherein according to SB(i), the retentate gas stream R1(i) has a pressure in the range of from 10 to 100 bar (abs), preferably in the range of from 15 to 85 bar (abs), more preferably in the range of from 20 to 60 bar (abs).

36. The process of any one of embodiments 1 to 35, wherein according to SB(i), the retentate gas stream R1(i) has a temperature in the range of from 250 to 700 °C, preferably in the range of from 300 to 600 °C, more preferably in the range of from 350 to 500 °C.

37. The process of any one of embodiments 1 to 36, wherein according to SB(i), the retentate gas stream R1(i) has a $H_2$ to $NH_3$ molar ratio x(R1(i)) (calculated as $n(H_2):n(NH_3)= x(R1(i))=x(F2)$) in the range of from 0.1:1 to 100:1, preferably in the range of from 0.5:1 to 60:1, more preferably in the range of from 1:1 to 10:1.

38. The process of any one of embodiments 1 to 37, wherein according to SB(i), the retentate gas stream R1(i) has a $H_2$ to $N_2$ molar ratio y(R1(i)) (calculated as $n(H_2):n(N_2)= y(R1(i))=y(F2)$) in the range of from 0.01:1 to 3:1, preferably in the range of from 0.25:1 to 2:1.

39. The process of any one of embodiments 1 to 38, wherein according to SB(i), the volume flow ratio of feed gas F1(i) to the retentate gas stream R1(i) calculated as (volume flow F1(i)/volume flow R1(i)) is in the range of from 1:1 to 5:1, preferably in the range of from 1:1 to 3.5:1, more preferably in the range of 1.02:1 to 2:1.

40. The process of anyone of embodiments 1 to 39, wherein, according to SB(i), the membrane unit M1(i) comprises two or more membranes, said membranes are connected in parallel and the feed gas stream F1(i) passes through said two or more membranes simultaneously and permeate gas stream P1(i) and retentate gas stream R1(i) are obtained simultaneously in parallel from said membranes.

41. The process of any one of embodiments 1 to 40, wherein according to SC(i), the feed gas stream F2(i) has a pressure in the range of from 10 to 100 bar (abs), preferably in the range of from 15 to 85 bar (abs), more preferably in the range of from 20 to 60 bar (abs).

42. The process of any one of embodiments 1 to 41, wherein according to SC(i), the feed gas stream F2(i) has a temperature in the range of from 250 to 700 °C, preferably in the range of from 300 to 600 °C, more preferably in the range of from 350 to 500 °C.

43. The process of any one of embodiments 1 to 42, wherein according to SC(i), the feed gas stream F2(i) has a $H_2$ to $NH_3$ molar ratio x(F2(i)) (calculated as $n(H_2):n(NH_3)= x(F2(i))=x(R1(i))$) in the range of from 0.1:1 to 100:1, preferably in the range of from 0.5:1 to 60:1, more preferably in the range of from 1:1 to 10:1.

44. The process of any one of embodiments 1 to 43, wherein according to SC(i), the feed gas stream F2(i) has a $H_2$ to $N_2$ molar ratio y(F2(i)) (calculated as $n(H_2):n(N_2)= y(F2(i))=y(R1(i))$) in the range of from 0.01:1 to 3:1, more preferably in the range of from 0.25:1 to 2:1.

45. The process of any one of embodiments 1 to 44, wherein according to SB(i) and SC(i), the volume flow ratio of F1(i) to R1(i) calculated as (volume flow F1(i)/ volume flow R1(i)) is equal to the volume flow ratio of F1(i) to F2(i) calculated as (volume flow F1(i)/volume flow F2(i)) and is in the range of from 1:1 to 5:1, more preferably in the range of from 1:1 to 3.5:1, more preferably in the range of 1.02:1 to 2:1.

46. The process of any one of embodiments 1 to 45, wherein according to SC(i), membrane unit M2(i) comprising at least one membrane has a $H_2/NH_3$ selectivity of at least 2,500, more preferably in the range of from 2,500 to 1,000,000, more preferably in the range of from 4,500 to 900,000, more preferably in the range of from 5,000 to 800,000, more preferably in the range of from 6,000 to 600,000; wherein preferably according to SC(i), membrane unit M2(i) comprising at least one membrane has a ratio of $H_2/N_2$ selectivity to $H_2/NH_3$ selectivity in the range of from 0.8:1 to 5:1, more preferably in the range of from 1.2:1 to 2:1.

47. The process of any one of embodiments 1 to 46, wherein according to SC(i), the at least one membrane comprised in membrane unit M2(i) is a palladium metal membrane; wherein preferably according to SC(i), the at least one membrane comprised in membrane unit M2(i) has a H2 permeance in the range of from 0.1 to 100 $Nm^3/(m^2 \text{ h bar})$, more preferably in the range of from 0.5 to 75 $Nm^3/(m^2 \text{ h bar})$, more preferably in the range of from 1 to 50 $Nm^3/(m^2 \text{ h bar})$, more preferably in the range of from 2 to 40 $Nm^3/(m^2 \text{ h bar})$, more preferably in the range of from 3 to 30 $Nm^3/(m^2 \text{ h bar})$, more preferably in the range of from 4 to 20 $Nm^3/(m^2 \text{ h bar})$, more preferably in the range of from 5 to 10 $Nm^3/(m^2 \text{ h bar})$.

48. The process of any one of embodiments 1 to 47, wherein, according to SC(i), the at least one membrane comprised in membrane unit M2(i) is a palladium metal membrane.

49. The process of embodiment 48, wherein the palladium metal membrane comprises a palladium coating on a substrate, the palladium coating consisting of palladium having a purity of at least 97.5%, preferably of at least 98.5 %, more preferably in the range of from 99.0 to 99.9 %, wherein preferably the substrate of the palladium metal membrane is selected from the group consisting of steel, stainless steel, borosilicate glass, alumina and zirconia.

50. The process of embodiment 48, wherein the palladium metal membrane comprises an alloy coating on a substrate, the alloy coating comprising, preferably consisting of, Pd and one or more of Ag, Au, Ru, In, Cu and Y, more preferably Pd and one or more of Ag, Cu and Y, more preferably Pd and Ag;
wherein preferably from 0.50 wt.-% to 50 wt.-%, more preferably from 1 wt.-% to 45 wt.-%, more preferably from 3 wt.-% to 35 wt.-%, more preferably from 7 wt.-% to 30 wt.-%, more preferably from 8 wt.-% to 15 wt.-%, of the alloy coating consist of the metal other than palladium, wherein more preferably the substrate of the palladium metal membrane is selected from the group consisting of steel, stainless steel, borosilicate glass, alumina and zirconia.

51. The process of any one of embodiments 1 to 50, wherein according to SC(i), the pressure ratio $\varphi$ across the at least one membrane comprised in membrane unit M2(i), calculated as (pressure of feed gas stream F2(i)/ pressure of permeate gas stream P2(i)) at constant temperature, is in the range of from 1.5:1 to 50:1, preferably in the range of from 2:1 to 40:1, more preferably in the range of from 2.5:1 to 35:1.

52. The process of any one of embodiments 1 to 51, wherein according to SC(i), the permeate gas stream P2(i) has a pressure in the range of from 1.1 to 30 bar(abs), preferably in the range of from 1.1 to 10 bar(abs), more preferably in the range of from 1.1 to 2.5 bar(abs).

53. The process of any one of embodiments 1 to 52, wherein according to SC(i), the permeate gas stream P2(i) has a temperature in the range of from 250 to 700 °C, preferably in the range of from 300 to 600 °C, more preferably in the range of from 350 to 500 °C.

54. The process of any one of embodiments 1 to 53, wherein according to SC(i), the permeate gas stream P2(i) further comprises $NH_3$ and has a $H_2$ to $NH_3$ molar ratio x(P2(i)) (calculated as $n(H_2):n(NH_3)= x(P2(i))>x(F2(i))$ is greater than 500:1, preferably in the range of from 500:1 to 100,000:1, more preferably in the range of from 1000:1 to 90,000:1, more preferably in the range of from 15,000:1 to 80,000:1, more preferably in the range of from 20,000:1 to 60,000:1.

55. The process of any one of embodiments 1 to 54, wherein according to SC(i), the permeate gas stream P2(i) further comprises $H_2$ and has a $H_2$ to $N_2$ molar ratio y(P2(i)) (calculated as $n(H_2):n(N_2)= y(P2(i))<y(F2(i))$ is greater than 500:1, preferably in the range of from 500:1 to 100,000:1, more preferably in the range of from 1000:1 to 90,000:1, more preferably in the range of from 15,000:1 to 80,000:1, more preferably in the range of from 20,000:1 to 60,000:1.

56. The process of any one of embodiments 1 to 55, wherein according to SC(i), the volume flow ratio of feed gas F2(i) to the permeate gas stream P2(i) calculated as (volume flow F2(i)/volume flow P2(i)) is in the range of from 1.5:1 to 50:1, preferably in the range of from 2:1 to 40:1, more preferably in the range of from 3:1 to 30:1.

57. The process of any one of embodiments 1 to 56, wherein according to SC(i), the retentate gas stream R2(i) has a pressure in the range of from 10 to 100 bar (abs), preferably in the range of from 15 to 85 bar (abs), more preferably in the range of from 20 to 60 bar (abs).

58. The process of any one of embodiments 1 to 57, wherein according to SC(i), the retentate gas stream R2(i) has a temperature in the range of from 250 to 700 °C, preferably in the range of from 300 to 600 °C, more preferably in the range of from 350 to 500 °C.

59. The process of any one of embodiments 1 to 58, wherein according to SC(i), the retentate gas stream R2(i) has a $H_2$ to $NH_3$ molar ratio x(R2(i)) (calculated as $n(H_2):n(NH_3)= x(R2(i))=x(FS(i))$ in the range of from 0.05:1 to 100:1, preferably in the range of from 0.1:1 to 30:1, more preferably in the range of from 0.2:1 to 5:1.

60. The process of any one of embodiments 1 to 59, wherein according to SC(i), the retentate gas stream R2(i) has a $H_2$ to $N_2$ molar ratio y(R2(i)) (calculated as $n(H_2):n(N_2)= y(R2(i))=y(FS(i))$ in the range of from 0.01:1 to 2:1, preferably in the range of from 0.03:1 to 2:1, more preferably in the range of from 0.05:1 to 1.5:1.

61. The process of any one of embodiments 1 to 60, wherein according to SC(i), the volume flow ratio of F2(i) to R2(i) calculated as (volume flow F2(i)/ volume flow R2(i)) is in the range of from 1:1 to 5:1, preferably in the range of from 1:1 to 3.5:1, more preferably in the range of from 1.02:1 to 2:1.

62. The process of any one of embodiments 1 to 61, wherein according to SC(i), the feed stream FS(i) has a pressure in the range of from 10 to 100 bar (abs), more preferably in the range of from 15 to 85 bar (abs), more preferably in the range of from 20 to 60 bar (abs).

63. The process of any one of embodiments 1 to 62, wherein according to SC(i), the feed stream FS(i) has a temperature in the range of from 250 to 700 °C, preferably in the range of from 300 to 600 °C, more preferably in the range of from 350 to 500 °C.

64. The process of any one of embodiments 1 to 63, wherein according to SC(i), the feed stream FS(i) has a $H_2$ to $NH_3$ molar ratio x(F2(i)) (calculated as $n(H_2):n(NH_3)$= x(FS(i))=x(R2(i))) in the range of from 0.05:1 to 100:1, preferably in the range of from 0.1:1 to 30:1, more preferably in the range of from 0.2:1 to 5:1.

65. The process of any one of embodiments 1 to 64, wherein according to SC(i), the feed stream FS(i) has a $H_2$ to $N_2$ molar ratio y(FS(i)) (calculated as $n(H_2):n(N_2)$= y(FS(i))=y(R2(i))) in the range of from 0.01:1 to 2:1, preferably in the range of from 0.03:1 to 2:1, more preferably in the range of from 0.05:1 to 1.5:1.

66. The process of any one of embodiments 1 to 65, wherein according to SC(i), the volume flow ratio of F2(i) to R2(i) calculated as (volume flow F2(i)/volume flow R2(i)) is equal to the volume flow ratio of F2(i) to FS(i) calculated as (volume flow F2(i)/ volume flow FS(i)) and is in the range of from 1:1 to 5:1, preferably in the range of from 1:1 to 3.5:1, more preferably in the range of 1.02:1 to 2:1 .

67. The process of any one of embodiments 1 to 66, wherein according to SC(n), the retentate gas stream R2(n) has a pressure in the range of from 10 to 100 bar (abs), preferably in the range of from 15 to 85 bar (abs), more preferably in the range of from 20 to 60 bar (abs).

68. The process of any one of embodiments 1 to 67, wherein according to SC(n), the retentate gas stream R2(n) has a temperature in the range of from 250 to 700 °C, preferably in the range of from 300 to 600 °C, more preferably in the range of from 350 to 500 °C.

69. The process of any one of embodiments 1 to 68, wherein according to SC(n), the retentate gas stream R2(n) has a $H_2$ to $NH_3$ molar ratio x(R2(i)) (calculated as $n(H_2):n(NH_3)$= x(R2(n)) in the range of from 0.05:1 to 100:1, preferably in the range of from 0.1:1 to 30:1, more preferably in the range of from 0.2:1 to 5:1.

70. The process of any one of embodiments 1 to 69, wherein according to SC(n), the retentate gas stream R2(n) has a $H_2$ to $N_2$ molar ratio y(R2(i)) (calculated as $n(H_2):n(N_2)$= y(R2(n)) in the range of from 0.01:1 to 2:1, preferably in the range of from 0.03:1 to 2:1, more preferably in the range of from 0.05:1 to 1.5:1.

71. The process of any one of embodiments 1 to 70, wherein according to SC(n), the volume flow ratio of F2(n) to R2(n) calculated as (volume flow F2(n)/ volume flow R2(n)) is in the range of from 1:1 to 5:1, preferably in the range of from 1:1 to 3.5:1, more preferably in the range of 1.02:1 to 2:1.

72. The process of anyone of embodiments 1 to 71, wherein, according to SC(i), the membrane unit M2(i) comprises two or more membranes, said membranes are connected in parallel and the feed gas stream F2(i) passes through said two or more membranes simultaneously and permeate gas stream P2(i) and retentate gas stream R2(i) are obtained simultaneously in parallel from said membranes.

73. The process of any one of embodiments 1 to 72, wherein the volume flow ratio of FS(i-1) to (FS(i)) is in the range of from 1.1:1 to 3:1, preferably in the range of 1.2:1 to 2.5:1.

74. The process of any one of embodiments 1 to 73, wherein the ratio of the pressure of permeate gas stream P1(i) to permeate gas stream P2(i) is in the range of from 50:1 to 1.5:1, more preferably in the range of 20:1 to 2:1, more preferably in the range of from 15:1 to 3:1, more preferably in the range of from 12:1 to 4:1.

75. The process of any one of embodiments 1 to 74, wherein the volume flow ratio of FS(n-1) to R2(n) is in the range of from 1.05:1 to 4:1, preferably in the range of from 1.1 to 3, more preferably in the range of from 1.5 to 2.5.

76. The process according to any one of embodiments 1 to 75, wherein, n=2, the apparatus for recovering $H_2$ from converted $NH_3$ comprises 2 serially coupled zones Z(1) and Z(2),

wherein zone Z(1) contains

- the conversion reactor CR(1) comprising the catalyst C(1) for converting $NH_3$ to give $H_2$,
- the first membrane unit M1(1) and
- the second membrane unit M2(1),

wherein CR(1) is located upstream of M1(1) and M2(1) is located downstream of M1(1) in Z(1), and wherein zone Z(2) contains

- the conversion reactor CR(2) comprising the catalyst C(2) for converting $NH_3$ to give $H_2$,
- the first membrane unit M1(2) and
- the second membrane unit M2(2),

wherein CR(2) is located upstream of M1(2) and M2(2) is located downstream of M1(2) in Z(2), wherein Z(1) is the most upstream zone and Z(2) is the most downstream zone, the process comprising

(a) providing a feed stream FS(0) comprising $NH_3$;
(b) 2 successive process stages S(1) and S(2)

wherein S(1) comprises

a conversion stage SA(1), comprising

- feeding gas stream FS(0) into a conversion reactor CR(1) comprised in Z(1) and bringing said stream FS(0) in contact with C(1) in CR(1), obtaining a gas stream G(1) which comprises $NH_3$, $N_2$ and $H_2$, the gas stream G(1) having a molar ratio $n(H_2):n(NH_3)=x(G(1))$;
- removing the gas stream G(1) comprising $NH_3$, $N_2$ and $H_2$ from CR(1);
- passing the gas stream G(1) as a feed gas stream F1(1) through a separation stage SB(1), F1(1) having the same chemical composition as G(1) and the molar ratio $x(G(1))=x(F1(1))$;

a separation stage SB(1), comprising

- passing the feed gas stream F1(1) through a first membrane unit M1(1), of Z(1), comprising at least one membrane,
the at least one membrane having a $H_2/NH_3$ selectivity of at least 2000, at a pressure ratio $\varphi$ greater than 1 across said at least one membrane, calculated as (pressure of feed gas stream F1(1)/ pressure of permeate gas stream P1(1)) at constant temperature, obtaining

  ○ a permeate gas stream P1(1) comprising $H_2$; and
  ○ a retentate gas stream R1(1) comprising $H_2$, $N_2$ and $NH_3$, wherein the molar ratio $n(H_2):n(NH_3)=x(R1(1))$; $x(R1(1))<x(F1(1))$;

- passing the retentate gas stream R1(1) as a feed gas stream F2(1), through a separation stage SC(1), F2(1) having the same chemical and physical composition as R1(1) and the molar ratio $x(R1(1))=x(F2(1))$;

a separation stage SC(1), comprising

- passing the feed gas stream F2(1) through a second membrane unit M2(1) of Z(1) comprising at least one membrane, the at least one membrane having a $H_2/NH_3$ selectivity of at least 2000, at a pressure ratio $\varphi$ of greater than 1 across said at least one membrane, calculated as (pressure of feed gas stream F2(1)/ pressure of permeate gas stream P2(1)) at constant temperature, obtaining

○ a permeate gas stream P2(1) comprising $H_2$; and
○ a retentate gas stream R2(1) comprising $H_2$, $N_2$ and $NH_3$, wherein the molar ratio $n(H_2):n(NH_3)=x(R2(1))$; $x(R2(1))<x(F2(1))$;

- removing the gas stream R2(1) from Z(1);

wherein, the gas stream R2(1) is removed as a feed stream FS(1), FS(1) having the same chemical and physical composition as R2(1) and the molar ratio $x(R2(1))=x(FS(1))$; and
wherein S(2) comprises

a conversion stage SA(2), comprising

- feeding gas stream FS(1) into a conversion reactor CR(2) comprised in Z(2) and bringing said stream FS(1) in contact with C(2) in CR(2), obtaining a gas stream G(2) which comprises $NH_3$, $N_2$ and $H_2$, the gas stream G(2) having a molar ratio $n(H_2):n(NH_3)=x(G(2))$;
- removing the gas stream G(2) comprising $NH_3$, $N_2$ and $H_2$ from CR(2);
- passing the gas stream G(2) as a feed gas stream F1(2) through a separation stage SB(2), F1(2) having the same chemical composition as G(2) and the molar ratio $x(G(2))=x(F1(2))$;

a separation stage SB(2), comprising

- passing the feed gas stream F1(2) through a first membrane unit M1(2), of Z(2), comprising at least one membrane,
the at least one membrane having a $H_2/NH_3$ selectivity of at least 2000, at a pressure ratio φ greater than 1 across said at least one membrane, calculated as (pressure of feed gas stream F1(2)/ pressure of permeate gas stream P1(2)) at constant temperature, obtaining

○ a permeate gas stream P1(2) comprising $H_2$; and
○ a retentate gas stream R1(2) comprising $H_2$, $N_2$ and $NH_3$, wherein the molar ratio $n(H_2):n(NH_3)=x(R1(2))$; $x(R1(2))<x(F1(2))$;

- passing the retentate gas stream R1(2) as a feed gas stream F2(2), through a separation stage SC(2), F2(2) having the same chemical and physical composition as R1(2) and the molar ratio $x(R1(2))=x(F2(2))$;

a separation stage SC(2), comprising

- passing the feed gas stream F2(2) through a second membrane unit M2(2) of Z(2) comprising at least one membrane, the at least one membrane having a $H_2/NH_3$ selectivity of at least 2000,
at a pressure ratio φ of greater than 1 across said at least one membrane, calculated as (pressure of feed gas stream F2(2)/ pressure of permeate gas stream P2(2)) at constant temperature, obtaining

○ a permeate gas stream P2(2) comprising $H_2$; and
○ a retentate gas stream R2(2) comprising $H_2$, $N_2$ and $NH_3$, wherein the molar ratio $n(H_2):n(NH_3)=x(R2(2))$; $x(R2(2))<x(F2(2))$;

- removing the gas stream R2(2) from Z(2);

wherein the gas stream R2(2) is removed as a product gas stream;
wherein the volume flow ratio of FS(0) to FS(1) is in the range of from 1.05:1 to 4:1;
wherein preferably the volume flow ratio of FS(1) to R2(2) is in the range of from 1.05:1 to 4:1.

77. The process according to any one of embodiments 1 to 76, wherein n=3, the apparatus for recovering $H_2$ from converted $NH_3$ comprises 3 serially coupled zones Z(1), Z(2) and Z(3),

wherein zone Z(1) contains

- the conversion reactor CR(1) comprising the catalyst C(1) for converting $NH_3$ to give $H_2$,

- the first membrane unit M1(1) and
- the second membrane unit M2(1),

wherein CR(1) is located upstream of M1(1) and M2(1) is located downstream of M1(1) in Z(1), wherein zone Z(2) contains

- the conversion reactor CR(2) comprising the catalyst C(2) for converting $NH_3$ to give $H_2$,
- the first membrane unit M1(2) and
- the second membrane unit M2(2),

wherein CR(2) is located upstream of M1(2) and M2(2) is located downstream of M1(2) in Z(2), and wherein zone Z(3) contains

- the conversion reactor CR(3) comprising the catalyst C(3) for converting $NH_3$ to give $H_2$,
- the first membrane unit M1(3) and
- the second membrane unit M2(3),

wherein CR(3) is located upstream of M1(3) and M2(3) is located downstream of M1(3) in Z(3), wherein Z(1) is the most upstream zone, Z(3) is the most downstream zone, Z(2) is downstream of Z(1) and upstream of Z(3), the process comprising

(a) providing a feed gas stream FS(0) comprising $NH_3$;
(b) 3 successive process stages S(1), S(2) and S(3)

wherein S(1) comprises

a conversion stage SA(1), comprising

- feeding gas stream FS(0) into a conversion reactor CR(1) comprised in Z(1) and bringing said stream FS(0) in contact with C(1) in CR(1), obtaining a gas stream G(1) which comprises $NH_3$, $N_2$ and $H_2$, the gas stream G(1) having a molar ratio $n(H_2):n(NH_3)=x(G(1))$;
- removing the gas stream G(1) comprising $NH_3$, $N_2$ and $H_2$ from CR(1);
- passing the gas stream G(1) as a feed gas stream F1(1) through a separation stage SB(1), F1(1) having the same chemical composition as G(1) and the molar ratio $x(G(1))=x(F1(1))$;

a separation stage SB(1), comprising

- passing the feed gas stream F1(1) through a first membrane unit M1(1), of Z(1), comprising at least one membrane, the at least one membrane having a $H_2/NH_3$ selectivity of at least 2000, at a pressure ratio $\varphi$ greater than 1 across said at least one membrane, calculated as (pressure of feed gas stream F1(1)/ pressure of permeate gas stream P1(1)) at constant temperature, obtaining

    ○ a permeate gas stream P1(1) comprising $H_2$; and
    ○ a retentate gas stream R1(1) comprising $H_2$, $N_2$ and $NH_3$, wherein the molar ratio $n(H_2):n(NH_3)=x(R1(1))$; $x(R1(1))<x(F1(1))$;

- passing the retentate gas stream R1(1) as a feed gas stream F2(1), through a separation stage SC(1), F2(1) having the same chemical and physical composition as R1(1) and the molar ratio $x(R1(1))=x(F2(1))$;

a separation stage SC(1), comprising

- passing the feed gas stream F2(1) through a second membrane unit M2(1) of Z(1) comprising at least one membrane, the at least one membrane having a $H_2/NH_3$ selectivity of at least 2000, at a pressure ratio $\varphi$ of greater than 1 across said at least one membrane, calculated as (pressure of feed gas stream F2(1)/ pressure of permeate gas stream P2(1)) at constant temperature, obtaining

◦ a permeate gas stream P2(1) comprising $H_2$; and
◦ a retentate gas stream R2(1) comprising $H_2$, $N_2$ and $NH_3$, wherein the molar ratio $n(H_2):n(NH_3)=x(R2(1))$; $x(R2(1))<x(F2(1))$;

- removing the gas stream R2(1) from Z(1);

wherein the gas stream R2(1) is removed as a feed stream FS(1), FS(1) having the same chemical and physical composition as R2(1) and the molar ratio $x(R2(1))=x(FS(1))$; and
wherein S(2) comprises

a conversion stage SA(2), comprising

- feeding the gas stream FS(1) into a conversion reactor CR(2) comprised in Z(2) and bringing said stream FS(1) in contact with C(2) in CR(2), obtaining a gas stream G(2) which comprises $NH_3$, $N_2$ and $H_2$, the gas stream G(2) having a molar ratio $n(H_2):n(NH_3)=x(G(2))$;
- removing the gas stream G(2) comprising $NH_3$, $N_2$ and $H_2$ from CR(2);
- passing the gas stream G(2) as a feed gas stream F1(2) through a separation stage SB(2), F1(2) having the same chemical composition as G(2) and the molar ratio $x(G(2))=x(F1(2))$;

a separation stage SB(2), comprising

- passing the feed gas stream F1(2) through a first membrane unit M1(2), of Z(2), comprising at least one membrane,
the at least one membrane having a $H_2/NH_3$ selectivity of at least 2000, at a pressure ratio $\varphi$ greater than 1 across said at least one membrane, calculated as (pressure of feed gas stream F1(2)/ pressure of permeate gas stream P1(2)) at constant temperature, obtaining

◦ a permeate gas stream P1(2) comprising $H_2$; and
◦ a retentate gas stream R1(2) comprising $H_2$, $N_2$ and $NH_3$, wherein the molar ratio $n(H_2):n(NH_3)=x(R1(2))$; $x(R1(2))<x(F1(2))$;

- passing the retentate gas stream R1(2) as a feed gas stream F2(2), through a separation stage SC(2), F2(2) having the same chemical and physical composition as R1(2) and the molar ratio $x(R1(2))=x(F2(2))$;

a separation stage SC(2), comprising

- passing the feed gas stream F2(2) through a second membrane unit M2(2) of Z(2) comprising at least one membrane, the at least one membrane having a $H_2/NH_3$ selectivity of at least 2000,
at a pressure ratio $\varphi$ of greater than 1 across said at least one membrane, calculated as (pressure of feed gas stream F2(2)/ pressure of permeate gas stream P2(2)) at constant temperature, obtaining

◦ a permeate gas stream P2(2) comprising $H_2$; and
◦ a retentate gas stream R2(2) comprising $H_2$, $N_2$ and $NH_3$, wherein the molar ratio $n(H_2):n(NH_3)=x(R2(2))$; $x(R2(2))<x(F2(2))$;

- removing the gas stream R2(2) from Z(2);

wherein the gas stream R2(2) is removed as a feed stream FS(2), FS(2) having the same chemical and physical composition as R2(2) and the molar ratio $x(R2(2))=x(FS(2))$; and
wherein S(3) comprises

a conversion stage SA(3), comprising

- feeding gas stream FS(2) into a conversion reactor CR(3) comprised in Z(3) and bringing said stream FS(2) in contact with C(3) in CR(3), obtaining a gas stream G(3) which comprises $NH_3$, $N_2$ and $H_2$, the gas stream G(3) having a molar ratio $n(H_2):n(NH_3)=x(G(3))$;
- removing the gas stream G(3) comprising $NH_3$, $N_2$ and $H_2$ from CR(3);

- passing the gas stream G(3) as a feed gas stream F1(3) through a separation stage SB(3), F1(3) having the same chemical composition as G(3) and the molar ratio x(G(3))=x(F1(3));

a separation stage SB(3), comprising

- passing the feed gas stream F1(3) through a first membrane unit M1(3), of Z(3), comprising at least one membrane,
the at least one membrane having a $H_2/NH_3$ selectivity of at least 2000, at a pressure ratio $\varphi$ greater than 1 across said at least one membrane, calculated as (pressure of feed gas stream F1(3)/ pressure of permeate gas stream P1(3)) at constant temperature, obtaining

   ◦ a permeate gas stream P1(3) comprising $H_2$; and
   ◦ a retentate gas stream R1(3) comprising $H_2$, $N_2$ and $NH_3$, wherein the molar ratio $n(H_2):n(NH_3)=x(R1(3))$; x(R1(3))<x(F1(3));

- passing the retentate gas stream R1(3) as a feed gas stream F2(3), through a separation stage SC(3), F2(3) having the same chemical and physical composition as R1(3) and the molar ratio x(R1(3))=x(F2(3));

a separation stage SC(3), comprising

- passing the feed gas stream F2(3) through a second membrane unit M2(3) of Z(3) comprising at least one membrane, the at least one membrane having a $H_2/NH_3$ selectivity of at least 2000,
at a pressure ratio $\varphi$ of greater than 1 across said at least one membrane, calculated as (pressure of feed gas stream F2(3)/ pressure of permeate gas stream P2(3)) at constant temperature, obtaining

   ◦ a permeate gas stream P2(3) comprising $H_2$; and
   ◦ a retentate gas stream R2(3) comprising $H_2$, $N_2$ and $NH_3$, wherein the molar ratio $n(H_2):n(NH_3)=x(R2(3))$; x(R2(3))<x(F2(3));

- removing the gas stream R2(3) from Z(3);

wherein, the gas stream R2(3) is removed as a product gas stream;
wherein the volume flow ratio of FS(0) to FS(1) is in the range of from 1.05:1 to 4:1,
wherein the volume flow ratio of FS(1) to FS(2) is in the range of from 1.05:1 to 4:1;
wherein preferably the volume flow ratio of FS(1) to R2(2) is in the range of from 1.05:1 to 4:1.

78. A process for recovering $H_2$ from converting $NH_3$ in an apparatus comprising a zone Z(1) containing a conversion reactor CR(1) comprising a catalyst C(1) for converting $NH_3$ to give $H_2$, a first membrane unit M1(1) and a second membrane unit M2(1),

wherein CR(1) is located upstream of M1(1) and M2(1) is located downstream of M1(1) in Z(1),
the process comprising

(a) providing a feed gas stream FS(0) comprising $NH_3$;
(b) a process stage S(1)

wherein S(1) comprises

a conversion stage SA(1), comprising

- feeding gas stream FS(0) into a conversion reactor CR(1) comprised in Z(i) and bringing said stream FS(0) in contact with C(1) in CR(1), obtaining a gas stream G(i) which comprises $NH_3$, $N_2$ and $H_2$, the gas stream G(1) having a molar ratio $n(H_2):n(NH_3)=x(G(1))$;
- removing the gas stream G(1) comprising $NH_3$, $N_2$ and $H_2$ from CR(1);
- passing the gas stream G(1) as a feed gas stream F1(1) through a separation stage SB(1), F1(1) having the same chemical composition as G(1) and the molar ratio x(G(1))=x(F1 (1));

a separation stage SB(1), comprising

- passing the feed gas stream F1(1) through a first membrane unit M1(1), of Z(1), comprising at least one membrane,
  the at least one membrane having a $H_2/NH_3$ selectivity of at least 2000, at a pressure ratio $\varphi$ greater than 1 across said at least one membrane, calculated as (pressure of feed gas stream F1 (i)/ pressure of permeate gas stream P1(1)) at constant temperature, obtaining

  - a permeate gas stream P1(1) comprising $H_2$; and
  - a retentate gas stream R1(1) comprising $H_2$, $N_2$ and $NH_3$, wherein the molar ratio $n(H_2):n(NH_3)=x(R1(1))$; $x(R1(1))<x(F1(1))$;

- passing the retentate gas stream R1(1) as a feed gas stream F2(1), through a separation stage SC(1), F2(1) having the same chemical and physical composition as R1(1) and the molar ratio $x(R1(1))=x(F2(1))$;

a separation stage SC(1), comprising

- passing the feed gas stream F2(1) through a second membrane unit M2(1) of Z(i) comprising at least one membrane, the at least one membrane having a $H_2/NH_3$ selectivity of at least 2000,
  at a pressure ratio $\varphi$ of greater than 1 across said at least one membrane, calculated as (pressure of feed gas stream F2(1)/ pressure of permeate gas stream P2(1)) at constant temperature, obtaining

  - a permeate gas stream P2(1) comprising $H_2$; and
  - a retentate gas stream R2(1) comprising $H_2$, $N_2$ and $NH_3$, wherein the molar ratio $n(H_2):n(NH_3)=x(R2(1))$; $x(R2(1))<x(F2(1))$;

- removing the gas stream R2(1) from Z(1);

wherein the gas stream R2(1) is removed from Z(1) as a product gas stream;
wherein the volume flow ratio of FS(0) to R2(1) is in the range of from 1.05:1 to 4:1.

79. The process of embodiment 78, having the ranges and parameters defined for the alternative with two or more zones according to embodiments 1 to 77.

80. An apparatus for recovering $H_2$ from converting $NH_3$, the apparatus comprising

n zones Z(i), with i= 1...n, with n$\geq$1,
wherein, when n$\geq$2, the n zones Z(i) are serially coupled and Z(1) is the most upstream zone and Z(n) is the most downstream zone,
wherein each zone Z(i) comprises
a conversion reactor unit U.CR(i) comprising

- a supplying means for providing a feed stream FS(i-1) comprising $NH_3$ to a conversion reactor CR(i);
- a conversion reactor CR(i) for converting $NH_3$ to a gas stream G(i) comprising $NH_3$, $N_2$ and $H_2$, the conversion reactor CR(i) comprising a conversion catalyst C(i);
- an outlet means for removing the gas stream G(i) from CR(i) as a feed gas stream F1(i) to a membrane separation unit U.M1(i);

a first membrane separation unit U.M1(i) comprising

- a means for passing a feed gas stream F1(i) to the first membrane unit M1(i);
- said membrane unit comprising at least one membrane, the at least one membrane having a $H_2/NH_3$ selectivity of at least 2000;
- an outlet means for removing a permeate gas stream P1(i) from the membrane unit M1(i);
- an outlet means for removing a retentate gas stream R1(i) from the membrane unit M1(i);

a second membrane separation unit U.M2(i) comprising

- a means for passing retentate gas stream R1(i) as a feed gas stream F2(i) to the second membrane unit M2(i);
- said membrane unit comprising at least one membrane, the at least one membrane having a $H_2/NH_3$ selectivity of at least 2000;
- an outlet means for removing a permeate gas stream P2(i) from the membrane unit M2(i);

an outlet means for removing a retentate gas stream R2(i) from Z(i); and,

when n≥2 and i≠n, a means for passing R2(i) removed from Z(i), as a feed stream FS(i), into Z(i+1);

wherein U.CR(i) is located upstream of U.M1(i) and U.M2(i) is located downstream of U.M1(i) in Z(i).

81. The apparatus of embodiment 80, wherein n = 1 to 10, preferably n = 1 to 5, more preferably n = 1, 2, 3 or 4, more preferably n = 1 or 2 or 3.

82. The apparatus of embodiment 80 or 81, wherein neither a vacuum apparatus nor a compressor is disposed downstream of the conversion reactor CR(i) according to U.CR(i); preferably wherein none of the feed gases, permeate streams and/or retentate streams for carrying hydrogen have a compressor or vacuum apparatus connected to or in operation with any of the units of the apparatus.

83. The apparatus of any one of embodiments 80 to 82,wherein the conversion reactor unit U.CR(i) comprises a heating means for heating the conversion reactor CR(i) to a temperature in the range of from 50 to 1100 °C, preferably in the range of from 100 to 1000 °C, more preferably in the range of from 350 to 900 °C.

84. The apparatus of any one of embodiments 80 to 83, wherein conversion catalyst C(i) comprises, preferably consists of, a transition metal supported on a refractory support material.

85. The apparatus of embodiment 84, wherein the transition metal is selected from the group consisting of Fe, Cu, Ni, Co, Ru, Ag, Pd, Rh, Pt, Ir including combinations of two or more thereof, preferably selected from the group consisting of Ni, Co, Rh and Ru including combinations of two or more thereof, more preferably is Ni, Co or Ru, more is Ru.

86. The apparatus of either embodiment 84 or 85, wherein the refractory support material is selected from the group consisting of zeolite, alumina, silica, titania, zirconia, ceria, lanthana, praseodymium oxide, neodymium oxide, yttrium oxide, activated carbon, carbon nanotubes and a combination of two or more thereof, preferably selected from the group consisting alumina, silica, titania, zirconia and a combination of two or more thereof, more preferably is alumina or zirconia.

87. The apparatus of any one of embodiments 84 to 86, wherein the transition metal catalyst supported on a refractory support material is promoted, preferably with a metal selected from the group consisting of lithium, sodium, potassium, cesium, lanthanum, yttrium, neodymium, praseodymium and a combination of two or more thereof, more preferably selected from the group consisting of lithium, sodium, potassium, cesium, and a combination of two or more thereof, more preferably is potassium or cesium.

88. The apparatus of any one of embodiments 80 to 87, wherein the conversion catalyst C(i) is a molding.

89. The apparatus of any one of embodiments 80 to 88, wherein the conversion reactor unit U.CR(i) comprises a heat exchanging means H(i) disposed downstream of the outlet means for removing the gas stream G(i) from CR(i) and disposed upstream of the means for passing a feed gas stream F1(i) to the first membrane unit M1(i).

90. The apparatus of any one of embodiments 80 to 89, wherein the conversion reactor unit U.CR(i) comprises a heat exchanging means H(i) for adjusting the temperature of feed gas stream F1(i) to a range of from 250 to 700 °C, preferably in the range of from 300 to 600 °C, more preferably in the range of from 350 to 500 °C.

91. The apparatus of any one of embodiments 80 to 90, wherein the membrane unit M1(i) comprising at least one membrane has a $H_2/NH_3$ selectivity of at least 2,500, preferably in the range of from 2,500 to 1,000,000, more preferably in the range of from 4,500 to 900,000, more preferably in the range of from 5000 to 800,000, more preferably in the range of from 6000 to 600,000;

wherein preferably the membrane unit M1(i) comprising at least one membrane has a ratio of $H_2/N_2$ selectivity to $H_2/NH_3$ selectivity in the range of from 0.8:1 to 5:1, more preferably in the range of from 1.2:1 to 2:1.

92. The apparatus of any one of embodiments 80 to 91, wherein the at least one membrane comprised in membrane unit M1(i) is a palladium metal membrane; wherein preferably the at least one membrane comprised in membrane unit M1(i) has a $H_2$ permeance in the range of from 0.1 to 100 $Nm^3/(m^2 \, h \, bar)$, more preferably in the range of from 0.5 to 75 $Nm^3/(m^2 \, h \, bar)$, more preferably in the range of from 1 to 50 $Nm^3/(m^2 \, h \, bar)$, more preferably in the range of from 2 to 40 $Nm^3/(m^2 \, h \, bar)$, more preferably in the range of from 3 to 30 $Nm^3/(m^2 \, h \, bar)$, more preferably in the range of from 4 to 20 $Nm^3/(m^2 \, h \, bar)$, more preferably in the range of from 5 to 10 $Nm^3/(m^2 \, h \, bar)$

93. The process of any one of embodiments 80 to 92, wherein the at least one membrane comprised in membrane unit M1(i) is a palladium metal membrane.

94. The process of embodiment 93, wherein the palladium metal membrane comprises a palladium coating on a substrate, the palladium coating consisting of palladium having a purity of at least 97.5%, preferably of at least 98.5 %, more preferably in the range of from 99.0 to 99.9 %, wherein preferably the substrate of the palladium metal membrane is selected from the group consisting of steel, stainless steel, borosilicate glass, alumina and zirconia.

95. The process of embodiment 93, wherein the palladium metal membrane comprises an alloy coating on a substrate, the alloy coating comprising, preferably consisting of, Pd and one or more of Ag, Au, Ru, In, Cu and Y, more preferably Pd and one or more of Ag, Cu and Y, more preferably Pd and Ag;
wherein preferably from 0.50 wt.-% to 50 wt.-%, more preferably from 1 wt.-% to 45 wt.-%, more preferably from 3 wt.-% to 35 wt.-%, more preferably from 7 wt.-% to 30 wt.-%, more preferably from 8 wt.-% to 15 wt.-%, of the alloy coating consist of the metal other than palladium, wherein more preferably the substrate of the palladium metal membrane is selected from the group consisting of steel, stainless steel, borosilicate glass, alumina and zirconia.

96. The apparatus of anyone of embodiments 80 to 95, wherein the membrane unit M1(i) comprises two or more membranes, said membranes are connected in parallel to the means for passing feed gas stream F1(i) to the first membrane unit M1(i) and connected in parallel to the outlet means for removing a permeate gas stream P1(i) from the first membrane unit M1(i) and connected in parallel to the outlet means for removing the retentate gas stream R1(i) from the first membrane unit M1(i).

97. The apparatus of any one of embodiments 80 to 96, wherein the membrane unit M2(i) comprising at least one membrane has a $H_2/NH_3$ selectivity of at least 2500, more preferably in the range of from 2500 to 1,000,000, more preferably in the range of from 4500 to 900,000, more preferably in the range of from 5000 to 800,000, more preferably in the range of from 6000 to 600,000;
wherein preferably the membrane unit M2(i) comprising at least one membrane has a ratio of $H_2/N_2$ selectivity to $H_2/NH_3$ selectivity in the range of from 0.8:1 to 5:1, more preferably in the range of from 1.2:1 to 2:1.

98. The apparatus of any one of embodiments 80 to 97, wherein the at least one membrane comprised in membrane unit M2(i) is a palladium metal membrane; wherein preferably the at least one membrane comprised in membrane unit M2(i) has a $H_2$ permeance in the range of from 0.1 to 100 $Nm^3/(m^2 \, h \, bar)$, more preferably in the range of from 0.5 to 75 $Nm^3/(m^2 \, h \, bar)$, more preferably in the range of from 1 to 50 $Nm^3/(m^2 \, h \, bar)$, more preferably in the range of from 2 to 40 $Nm^3/(m^2 \, h \, bar)$, more preferably in the range of from 3 to 30 $Nm^3/(m^2 \, h \, bar)$, more preferably in the range of from 4 to 20 $Nm^3/(m^2 \, h \, bar)$, more preferably in the range of from 5 to 10 $Nm^3/(m^2 \, h \, bar)$

99. The process of any one of embodiments 80 to 98, wherein the at least one membrane comprised in membrane unit M2(i) is a palladium metal membrane.

100. The process of embodiment 99, wherein the palladium metal membrane comprises a palladium coating on a substrate, the palladium coating consisting of palladium having a purity of at least 97.5%, preferably of at least 98.5 %, more preferably in the range of from 99.0 to 99.9 %, wherein preferably the substrate of the palladium metal membrane is selected from the group consisting of steel, stainless steel, borosilicate glass, alumina and zirconia.

101. The process of embodiment 99, wherein the palladium metal membrane comprises an alloy coating on a substrate, the alloy coating comprising, preferably consisting of, Pd and one or more of Ag, Au, Ru, In, Cu and Y, more preferably Pd and one or more of Ag, Cu and Y, more preferably Pd and Ag;
wherein preferably from 0.50 wt.-% to 50 wt.-%, more preferably from 1 wt.-% to 45 wt.-%, more preferably from 3 wt.-% to 35 wt.-%, more preferably from 7 wt.-% to 30 wt.-%, more preferably from 8 wt.-% to 15 wt.-%, of the alloy coating consist of the metal other than palladium, wherein preferably the substrate of the palladium metal membrane is selected from the group consisting of steel, stainless steel, borosilicate glass, alumina and zirconia.

102. The apparatus of anyone of embodiments 80 to 101, wherein the membrane unit M2(i) comprises two or more membranes, said membranes are connected in parallel to the means for passing feed gas stream F2(i) to the second membrane unit M1(i) and connected in parallel to the outlet means for removing a permeate gas stream P2(i) from the second membrane unit M2(i) and connected in parallel to the outlet means for removing the retentate gas stream R2(i) from the second membrane unit M2(i).

103. The apparatus of any one of embodiments 80 to 102, wherein, n=2, the apparatus comprises 2 serially coupled zones Z(1) and Z(2), wherein Z(1) is the most upstream zone and Z(2) is the most downstream zone,

wherein zone Z(1) comprises
a conversion reactor unit U.CR(1) comprising

- a supplying means for providing a feed stream FS(0) comprising $NH_3$ to a conversion reactor CR(1);
- a conversion reactor CR(1) for converting $NH_3$ to a gas stream G(1) comprising $NH_3$, $N_2$ and $H_2$, the conversion reactor CR(1) comprising a conversion catalyst C(1);
- an outlet means for removing the gas stream G(1) from CR(1) as a feed gas stream F1(1) to a membrane separation unit U.M1(1);

a first membrane separation unit U.M1(1) comprising

- a means for passing a feed gas stream F1 (1) to the first membrane unit M1 (1);
- said membrane unit comprising at least one membrane, the at least one membrane having a $H_2/NH_3$ selectivity of at least 2000;
- an outlet means for removing a permeate gas stream P1(1) from the membrane unit M1(1);
- an outlet means for removing a retentate gas stream R1(1) from the membrane unit M1(1);

a second membrane separation unit U.M2(1) comprising

- a means for passing retentate gas stream R1(1) as a feed gas stream F2(1) to the second membrane unit M2(1);
- said membrane unit comprising at least one membrane, the at least one membrane having a $H_2/NH_3$ selectivity of at least 2000;
- an outlet means for removing a permeate gas stream P2(1) from the membrane unit M2(1);

an outlet means for removing a retentate gas stream R2(1) from Z(1);
a means for passing R2(1), as a feed stream FS(1), removed from Z(1) into Z(2),
wherein U.CR(1) is located upstream of U.M1(1) and U.M2(1) is located downstream of U.M1(1) in Z(1),
wherein zone Z(2) comprises
a conversion reactor unit U.CR(2) comprising

- a supplying means for providing a feed stream FS(1) comprising $NH_3$ to a conversion reactor CR(2);
- a conversion reactor CR(2) for converting $NH_3$ to a gas stream G(2) comprising $NH_3$, $N_2$ and $H_2$, the conversion reactor CR(2) comprising a conversion catalyst C(2);
- an outlet means for removing the gas stream G(2) from CR(2) as a feed gas stream F1(2) to a membrane separation unit U.M1(2);

a first membrane separation unit U.M1(2) comprising

- a means for passing a feed gas stream F1(2) to the first membrane unit M1(2);
- said membrane unit comprising at least one membrane, the at least one membrane having a $H_2/NH_3$ selectivity of at least 2000;
- an outlet means for removing a permeate gas stream P1(2) from the membrane unit M1(2);
- an outlet means for removing a retentate gas stream R1(2) from the membrane unit M1(2);

a second membrane separation unit U.M2(2) comprising

- a means for passing retentate gas stream R1(2) as a feed gas stream F2(2) to the second membrane unit M2(2);

- said membrane unit comprising at least one membrane, the at least one membrane having a $H_2/NH_3$ selectivity of at least 2000;
- an outlet means for removing a permeate gas stream P2(2) from the membrane unit M2(2);

an outlet means for removing a retentate gas stream R2(2) from Z(2),
wherein U.CR(2) is located upstream of U.M1(2) and U.M2(2) is located downstream of U.M1(2) in Z(2),.

104. The apparatus of any one of embodiments 80 to 103, wherein the apparatus comprises 3 serially coupled zones Z(1), Z(2) and Z(3),

wherein Z(1) is the most upstream zone, Z(3) is the most downstream zone,
wherein zone Z(1) comprises
a conversion reactor unit U.CR(1) comprising

- a supplying means for providing a feed stream FS(0) comprising $NH_3$ to a conversion reactor CR(1);
- a conversion reactor CR(1) for converting $NH_3$ to a gas stream G(1) comprising $NH_3$, $N_2$ and $H_2$, the conversion reactor CR(1) comprising a conversion catalyst C(1);
- an outlet means for removing the gas stream G(1) from CR(1) as a feed gas stream F1(1) to a membrane separation unit U.M1(1);

a first membrane separation unit U.M1(1) comprising

- a means for passing a feed gas stream F1 (1) to the first membrane unit M1 (1);
- said membrane unit comprising at least one membrane, the at least one membrane having a $H_2/NH_3$ selectivity of at least 2000;
- an outlet means for removing a permeate gas stream P1(1) from the membrane unit M1(1);
- an outlet means for removing a retentate gas stream R1(1) from the membrane unit M1(1);

a second membrane separation unit U.M2(1) comprising

- a means for passing retentate gas stream R1(1) as a feed gas stream F2(1) to the second membrane unit M2(1);
- said membrane unit comprising at least one membrane, the at least one membrane having a $H_2/NH_3$ selectivity of at least 2000;
- an outlet means for removing a permeate gas stream P2(1) from the membrane unit M2(1);

an outlet means for removing a retentate gas stream R2(1) from Z(1);
a means for passing R2(1), as a feed stream FS(1), removed from Z(1) into Z(2),
wherein U.CR(1) is located upstream of U.M1(1) and U.M2(1) is located downstream of U.M1(1) in Z(1),
wherein zone Z(2) comprises
a conversion reactor unit U.CR(2) comprising

- a supplying means for providing a feed stream FS(1) comprising $NH_3$ to a conversion reactor CR(2);
- a conversion reactor CR(2) for converting $NH_3$ to a gas stream G(2) comprising $NH_3$, $N_2$ and $H_2$, the conversion reactor CR(2) comprising a conversion catalyst C(2);
- an outlet means for removing the gas stream G(2) from CR(2) as a feed gas stream F1(2) to a membrane separation unit U.M1(2);

a first membrane separation unit U.M1(2) comprising

- a means for passing a feed gas stream F1(2) to the first membrane unit M1(2);
- said membrane unit comprising at least one membrane, the at least one membrane having a $H_2/NH_3$ selectivity of at least 2000;
- an outlet means for removing a permeate gas stream P1(2) from the membrane unit M1(2);
- an outlet means for removing a retentate gas stream R1 (2) from the membrane unit M1(2);

a second membrane separation unit U.M2(2) comprising

- a means for passing retentate gas stream R1 (2) as a feed gas stream F2(2) to the second membrane unit M2(2);
- said membrane unit comprising at least one membrane, the at least one membrane having a $H_2/NH_3$ selectivity of at least 2000;
- an outlet means for removing a permeate gas stream P2(2) from the membrane unit M2(2);

an outlet means for removing a retentate gas stream R2(2) from Z(2);
a means for passing R2(2), as a feed stream FS(2), removed from Z(2) into Z(3),
wherein U.CR(2) is located upstream of U.M1(2) and U.M2(2) is located downstream of U.M1(2) in Z(2);
wherein zone Z(3) comprises
a conversion reactor unit U.CR(3) comprising

- a supplying means for providing a feed stream FS(2) comprising $NH_3$ to a conversion reactor CR(3);
- a conversion reactor CR(3) for converting $NH_3$ to a gas stream G(3) comprising $NH_3$, $N_2$ and $H_2$, the conversion reactor CR(3) comprising a conversion catalyst C(3);
- an outlet means for removing the gas stream G(3) from CR(3) as a feed gas stream F1(3) to a membrane separation unit U.M1(3);

a first membrane separation unit U.M1(3) comprising

- a means for passing a feed gas stream F1 (3) to the first membrane unit M1(3);
- said membrane unit comprising at least one membrane, the at least one membrane having a $H_2/NH_3$ selectivity of at least 2000;
- an outlet means for removing a permeate gas stream P1(3) from the membrane unit M1(3);
- an outlet means for removing a retentate gas stream R1 (3) from the membrane unit M1(3);

a second membrane separation unit U.M2(3) comprising

- a means for passing retentate gas stream R1(3) as a feed gas stream F2(3) to the second membrane unit M2(3);
- said membrane unit comprising at least one membrane, the at least one membrane having a $H_2/NH_3$ selectivity of at least 2000;
- an outlet means for removing a permeate gas stream P2(3) from the membrane unit M2(3);

an outlet means for removing a retentate gas stream R2(3) from Z(3), wherein U.CR(3) is located upstream of U.M1(3) and U.M2(3) is located downstream of U.M1(3) in Z(3).

105. The apparatus of any one of embodiments 80 to 104, wherein the apparatus comprises a single zone Z(1), wherein Z(1) comprises

a conversion reactor unit U.CR(1) comprising

- a supplying means for providing a feed stream FS(0) comprising $NH_3$ to a conversion reactor CR(1);
- a conversion reactor CR(1) for converting $NH_3$ to a gas stream G(1) comprising $NH_3$, $N_2$ and $H_2$, the conversion reactor CR(1) comprising a conversion catalyst C(1);
- an outlet means for removing the gas stream G(1) from CR(1) as a feed gas stream F1(1) to a membrane separation unit U.M1(1);

a first membrane separation unit U.M1(1) comprising

- a means for passing a feed gas stream F1 (1) to the first membrane unit M1 (1);
- said membrane unit comprising at least one membrane, the at least one membrane having a $H_2/NH_3$ selectivity of at least 2000;
- an outlet means for removing a permeate gas stream P1(1) from the membrane unit M1(1);
- an outlet means for removing a retentate gas stream R1(1) from the membrane unit M1(1);

a second membrane separation unit U.M2(1) comprising

- a means for passing retentate gas stream R1(1) as a feed gas stream F2(1) to the second membrane unit M2(1);
- said membrane unit comprising at least one membrane, the at least one membrane having a $H_2/NH_3$ selectivity of at least 2000;
- an outlet means for removing a permeate gas stream P2(1) from the membrane unit M2(1);

an outlet means for removing a retentate gas stream R2(1) from Z(1);
wherein U.CR(1) is located upstream of U.M1(1) and U.M2(1) is located downstream of U.M1(1) in Z(1).

106. The apparatus of any one of embodiments 80 to 105, for recovering $H_2$ from converting $NH_3$ according to the process of anyone of embodiments1 to 79.

107. Use of an apparatus according to any one of embodiments 80 to 106 in a process for recovering $H_2$ from converting $NH_3$.

In the context of the present invention, it is noted that the selectivity also known as the ideal selectivity $\alpha_{i,j}$ is defined as the ratio of the permeability of components i and j. Detailed discussion regarding selectivity is given below in Reference Example 1.
The examples in the following further illustrate the present invention.

Examples

Reference Example 1 Simulation conditions

The performance of the decomposition reaction and the membrane stages was simulated using MATLAB (version R2020b). The reactor was simulation using an isothermal equilibrium approach. Based on inlet concentration ($NH_3$, $H_2$ and $N_2$), reaction temperature and reaction pressure the equilibrium concentration at the reactor outlet are estimated. The required parameters used for calculation were taken from NIST Chemistry WebBook (NIST Standard Reference Database Number 69.)
Modelling of the membrane separation stage was conducted using a general equation for the hydrogen permeation through palladium membranes (S. Yun and S. Ted Oyama, "Correlations in palladium membranes for hydrogen separation: A review," Journal of Membrane Science, vol. 375, no. 1-2, pp. 28-45, Jun. 2011, doi: 10.1016/j.memsci.2011.03.057.). Hydrogen permeation through palladium membranes follows a solution-diffusion mechanism, described by the following equation:

$$J_i = N_i\left(p_{i,h}^m - p_{i,l}^m\right)$$

$$N_i = \frac{P_i}{L}$$

$$\alpha_{ij} = \frac{P_i}{P_j}$$

$J_i$ is the flux of component i, $N_i$ is the permeance of component l, $P_j$ is the permeability of component i, L is the thickness of the membrane layer, $p_{i,h}$ is the partial pressure of component i on the high-pressure side, $p_{i,l}$ is the partial pressure of component i on the low-pressure side, m is the pressure exponent, typically ranging from 0.5 - 1.
In case of hydrogen permeance through a palladium-based membrane, bulk diffusion (4) is the rate controlling step, and m is assumed to be 0.5 for the simulation. For the simulations, the permeance of hydrogen, $P_{H2}/L$, was taken from literature and assumed to be 1.5 x $10^{-6}$ mol $s^{-1}$ $m^{-2}$ Pa.

To obtain matching in units in the above flux equation, the units in which permeance are displayed should be of the form $Nm^3/(m^2 \text{ h bar}^n)$. However, it is common use in literature to simply display the values as $Nm^3/(m^2 \text{ h bar})$ (see S. Yun and S. Ted Oyama reference above). Therefore, the skilled person realizes that the units, in particular the exponent of the pressure-unit, of the permeance should be changed accordingly to the value of n that was determined for the particular system."

Based on the flux equation a CSTR (continuously stirred tank reactor) cascade model was set up, consisting of 1000 unit cells. Following assumptions were made for simulation of the membrane stages:

- isothermal conditions ($T_{in} = T_{out}$),
- $H_2$ partial pressure on the permeate side equals the absolute pressure,
- retentate pressure loss is small compared to absolute pressure and was neglected,
- volume of the gas obtained from reactors was treated as having ideal gas components and the volume flow increased proportional to the increase in gas molecules,
- Membranes were treated as ideal and having infinite selectivity
- $H_2$ was isolated as pure hydrogen in the permeates.

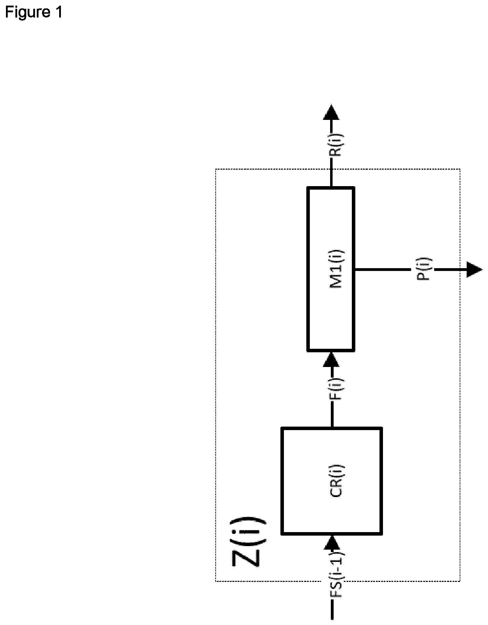

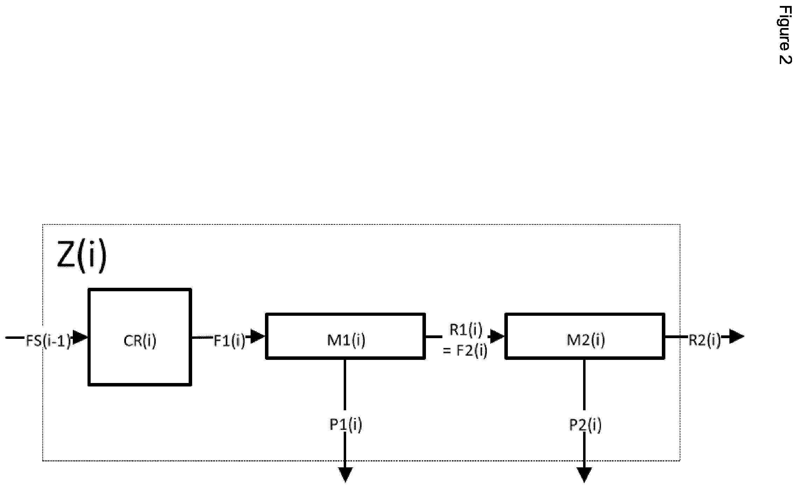

Two different inventive scenarios were calculated, based on the flow diagrams (Fig. 1 and Fig. 2) shown. Each stage according to the invention consists of a reactor CR(i), a high pressure permeate membrane M1(i) and a low pressure permeate membrane M2(i) all connected in series. For the reference example simulations, one stage only consists of a reactor CR(i) and a membrane separation module. Pure, gaseous ammonia ($x_{NH3} = 1$) was used as feed FS(0) for the first reactor CR(1). For all simulations, a feed stream FS(0) flow of 10000 $Nm^3/h$ was assumed and corresponding volume flow ratios are calculated according to the indicated streams having individual flows values $Nm^3/h$. Based on these inputs, two different scenarios were calculated:

1. Reaction and membrane separation at 400 °C, 50 bar(a) feed pressure, 3 consecutive stages;
2. 500 °C reaction temperature and 400 °C membrane separation, 50 bar(a), 2 consecutive stages.

The identical membrane area and module distribution as for the inventive examples was assumed. For each inventive example there are two reference examples: one at low permeate pressure (1.5 bara) and one at high permeate pressure (10 bara).

Gas mixtures resultant from reactors were treated as ideal gases and the flow volume increased proportionally to the increase in the number of gas molecules. Therefore, F1 has a larger volume flow than FS(0) proportional to the increased number of gas molecules.

The results of the different simulations are summarized in the reference examples, examples and associated tables below. With regards to physical implications of the simulations and the results therefrom, it is known to the skilled person that under real word conditions impurities in the permeate are resultant from defects in the Pd membrane, and the membrane itself has a theoretical infinite selectivity according to the solution-diffusion mechanism. The amount of defects is also known to depend on the engineering and size of the membrane module. Therefore although the results of the simulations imply infinite selectivity, the skilled person realizes the selectivity of Pd membranes is limited by said defects under real world conditions. Thus the skilled person would also understand the defects will decrease in proportion to Pd membrane area since there is less edge to membrane surface area which is well known to be the primary source of defects with said membranes.

**Comparative Example 1: Two sequential stages with single membrane units and permeates collected at 10 bar (abs)**

Simulations were carried according to reference example 1 for a system with the individual stages according to Figure 1. An $NH_3$ feed stream FS(0) flow of 10000 $Nm^3/h$ was fed into a reactor CR(1) and converted at 773.15 K, obtaining a gas mixture consisting of $NH_3$, $N_2$ and $H_2$ which were passed as a gas stream F(1) at 673.15 K and 50 bara through a membrane stage M1(1) with 400 $m^2$ membrane area, obtaining a permeate stream P(1) containing pure $H_2$ at 673.15 K and 10 bara, and obtaining a retentate stream R(1) containing a mixture of $NH_3$, $N_2$ and $H_2$ at 673.15 K and 50 bara. The retentate stream R(1) containing a mixture of $NH_3$, $N_2$ and $H_2$ is fed into a reactor CR(2) and converted at 773.15 K, obtaining a gas mixture consisting of $NH_3$, $N_2$ and $H_2$ which were passed as a gas stream F(2) at 673.15 K and 50 bara through a membrane stage M1(2) with 200 $m^2$ membrane area, obtaining a permeate stream P(2) containing pure $H_2$ at 673.15 K and 10 bara, and obtaining a retentate stream R(2) containing a mixture of $NH_3$, $N_2$ and $H_2$ at 673.15 K and 50 bara. A total of 94.4% of the ammonia was converted using a total of 600 $m^2$ Pd membrane surface area and resulting in 72.8 % hydrogen recovery, both % conversion and % recovery are determined on a molar basis.

**Table 1** Results and flow ratios for Comparative Example 1

| Stream | Mol. ratio $H_2/NH_3$ | Mol. ratio $H_2/N_2$ | Pres. (bara) | Temp. (Kelvin) | Vol. flow ratio stream pair | Vol. flow ratio |
|---|---|---|---|---|---|---|
| FS(0) | 0.00 | - | 50 | 773.15 | FS(0) / R(2) | 1.18 |
| F(1) | 12.39 | 0.06 | 50 | 673.15 | FS(0) / F(1) | 0.53 |
| R(1) | 4.86 | 0.10 | 50 | 673.15 | F(1) / R(1) | 1.75 |
| P(1) | ∞ | ∞ | 10 | 673.15 | F(1) / P(1) | 2.32 |
| F(2) | 10.73 | 0.05 | 50 | 673.15 | R(1) / F(2) | 0.95 |
| R(2) | 5.75 | 0.07 | 50 | 673.15 | F(2) / R(2) | 1.33 |
| P(2) | ∞ | ∞ | 10 | 673.15 | F(2) / P(2) | 4.05 |
| | | | | | F(1) / R(2) | 2.22 |

**Comparative Example 2: Two sequential stages with single membrane units and permeates collected at 1.5 bar (abs)**

Simulations were carried according to reference example 1 for a system with the individual stages according to Figure 1. An $NH_3$ feed stream FS(0) flow of 10000 $Nm^3/h$ was fed into a reactor CR(1) and converted at 773.15 K, obtaining a gas mixture consisting of $NH_3$, $N_2$ and $H_2$ which were passed as a gas stream F(1) at 673.15 K and 50 bara through a membrane stage M1(1) with 400 $m^2$ membrane area, obtaining a permeate stream P(1) containing pure $H_2$ at 673.15 K and 1.5 bara, and obtaining a retentate stream R(1) containing a mixture of $NH_3$, $N_2$ and $H_2$ at 673.15 K and 50 bara. The retentate stream R(1) containing a mixture of $NH_3$, $N_2$ and $H_2$ is fed into a reactor CR(2) and converted at 773.15 K, obtaining a gas mixture consisting of $NH_3$, $N_2$ and $H_2$ which were passed as a gas stream F(2) at 673.15 K and 50 bara through a membrane stage M1(2) with 200 $m^2$ membrane area, obtaining a permeate stream P(2) containing pure $H_2$ at 673.15 K and 1.5 bara, and obtaining a retentate stream R(2) containing a mixture of $NH_3$, $N_2$ and $H_2$ at 673.15 K and 50 bara. A total of 97.8% of the ammonia was converted using a total of 600 $m^2$ Pd membrane surface area and resulting in 96.7 % hydrogen recovery, both % conversion and % recovery are determined on a volume basis assuming ideal gas behavior.

**Table 2** Results and flow ratios for Comparative Example 2

| Stream | Mol. ratio $H_2/NH_3$ | Mol. ratio $H_2/N_2$ | Pres. (bara) | Temp. (Kelvin) | Vol. flow ratio stream pair | Vol. flow ratio |
|---|---|---|---|---|---|---|
| FS(0) | 0.00 | - | 50 | 773.15 | FS(0) / R(2) | 1.89 |
| F(1) | 12.39 | 0.06 | 50 | 773.15 | FS(0) / F(1) | 0.53 |
| R(1) | 0.88 | 0.17 | 50 | 673.15 | F(1) / R(1) | 2.92 |
| P(1) | ∞ | ∞ | 1.5 | 673.15 | F(1) / P(1) | 1.52 |
| F(2) | 11.19 | 0.03 | 50 | 773.15 | R(1) / F(2) | 0.88 |
| R(2) | 0.93 | 0.04 | 50 | 673.15 | F(2) / R(2) | 1.39 |
| P(2) | ∞ | ∞ | 1.5 | 673.15 | F(2) / P(2) | 3.55 |
| | | | | | F(1) / R(2) | 3.58 |

**Example 1: Two sequential stages with two membrane units connected in series**

Simulations were carried according to reference example 1 for a system with the individual stages according to Figure 2. An $NH_3$ feed stream FS(0) flow of 10000 $Nm^3/h$ was fed into a reactor CR(1) and converted at 773.15 K, obtaining a gas mixture consisting of $NH_3$, $N_2$ and $H_2$ which were passed as a gas stream F1(1) at 673.15 K and 50 bara through a first membrane stage M1(1) with 200 $m^2$ membrane area, obtaining a permeate stream P1(1) containing pure $H_2$ at 673.15 K and 10 bara, and obtaining a retentate stream R1(1) containing a mixture of $NH_3$, $N_2$ and $H_2$ at 673.15 K and 50 bara. The retentate stream R1(1) containing a mixture of $NH_3$, $N_2$ and $H_2$ is passed as a feed gas stream F2(1) at 673.15 K and 50 bara through a second membrane stage M2(1) with 200 $m^2$ membrane area, obtaining a permeate stream P2(1) containing pure $H_2$ at 673.15 K and 1.5 bara, and obtaining a retentate stream R2(1) containing a mixture of $NH_3$, $N_2$ and $H_2$ at 673.15 K and 50 bara. The retentate stream R2(1) containing a mixture of $NH_3$, $N_2$ and $H_2$ is fed into a reactor CR(2) and converted at 773.15 K, obtaining a gas mixture consisting of $NH_3$, $N_2$ and $H_2$ which

were passed as a gas stream F1(2) at 673.15 K and 50 bara through a membrane stage M1(2) with 100 m$^2$ membrane area, obtaining a permeate stream P1(2) containing pure $H_2$ at 673.15 K and 10 bara, and obtaining a retentate stream R1(2) containing a mixture of $NH_3$, $N_2$ and $H_2$ at 673.15 K and 50 bara. The retentate stream R1(2) containing a mixture of $NH_3$, $N_2$ and $H_2$ is passed as a feed gas stream F2(2) at 673.15 K and 50 bara through a second membrane stage M2(2) with 100 m$^2$ membrane area, obtaining a permeate stream P2(2) containing pure $H_2$ at 673.15 K and 1.5 bara, and obtaining a retentate stream R2(2) containing a mixture of $NH_3$, $N_2$ and $H_2$ at 673.15 K and 50 bara. A total of 96.6% of the $NH_3$ was converted using a total of 600 m$^2$ Pd membrane surface area and resulting in 91.5 % $H_2$ recovery. Concerning the pressure of the hydrogen, 40.1% of the $H_2$ recovery was isolated at 10 bara calculated as total volume flow of permeate $H_2$ at 10 bara / sum of the volume flows of permeate $H_2$ at 10 and 1.5 bara, no correction for the pressure to volume being made in said calculation, both % conversion and % recovery are determined on a volume basis assuming ideal gas behavior.

**Table 3** Results and flow ratios for Example 1

| Stream | Mol. ratio $H_2/NH_3$ | Mol. ratio $H_2/N_2$ | Pres. (bara) | Temp. (Kelvin) | Vol. flow ratio stream pair | Vol. flow ratio |
|---|---|---|---|---|---|---|
| FS(0) | 0.00 | - | 50 | 773.15 | FS(0) / R2(2) | 1.68 |
| F1(1) | 12.39 | 0.06 | 50 | 773.15 | FS(0) / F1(1) | 0.53 |
| R1(1) | 8.22 | 0.07 | 50 | 673.15 | F1(1)/R1(1) | 1.31 |
| P1(1) | ∞ | ∞ | 10 | 673.15 | F1(1) / P1(1) | 4.20 |
| R2(1) | 2.34 | 0.13 | 50 | 673.15 | R1(1) / R2(1) | 1.79 |
| P2(1) | ∞ | ∞ | 1.5 | 673.15 | R1(1)/P2(1) | 2.27 |
| F1(2) | 10.64 | 0.04 | 50 | 773.15 | R2(1)/F1(2) | 0.92 |
| R1(2) | 7.70 | 0.04 | 50 | 673.15 | F1(2)/R1(2) | 1.13 |
| P1(2) | ∞ | ∞ | 10 | 673.15 | F1(2) / P1(2) | 8.76 |
| R2(2) | 2.27 | 0.06 | 50 | 673.15 | R1(2) / R2(2) | 1.31 |
| P2(2) | ∞ | ∞ | 1.5 | 673.15 | R1(2) / P2(2) | 4.21 |
| | | | | | F1(1) / R2(2) | 3.18 |

Retentate stream R1(1) is equivalent in composition and parameters to feed gas stream F2(1) (F2(1) is not shown in table 3). Also retentate stream R1(2) is equivalent in composition and parameters to feed gas stream F2(2) (F2(2) is also not shown in table 3).

**Comparative Example 3: Three sequential stages with single membrane units and permeates collected at 10 bar (abs)**

Simulations were carried according to reference example 1 for a system with the individual stages according to Figure 1. An $NH_3$ feed stream FS(0) flow of 10000 Nm$^3$/h was fed into a reactor CR(1) and converted at 673.15 K, obtaining a gas mixture consisting of $NH_3$, $N_2$ and $H_2$ which were passed as a gas stream F(1) at 673.15 K and 50 bara through a membrane stage M1(1) with 400 m$^2$ membrane area, obtaining a permeate stream P(1) containing pure $H_2$ at 673.15 K and 10 bara, and obtaining a retentate stream R(1) containing a mixture of $NH_3$, $N_2$ and $H_2$ at 673.15 K and 50 bara. The retentate stream R(1) containing a mixture of $NH_3$, $N_2$ and $H_2$ is fed into a reactor CR(2) and converted at 673.15 K, obtaining a gas mixture consisting of $NH_3$, $N_2$ and $H_2$ which were passed as a gas stream F(2) at 673.15 K and 50 bara through a membrane stage M1(2) with 200 m$^2$ membrane area, obtaining a permeate stream P(2) containing pure $H_2$ at 673.15 K and 10 bara, and obtaining a retentate stream R(2) containing a mixture of $NH_3$, $N_2$ and $H_2$ at 673.15 K and 50 bara. The retentate stream R(2) containing a mixture of $NH_3$, $N_2$ and $H_2$ is fed into a reactor CR(3) and converted at 673.15 K, obtaining a gas mixture consisting of $NH_3$, $N_2$ and $H_2$ which were passed as a gas stream F(3) at 673.15 K and 50 bara through a membrane stage M1(3) with 200 m$^2$ membrane area, obtaining a permeate stream P(3) containing pure $H_2$ at 673.15 K and 10 bara, and obtaining a retentate stream R(3) containing a mixture of $NH_3$, $N_2$ and $H_2$ at 673.15 K and 50 bara. A total of 88.3% of the ammonia was converted using a total of 800 m$^2$ Pd membrane surface area and resulting in 73.3 % hydrogen recovery, both % conversion and % recovery are determined on a volume basis assuming ideal gas behavior.

**Table 4** Results and flow ratios for Comparative Example 3

| Stream | Mol. ratio $H_2/NH_3$ | Mol. ratio $H_2/N_2$ | Pres. (bara) | Vol. flow ratio stream pair | Vol. flow ratio |
|---|---|---|---|---|---|
| FS(0) | 0.00 | - | 50 | FS(0) / R(3) | 1.28 |
| F(1) | 4.08 | 0.16 | 50 | FS(0) / F(1) | 0.58 |
| R(1) | 1.57 | 0.25 | 50 | F(1) / R(1) | 1.64 |
| P(1) | $\infty$ | $\infty$ | 10 | F(1) / P(1) | 2.57 |
| F(2) | 3.52 | 0.14 | 50 | R(1) / F(2) | 0.91 |
| R(2) | 1.98 | 0.18 | 50 | F(2) / R(2) | 1.28 |
| P(2) | $\infty$ | $\infty$ | 10 | F(2) / P(2) | 4.59 |
| F(3) | 3.40 | 0.12 | 50 | R(2) / F(3) | 0.95 |
| R(3) | 1.92 | 0.15 | 50 | F(3) / R(3) | 1.22 |
| P(3) | $\infty$ | $\infty$ | 10 | F(3) / P(3) | 5.53 |
| | | | | F(1) / R(3) | 2.21 |

**Comparative Example 4: Three sequential stages with single membrane units and permeates collected at 1.5 bar(abs)**

Simulations were carried according to reference example 1 for a system with the individual stages according to Figure 1. An $NH_3$ feed stream FS(0) flow of 10000 $Nm^3$/h was fed into a reactor CR(1) and converted at 673.15 K, obtaining a gas mixture consisting of $NH_3$, $N_2$ and $H_2$ which were passed as a gas stream F(1) at 673.15 K and 50 bara through a membrane stage M1(1) with 400 $m^2$ membrane area, obtaining a permeate stream P(1) containing pure $H_2$ at 673.15 K and 1.5 bara, and obtaining a retentate stream R(1) containing a mixture of $NH_3$, $N_2$ and $H_2$ at 673.15 K and 50 bara. The retentate stream R(1) containing a mixture of $NH_3$, $N_2$ and $H_2$ is fed into a reactor CR(2) and converted at 673.15 K, obtaining a gas mixture consisting of $NH_3$, $N_2$ and $H_2$ which were passed as a gas stream F(2) at 673.15 K and 50 bara through a membrane stage M1(2) with 200 $m^2$ membrane area, obtaining a permeate stream P(2) containing pure $H_2$ at 673.15 K and 1.5 bara, and obtaining a retentate stream R(2) containing a mixture of $NH_3$, $N_2$ and $H_2$ at 673.15 K and 50 bara. The retentate stream R(2) containing a mixture of $NH_3$, $N_2$ and $H_2$ is fed into a reactor CR(3) and converted at 673.15 K, obtaining a gas mixture consisting of $NH_3$, $N_2$ and $H_2$ which were passed as a gas stream F(3) at 673.15 K and 50 bara through a membrane stage M1(3) with 200 $m^2$ membrane area, obtaining a permeate stream P(3) containing pure $H_2$ at 673.15 K and 1.5 bara, and obtaining a retentate stream R(3) containing a mixture of $NH_3$, $N_2$ and $H_2$ at 673.15 K and 50 bara. A total of 96.8% of the ammonia was converted using a total of 800 $m^2$ Pd membrane surface area and resulting in 95,7 % hydrogen recovery, both % conversion and % recovery are determined on a volume basis assuming ideal gas behavior.

**Table 5** Results and flow ratios for reference example 5

| Stream | Mol. ratio $H_2/NH_3$ | Mol. ratio $H_2/N_2$ | Pres. (bara) | Vol. flow ratio stream pair | Vol. flow ratio |
|---|---|---|---|---|---|
| FS(0) | 0.00 | - | 50 | FS(0) / R(3) | 1.88 |
| F(1) | 4.08 | 3.00 | 50 | FS(0) / F(1) | 0.58 |
| R(1) | 0.21 | 0.16 | 50 | F(1) / R(1) | 2.50 |
| P(1) | $\infty$ | $\infty$ | 1.5 | F(1) / P(1) | 1.67 |
| F(2) | 3.40 | 0.71 | 50 | R(1)/F(2) | 0.80 |
| R(2) | 0.30 | 0.06 | 50 | F(2) / R(2) | 1.51 |
| P(2) | $\infty$ | $\infty$ | 1.5 | F(2) / P(2) | 2.98 |
| F(3) | 3.40 | 0.25 | 50 | R(2)/F(3) | 0.90 |
| R(3) | 0.30 | 0.03 | 50 | F(3)/R(3) | 1.20 |
| P(3) | $\infty$ | $\infty$ | 1.5 | F(3) / P(3) | 6.02 |
| | | | | F(1) / R(3) | 3.25 |

**Example 2: Three sequential stages with two membrane units connected in series**

Simulations were carried according to reference example 1 for a system with the individual stages according to Figure 2. An $NH_3$ feed stream FS(0) flow of 10000 $Nm^3/h$ was fed into a reactor CR(1) and converted at 673.15 K, obtaining a gas mixture consisting of $NH_3$, $N_2$ and $H_2$ which were passed as a gas stream F1(1) at 673.15 K and 50 bara through a first membrane stage M1(1) with 200 $m^2$ membrane area, obtaining a permeate stream P1(1) containing pure $H_2$ at 673.15 K and 10 bara, and obtaining a retentate stream R1(1) containing a mixture of $NH_3$, $N_2$ and $H_2$ at 673.15 K and 50 bara. The retentate stream R1(1) containing a mixture of $NH_3$, $N_2$ and $H_2$ is passed as a feed gas stream F2(1) at 673.15 K and 50 bara through a second membrane stage M2(1) with 200 $m^2$ membrane area, obtaining a permeate stream P2(1) containing pure $H_2$ at 673.15 K and 1.5 bara, and obtaining a retentate stream R2(1) containing a mixture of $NH_3$, $N_2$ and $H_2$ at 673.15 K and 50 bara. The retentate stream R2(1) containing a mixture of $NH_3$, $N_2$ and $H_2$ is fed into a reactor CR(2) and converted at 673.15 K, obtaining a gas mixture consisting of $NH_3$, $N_2$ and $H_2$ which were passed as a gas stream F1(2) at 673.15 K and 50 bara through a membrane stage M1(2) with 100 $m^2$ membrane area, obtaining a permeate stream P1(2) containing pure $H_2$ at 673.15 K and 10 bara, and obtaining a retentate stream R1(2) containing a mixture of $NH_3$, $N_2$ and $H_2$ at 673.15 K and 50 bara. The retentate stream R1(2) containing a mixture of $NH_3$, $N_2$ and $H_2$ is passed as a feed gas stream F2(2) at 673.15 K and 50 bara through a second membrane stage M2(2) with 100 $m^2$ membrane area, obtaining a permeate stream P2(2) containing pure $H_2$ at 673.15 K and 1.5 bara, and obtaining a retentate stream R2(2) containing a mixture of $NH_3$, $N_2$ and $H_2$ at 673.15 K and 50 bara. The retentate stream R2(2) containing a mixture of $NH_3$, $N_2$ and $H_2$ is fed into a reactor CR(3) and converted at 773.15 K, obtaining a gas mixture consisting of $NH_3$, $N_2$ and $H_2$ which were passed as a gas stream F1(3) at 673.15 K and 50 bara through a membrane stage M1(3) with 100 $m^2$ membrane area, obtaining a permeate stream P1(3) containing pure $H_2$ at 673.15 K and 10 bara, and obtaining a retentate stream R1(3) containing a mixture of $NH_3$, $N_2$ and $H_2$ at 673.15 K and 50 bara. The retentate stream R1(3) containing a mixture of $NH_3$, $N_2$ and $H_2$ is passed as a feed gas stream F2(3) at 673.15 K and 50 bara through a second membrane stage M2(3) with 100 $m^2$ membrane area, obtaining a permeate stream P2(3) containing pure $H_2$ at 673.15 K and 1.5 bara, and obtaining a retentate stream R2(3) containing a mixture of $NH_3$, $N_2$ and $H_2$ at 673.15 K and 50 bara. A total of 95.5% of the $NH_3$ was converted using a total of 800 $m^2$ Pd membrane surface area and resulting in 91.9 % $H_2$ recovery. Concerning the pressure of the hydrogen, 38% of the $H_2$ recovery was isolated at 10 bara calculated as total volume flow of permeate $H_2$ at 10 bara / sum of the volume flows of permeate $H_2$ at 10 and 1.5 bara, no correction for the pressure to volume being made in said calculation, both % conversion and % recovery are determined on a volume basis assuming ideal gas behavior.

**Table 6** Results and flow ratios for example 2

| Stream | Mol. ratio $H_2/NH_3$ | Mol. ratio $H_2/N_2$ | Pres. (bara) | Vol. flow ratio stream pair | Vol. flow ratio |
|---|---|---|---|---|---|
| FS(0) | 0.00 | - | 50 | FS(0) / R2(3) | 1.76 |
| F1(1) | 4.08 | 0.16 | 50 | FS(0)/F1(1) | 0.58 |
| R1(1) | 2.64 | 0.20 | 50 | F1(1)/R1(1) | 1.29 |
| P1(1) | ∞ | ∞ | 10 | F1(1)/P1(1) | 4.47 |
| R2(1) | 0.64 | 0.33 | 50 | R1(1) / R2(1) | 1.67 |
| P2(1) | ∞ | ∞ | 1.5 | R1(1) / P2(1) | 2.50 |
| F1(2) | 3.41 | 0.12 | 50 | R2(1)/F1(2) | 0.84 |
| R1(2) | 2.52 | 0.14 | 50 | F1(2)/R1(2) | 1.12 |
| P1(2) | ∞ | oo! | 10 | F1(2)/P1(2) | 9.23 |
| R2(2) | 0.85 | 0.18 | 50 | R1(2) / R2(2) | 1.30 |
| P2(2) | ∞ | ∞ | 1.5 | R1(2) / P2(2) | 4.36 |
| F1(3) | 3.56 | 0.08 | 50 | R2(2) / F1(3) | 0.91 |
| R1(3) | 2.97 | 0.08 | 50 | F1(3)/R1(3) | 1.05 |
| P1(3) | ∞ | ∞ | 10 | F1(3) / P1(3) | 22.43 |
| R2(3) | 0.73 | 0.10 | 50 | R1(3)/R2(3) | 1.21 |
| P2(3) | ∞ | ∞ | 1.5 | R1(3) / P2(3) | 5.67 |
| | | | | F1(1) / R2(3) | 3.05 |

Retentate stream R1(1) is equivalent in composition and parameters to feed gas stream F2(1) (F2(1) is not shown in table 3). Also retentate stream R1(2) is equivalent in composition and parameters to feed gas stream F2(2) (F2(2) is also not shown in table 3). Finally, retentate stream R1(3) is also equivalent in composition and parameters to feed gas stream F2(3) (F2(3) is also not shown in table 3).

## Description of the figure(s)

Figure 1    depicts a flow diagram according to the prior art for a single stage, wherein a feed source FS(i-1) of $NH_3$ enters a conversion reactor CR(i), said conversion reactor CR(i) converts the $NH_3$ to a mixture of $NH_3$, $N_2$ and $H_2$ that is then passed as a feed gas F(i) to a membrane unit M(i) comprising a Pd membrane which then separates the mixture into a permeate gas stream P(i) containing purified $H_2$ and retentate R(i) containing a mixture of $NH_3$, $N_2$ and $H_2$.

Figure 2    depicts a flow diagram according to the invention for a single stage, wherein a feed source FS(i-1) of $NH_3$ enters a conversion reactor CR(i), said conversion reactor CR(i) converts the $NH_3$ to a mixture of $NH_3$, $N_2$ and $H_2$ that is then passed as a feed gas F(i) to a membrane unit M(i) comprising a Pd membrane which then separates the mixture into a permeate gas stream P(i) containing purified $H_2$ and retentate R(i) containing a mixture of $NH_3$, $N_2$ and $H_2$.

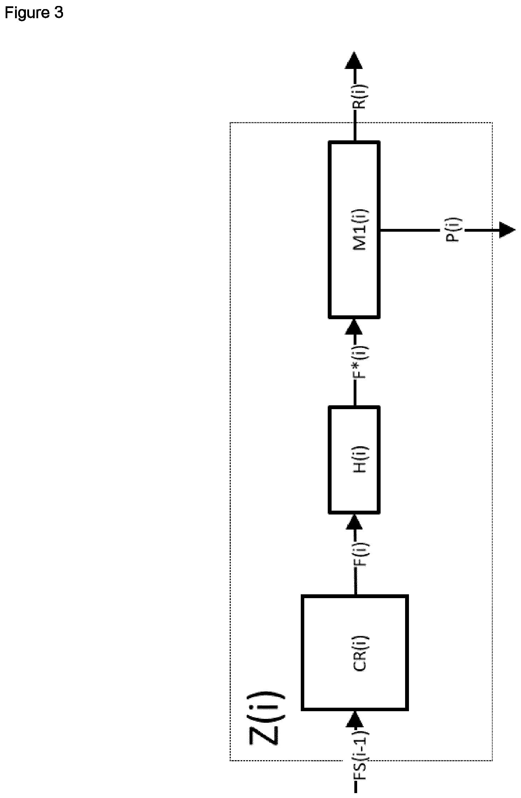

Figure 3    depicts a flow diagram according to the prior art for a single stage identical to Fig. 1 except showing a means of heat exchange H(i) for adjusting the temperature of F(i) prior to entering membrane unit M1(i).

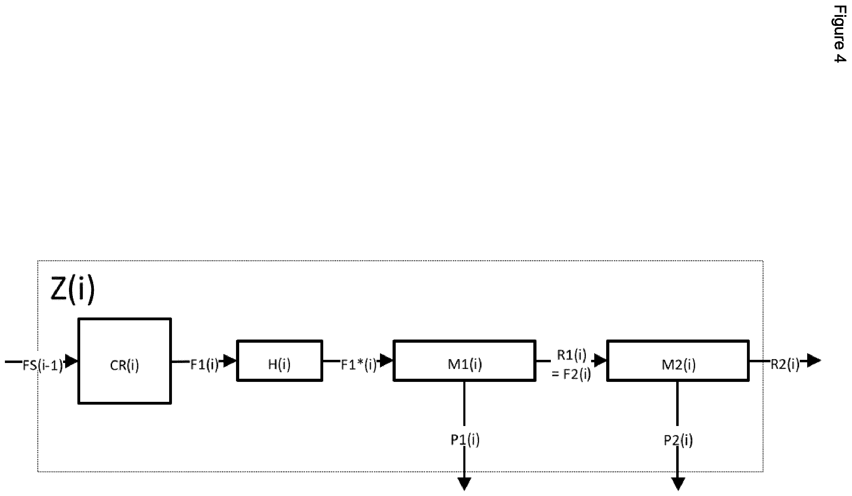

Figure 4    depicts a flow diagram according to the invention for a single stage identical to Fig. 2 except showing a means of heat exchange H(i) for adjusting the temperature of F1(i) prior to entering membrane unit M1(i).

## Cited literature

- Cechetto et. Al. proposes in "H2 production via ammonia decomposition in a catalytic membrane reactor", Fuel Processing Technology (2021), page 106772
- Yun et al reviews in "correlations of in palladium membranes for hydrogen separation" J. Membrane Sci. (2011) pages 28 to 45
- Schüth et al reviews in "Ammonia as a possible element in an energy infrastructure: catalysts for ammonia decomposition" Energy Eviron. Sci. 2012, page 6278,
- Abashar discloses in "Ultra-clean hydrogen production by ammonia Decomposition", J. King Saud University- Engineering Sciences (2018) pages 2 - 11
- Lamb et al. in "Ammonia for hydrogen storage; A review of catalytic ammonia decomposition and hydrogen separation and purification", Int. J. of hydrogen energy, 44 ( 2019 ) 3580
- Murugan et al in "Review of purity analysis methods for performing quality assurance of fuel cell hydrogen" Int. Journal of Hydrogen Energy (2015) pg 4219
- Pal N. et al "A review on types, fabrication and support material of hydrogen separation membrane, Materials Today: Proceedings, volume 28, part 3, 2020, pages 1386-1391 with regards to acceptable substrate materials for palladium comprising membranes

## Claims

1.    A process for recovering $H_2$ from converting $NH_3$ in an apparatus comprising n serially coupled zones Z(i), with i= 1...n, with n≥2,

wherein each zone Z(i) contains

- a conversion reactor CR(i) comprising a catalyst C(i) for converting $NH_3$ to give $H_2$,
- a first membrane unit M1(i) and
- a second membrane unit M2(i),

wherein CR(i) is located upstream of M1(i) and M2(i) is located downstream of M1(i) in Z(i), wherein Z(1) is the most upstream zone and Z(n) is the most downstream zone, the process comprising

(a) providing a feed gas stream FS(0) comprising $NH_3$;
(b) n successive process stages S(i), i=1...n,

wherein, in each S(i), S(i) comprises

a conversion stage SA(i), comprising

- feeding the feed gas stream FS(i-1) into a conversion reactor CR(i) comprised in Z(i) and bringing said stream FS(i-1) in contact with C(i) in CR(i), obtaining a gas stream G(i) which comprises $NH_3$, $N_2$ and $H_2$, the gas stream G(i) having a molar ratio $n(H_2):n(NH_3)=x(G(i))$;
- removing the gas stream G(i) comprising $NH_3$, $N_2$ and $H_2$ from CR(i);
- passing the gas stream G(i) as a feed gas stream F1(i) through a separation stage SB(i), F1(i) having the same chemical composition as G(i) and the molar ratio $x(G(i))=x(F1(i))$;

a separation stage SB(i), comprising

- passing the feed gas stream F1(i) through a first membrane unit M1(i), of Z(i), comprising at least one membrane,
the at least one membrane having a $H_2/NH_3$ selectivity of at least 2000, at a pressure ratio $\varphi$ greater than 1 across said at least one membrane, calculated as (pressure of feed gas stream F1(i)/ pressure of permeate gas stream P1(i)) at constant temperature, obtaining

  ◦ a permeate gas stream P1(i) comprising $H_2$; and
  ◦ a retentate gas stream R1(i) comprising $H_2$, $N_2$ and $NH_3$, wherein the molar ratio $n(H_2):n(NH_3)=x(R1(i))$; $x(R1(i))<x(F1(i))$;

- passing the retentate gas stream R1(i) as a feed gas stream F2(i), through a separation stage SC(i), F2(i) having the same chemical and physical composition as R1(i) and the molar ratio $x(R1(i))=x(F2(i))$;

a separation stage SC(i), comprising

- passing the feed gas stream F2(i) through a second membrane unit M2(i) of Z(i) comprising at least one membrane, the at least one membrane having a $H_2/NH_3$ selectivity of at least 2000,
at a pressure ratio $\varphi$ of greater than 1 across said at least one membrane, calculated as (pressure of feed gas stream F2(i)/ pressure of permeate gas stream P2(i)) at constant temperature, obtaining

  ◦ a permeate gas stream P2(i) comprising $H_2$; and
  ◦ a retentate gas stream R2(i) comprising $H_2$, $N_2$ and $NH_3$, wherein the molar ratio $n(H_2):n(NH_3)=x(R2(i))$; $x(R2(i))<x(F2(i))$;
  - removing the gas stream R2(i) from Z(i);

wherein, when i=1...n-1, the gas stream R2(i) is removed from Z(i) as a feed stream FS(i), FS(i) having the same chemical and physical composition as R2(i) and the molar ratio $x(R2(i))=x(FS(i))$; and
wherein, when i=n, the gas stream R2(n) is removed from Z(i) as a product gas stream; wherein the volume flow ratio of FS(i-1) to FS(i) is in the range of from 1.05:1 to 4:1.

2. The process of claim 1, wherein n= 2 to 10, preferably n= 2 to 5, more preferably n= 2, 3 or 4, more preferably n= 2 or 3.

3. The process of claim 1 or 2, wherein according to stage S(i), no vacuum apparatus or compressor is operated downstream of the conversion reactor CR(i) according to SA(i) in the obtainment of a permeate gas stream and/or a retentate gas stream, preferably in the obtainment of any permeate gas stream and/or any retentate gas stream.

4. The process of any one of claims 1 to 3, wherein according to SA(i) the feed gas stream FS(i-1) is contacted with the conversion catalyst C(i) at a pressure in the range of from 10 to 100 bar(abs), more preferably in the range of from 15 to 85 bar(abs), more preferably in the range of from 20 to 60 bar(abs), more preferably in the range of from 15 to 85 bar(abs), more preferably in the range of from 20 to 60 bar(abs); and
wherein according to SA(i) the feed gas stream FS(i-1) is preferably contacted with the conversion catalyst C(i) at a temperature in the range of from 50 to 1100 °C, more preferably in the range of from 100 to 1000 °C, more preferably in the range of from 350 to 900 °C, more preferably in the range of from 100 to 1000 °C, more preferably in the range of from 350 to 900 °C.

5. The process of any one of claims 1 to 4, wherein the conversion catalyst C(i) comprises, more preferably consists of, a transition metal supported on a refractory support material; wherein the transition metal is selected from the group consisting of Fe, Cu, Ni, Co, Ru, Ag, Pd, Rh, Pt, Ir including combinations of two or more thereof, more preferably selected from the group consisting of Ni, Co, Rh and Ru including combinations of two or more thereof, more preferably is Ni, Co or Ru, more preferably is Ru;
wherein the refractory support material preferably is selected from the group consisting of zeolite, alumina, silica, titania, zirconia, ceria, lanthana, praseodymium oxide, neodymium oxide, yttrium oxide, activated carbon, carbon nanotubes and a combination of two or more thereof, more preferably selected from the group consisting of alumina, silica, titania, zirconia and a combination of two or more thereof, more preferably is alumina or zirconia.

6. The process of any one of claims 1 to 5, wherein the gas stream G(i) has a $H_2$ to $NH_3$ molar ratio x(G(i)) (calculated as $n(H_2):n(NH_3)$= x(G(i)) in the range of from 0.01:1 to 500:1, more preferably in the range of from 0.05:1 to 200:1, more preferably in the range of from 2:1 to 50:1;

   wherein the gas stream G(i) has a $H_2$ to $N_2$ molar ratio y(G(i)) (calculated as $n(H_2):n(N_2)$= y(G(i))) in the range of from 0.01:1 to 5:1;
   wherein the gas stream G(i) has preferably a pressure in the range of from 10 to 100 bar (abs), more preferably in the range of from 15 to 65 bar (abs), more preferably in the range of from 20 to 60 bar (abs);
   wherein the gas stream G(i) has more preferably a temperature in the range of from 50 to 1100 °C; more preferably in the range of from 350 to 900 °C.

7. The process of any one of claims 1 to 6, wherein the feed gas stream F1(i), prior to passing through the separation stage SB(i), is passed through a heat exchanger H(i); wherein the feed gas stream F1(i), more preferably after being passed through H(i), has preferably a temperature in the range of from 250 to 700 °C, more preferably in the range of from 300 to 600 °C, more preferably in the range of from 350 to 500 °C;
wherein the feed gas stream F1(i) has more preferably a pressure in the range of from 10 to 100 bar (abs), more preferably in the range of from 15 to 85 bar (abs), more preferably in the range of from 20 to 60 bar (abs).

8. The process of any one of claims 1 to 7, wherein, according to SB(i), the at least one membrane comprised in membrane unit M1(i) is a palladium metal membrane;

   wherein according to SB(i), the membrane unit M1(i) comprising at least one membrane has preferably a $H_2/NH_3$ selectivity of at least 2500, more preferably in the range of from 2,500 to 1,000,000, more preferably in the range of from 4,500 to 900,000, more preferably in the range of from 5,000 to 800,000, more preferably in the range of from 6,000 to 600,000;
   wherein, according to SB(i), the membrane unit M1(i) comprising at least one membrane has preferably a ratio of $H_2/N_2$ selectivity to $H_2/NH_3$ selectivity in the range of from 0.8:1 to 5:1, more preferably in the range of from 1.2:1 to 2:1.

9. The process of any one of claims 1 to 8, wherein, according to SB(i), the pressure ratio φ across the at least one membrane comprised in membrane unit M1(i), calculated as (pressure of feed gas stream F1 (i)/ pressure of permeate gas stream P1(i)) at constant temperature, is in the range of from 1.5:1 to 50:1, more preferably in the range of from 2:1 to 40:1, more preferably in the range of from 2.5:1 to 35:1;

   wherein according to SB(i), the permeate gas stream P1(i) has preferably a pressure in the range of from 3 to 30 bar(abs), more preferably in the range of from 5 to 20 bar(abs), more preferably in the range of from 5 to 15 bar(abs);
   wherein according to SB(i), the permeate gas stream P1(i) has more preferably a temperature in the range of from 250 to 700 °C, more preferably in the range of from 300 to 600 °C, more preferably in the range of from 350 to 500 °C.

10. The process of any one of claims 1 to 9, wherein, according to SC(i), the at least one membrane comprised in membrane unit M2(i) is a palladium metal membrane;
wherein according to SC(i), the membrane unit M2(i) comprising at least one membrane has a $H_2/NH_3$ selectivity of at least 2500, more preferably in the range of from 2,500 to 1,000,000, more preferably in the range of from 4,500 to 900,000, more preferably in the range of from 5,000 to 800,000, more preferably in the range of from 6,000 to 600,000; wherein, according to SC(i), the membrane unit M2(i) comprising at least one membrane has a ratio of $H_2/N_2$ selectivity to $H_2/NH_3$ selectivity in the range of from 0.8:1 to 5:1, more preferably in the range of from 1.2:1 to 2:1.

11. The process of any one of claims 1 to 10, wherein according to SC(i), the pressure ratio $\varphi$ across the at least one membrane comprised in membrane unit M2(i), calculated as (pressure of feed gas stream F2(i)/ pressure of permeate gas stream P2(i)) at constant temperature, is in the range of from 1.5:1 to 50:1, more preferably in the range of from 2:1 to 40:1, more preferably in the range of from 2.5:1 to 35:1;

   wherein according to SC(i), the permeate gas stream P2(i) has preferably a pressure in the range of from 1.1 to 30 bar(abs), preferably in the range of from 1.1 to 10 bar(abs), more preferably in the range of from 1.1 to 2.5 bar(abs);
   wherein according to SC(i), the permeate gas stream P2(i) has more preferably a temperature in the range of from 250 to 700 °C, preferably in the range of from 300 to 600 °C, more preferably in the range of from 350 to 500 °C.

12. The process of any one of claims 1 to 11, wherein according to SC(i), the retentate gas stream R2(i) has a $H_2$ to $NH_3$ molar ratio x(R2(i)) (calculated as $n(H_2):n(NH_3) = x(R2(i))=x(FS(i))$ in the range of from 0.05:1 to 100:1, preferably in the range of from 0.1:1 to 30:1, more preferably in the range of from 0.2:1 to 5:1;

   wherein according to SC(i), the retentate gas stream R2(i) has preferably a $H_2$ to $N_2$ molar ratio y(R2(i)) (calculated as $n(H_2):n(N_2) = y(R2(i))=y(FS(i))$ in the range of from 0.01:1 to 2:1, preferably in the range of from 0.03:1 to 2:1, more preferably in the range of from 0.05:1 to 1.5:1;
   wherein according to SC(i), the volume flow ratio of F2(i) to R2(i) calculated as (volume flow F2(i)/ volume flow R2(i)) is more preferably in the range of from 1:1 to 5:1, preferably in the range of from 1:1 to 3.5:1, more preferably in the range of from 1.02:1 to 2:1.

13. The process of any one of claims 1 to 12, wherein according to SC(n), the retentate gas stream R2(n) has a pressure in the range of from 10 to 100 bar (abs);

   wherein according to SC(n), the retentate gas stream R2(n) has preferably a temperature in the range of from 250 to 700 °C, more preferably in the range of from 300 to 600 °C, more preferably in the range of from 350 to 500 °C;
   wherein according to SC(n), the retentate gas stream R2(n) has more preferably a $H_2$ to $NH_3$ molar ratio x(R2(i)) (calculated as $n(H_2):n(NH_3) = x(R2(n))$ in the range of from 0.05:1 to 100:1, more preferably in the range of from 0.1:1 to 30:1, more preferably in the range of from 0.2:1 to 5:1;
   wherein according to SC(n), the retentate gas stream R2(n) has more preferably a $H_2$ to $N_2$ molar ratio y(R2(i)) (calculated as $n(H_2):n(N_2) = y(R2(n))$ in the range of from 0.01:1 to 2:1, more preferably in the range of from 0.03:1 to 2:1, more preferably in the range of from 0.05:1 to 1.5:1;
   wherein according to SC(n), the volume flow ratio of F2(n) to R2(n) calculated as (volume flow F2(n)/ volume flow R2(n)) is more preferably in the range of from 1:1 to 5:1, more preferably in the range of from 1:1 to 3.5:1, more preferably in the range of 1.02:1 to 2:1.

14. The process of any one of claims 1 to 13, wherein the volume flow ratio of FS(i-1) to (FS(i)) is in the range of from 1.1:1 to 3:1, preferably in the range of 1.2:1 to 2.5:1;
   wherein the ratio of the pressure of permeate gas stream P1(i) to permeate gas stream P2(i) is in the range of from 50:1 to 1.5:1, preferably in the range of 20:1 to 2:1, more preferably in the range of from 15:1 to 3:1, more preferably in the range of from 12:1 to 4:1.

15. A process for recovering $H_2$ from converting $NH_3$ in an apparatus comprising a zone Z(1) containing a conversion reactor CR(1) comprising a catalyst C(1) for converting $NH_3$ to give $H_2$, a first membrane unit M1(1) and a second membrane unit M2(1),

   wherein CR(1) is located upstream of M1(1) and M2(1) is located downstream of M1(1) in Z(1),
   the process comprising

      (a) providing a feed gas stream FS(0) comprising $NH_3$;
      (b) a process stage S(1), wherein S(1) comprises

a conversion stage SA(1), comprising

- feeding gas stream FS(0) into a conversion reactor CR(1) comprised in Z(i) and bringing said stream FS(0) in contact with C(1) in CR(1), obtaining a gas stream G(i) which comprises $NH_3$, $N_2$ and $H_2$, the gas stream G(1) having a molar ratio $n(H_2):n(NH_3)=x(G(1))$;
- removing the gas stream G(1) comprising $NH_3$, $N_2$ and $H_2$ from CR(1);
- passing the gas stream G(1) as a feed gas stream F1(1) through a separation stage SB(1), F1(1) having the same chemical and composition as G(1) and the molar ratio $x(G(1))=x(F1(1))$;

a separation stage SB(1), comprising

- passing the feed gas stream F1(1) through a first membrane unit M1(1), of Z(1), comprising at least one membrane,
the at least one membrane having a $H_2/NH_3$ selectivity of at least 2000, at a pressure ratio $\varphi$ greater than 1 across said at least one membrane, calculated as (pressure of feed gas stream F1(i)/ pressure of permeate gas stream P1(1)) at constant temperature, obtaining

  ◦ a permeate gas stream P1(1) comprising $H_2$; and
  ◦ a retentate gas stream R1(1) comprising $H_2$, $N_2$ and $NH_3$, wherein the molar ratio $n(H_2):n(NH_3)=x(R1(1))$; $x(R1(1))<x(F1(1))$;

- passing the retentate gas stream R1(1) as a feed gas stream F2(1), through a separation stage SC(1), F2(1) having the same chemical and physical composition as R1(1) and the molar ratio $x(R1(1))=x(F2(1))$;

a separation stage SC(1), comprising

- passing the feed gas stream F2(1) through a second membrane unit M2(1) of Z(i) comprising at least one membrane, the at least one membrane having a $H_2/NH_3$ selectivity of at least 2000, at a pressure ratio $\varphi$ of greater than 1 across said at least one membrane, calculated as (pressure of feed gas stream F2(1)/ pressure of permeate gas stream P2(1)) at constant temperature, obtaining

  ◦ a permeate gas stream P2(1) comprising $H_2$; and
  ◦ a retentate gas stream R2(1) comprising $H_2$, $N_2$ and $NH_3$, wherein the molar ratio $n(H_2):n(NH_3)=x(R2(1))$; $x(R2(1))<x(F2(1))$;

- removing the gas stream R2(1) from Z(1);

wherein the gas stream R2(1) is removed from Z(1) as a product gas stream;
wherein the volume flow ratio of FS(0) to R2(1) is in the range of from 1.05:1 to 4:1.

16. An apparatus for recovering $H_2$ from converting $NH_3$, preferably according to a process of any one of claims 1 to 15, the apparatus comprising

n zones Z(i), with i= 1...n, with n≥1,
wherein, when n≥2, the n zones Z(i) are serially coupled and Z(1) is the most upstream zone and Z(n) is the most downstream zone,
wherein each zone Z(i) comprises
a conversion reactor unit U.CR(i) comprising

- a supplying means for providing a feed stream FS(i-1) comprising $NH_3$ to a conversion reactor CR(i);
- a conversion reactor CR(i) for converting $NH_3$ to a gas stream G(i) comprising $NH_3$, $N_2$ and $H_2$, the conversion reactor CR(i) comprising a conversion catalyst C(i);
- an outlet means for removing the gas stream G(i) from CR(i) as a feed gas stream F1(i) to a membrane separation unit U.M1(i);

a first membrane separation unit U.M1(i) comprising

- a means for passing a feed gas stream F1(i) to the first membrane unit M1(i);
- said membrane unit comprising at least one membrane, the at least one membrane having a $H_2/NH_3$ selectivity of at least 2000;
- an outlet means for removing a permeate gas stream P1(i) from the membrane unit M1(i);
- an outlet means for removing a retentate gas stream R1(i) from the membrane unit M1(i);

a second membrane separation unit U.M2(i) comprising

- a means for passing retentate gas stream R1(i) as a feed gas stream F2(i) to the second membrane unit M2(i);
- said membrane unit comprising at least one membrane, the at least one membrane having a $H_2/NH_3$ selectivity of at least 2000;
- an outlet means for removing a permeate gas stream P2(i) from the membrane unit M2(i);

an outlet means for removing a retentate gas stream R2(i) from Z(i); and
when n≥2 and i≠n, a means for passing R2(i) removed from Z(i), as a feed stream FS(i), into Z(i+1);
wherein U.CR(i) is located upstream of U.M1(i) and U.M2(i) is located downstream of U.M1(i) in Z(i).

17. The apparatus of claim 16, wherein n = 1 to 10, preferably n = 1 to 5, more preferably n = 1, 2, 3 or 4, more preferably n = 1 or 2 or 3;
wherein neither a vacuum apparatus nor a compressor is disposed downstream of the conversion reactor CR(i) according to U.CR(i).

18. Use of an apparatus according to any one of claims 16 or 17 in a process for recovering $H_2$ from converting $NH_3$.

Figure 1

Figure 2

Figure 3

Figure 4

# EP 4 282 815 A1

Europäisches Patentamt
European Patent Office
Office européen des brevets

## EUROPEAN SEARCH REPORT

**Application Number**

EP 22 17 5357

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | WO 2021/257944 A (AIR PROD & CHEM [US])<br>14 April 2022 (2022-04-14)<br>* abstract *<br>* claims 1,7,10,15 *<br>* figure 6 *<br>* page 14, lines 1-9 * | 16<br>1-15,17,<br>18 | INV.<br>C01B3/04<br>B01D53/22<br>C01B3/50 |
| A | FR 1 375 030 A (ENGELHARD IND INC)<br>16 October 1964 (1964-10-16)<br>* abstract *<br>* claims 1,2,9 *<br>* figures 1-4 *<br>* page 4, left-hand column, lines 30-45 *<br>* page 4, right-hand column, lines 38-57 *<br>* page 5, left-hand column, lines 10-33 *<br>* page 5, left-hand column, line 54 – page 5, right-hand column, line 17 *<br>* page 6, right-hand column, line 55 – page 7, right-hand column, line 36 *<br>* page 9 – page 10 * | 1-18 | |
| A | US 6 387 157 B1 (YAMASHITA NAOHIKO [JP])<br>14 May 2002 (2002-05-14)<br>* claim 1 *<br>* figures 1-3 * | 1-18 | **TECHNICAL FIELDS SEARCHED (IPC)**<br><br>C01B<br>B01D |
| A | US 2020/398240 A1 (JIANG LILONG [CN] ET AL) 24 December 2020 (2020-12-24)<br>* abstract *<br>* claims 7,8 *<br>* figure 4 *<br>* paragraphs [0061] – [0066] * | 1-18 | |

-/--

The present search report has been drawn up for all claims

| Place of search | Date of completion of the search | Examiner |
|---|---|---|
| Munich | 8 November 2022 | Alvarez Rodriguez, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**page 1 of 2**

53

# EUROPEAN SEARCH REPORT

**Application Number**

EP 22 17 5357

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | CECHETTO VALENTINA ET AL: "Ultra-pure hydrogen production via ammonia decomposition in a catalytic membrane reactor", INTERNATIONAL JOURNAL OF HYDROGEN ENERGY, ELSEVIER, AMSTERDAM, NL, vol. 47, no. 49, 20 May 2022 (2022-05-20), pages 21220-21230, XP087084149, ISSN: 0360-3199, DOI: 10.1016/J.IJHYDENE.2022.04.240 [retrieved on 2022-05-20] * abstract * * Conclusions; page 21227 * * figure 6 * | 1-18 | |

TECHNICAL FIELDS
SEARCHED      (IPC)

The present search report has been drawn up for all claims

| Place of search | Date of completion of the search | Examiner |
|---|---|---|
| Munich | 8 November 2022 | Alvarez Rodriguez, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 17 5357

08-11-2022

| Patent document cited in search report | | Publication date | Patent family member(s) | | Publication date |
|---|---|---|---|---|---|
| WO 2021257944 | A | 14-04-2022 | ---------------------------------- | | |
| FR 1375030 | A | 16-10-1964 | NONE | | |
| US 6387157 | B1 | 14-05-2002 | DE | 60013212 T2 | 15-09-2005 |
| | | | EP | 1078677 A2 | 28-02-2001 |
| | | | JP | 2001062240 A | 13-03-2001 |
| | | | US | 6387157 B1 | 14-05-2002 |
| US 2020398240 | A1 | 24-12-2020 | CN | 110203882 A | 06-09-2019 |
| | | | JP | 6977082 B2 | 08-12-2021 |
| | | | JP | 2021001105 A | 07-01-2021 |
| | | | US | 2020398240 A1 | 24-12-2020 |

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **YUN et al.** correlations of in palladium membranes for hydrogen separation. *J. Membrane Sci.,* 2011, 28-45
- **SCHÜTH et al.** Ammonia as a possible element in an energy infrastructure: catalysts for ammonia decomposition. *Energy Eviron. Sci.,* 2012, 6278
- **LAMB et al.** Ammonia for hydrogen storage; A review of catalytic ammonia decomposition and hydrogen separation and purification. *Int. J. of hydrogen energy,* 2019, vol. 44, 3580
- **ABASHAR.** Ultra-clean hydrogen production by ammonia Decomposition. J. King Saud University- Engineering Sciences, 2018, 2-11

- **PAL N. et al.** A review on types, fabrication and support material of hydrogen separation membrane. *Materials Today: Proceedings,* 2020, vol. 28, 1386-1391
- **MURUGAN et al.** Review of purity analysis methods for performing quality assurance of fuel cell hydrogen. *Int. Journal of Hydrogen Energy,* 2015, 4219
- **S. YUN ; S. TED OYAMA.** Correlations in palladium membranes for hydrogen separation: A review. *Journal of Membrane Science,* June 2011, vol. 375 (1-2), 28-45
- **CECHETTO.** H2 production via ammonia decomposition in a catalytic membrane reactor. *Fuel Processing Technology,* 2021, 106772